(19) Europäisches Patentamt / European Patent Office / Office européen des brevets

(11) **EP 4 734 603 A1**

(12) **EUROPEAN PATENT APPLICATION**
published in accordance with Art. 153(4) EPC

(43) Date of publication:
**29.04.2026 Bulletin 2026/18**

(21) Application number: **24842399.8**

(22) Date of filing: **17.07.2024**

(51) International Patent Classification (IPC):
***H04W 28/06*** (2009.01)

(52) Cooperative Patent Classification (CPC):
**H04W 16/10; H04W 28/06; H04W 28/18; H04W 84/12**

(86) International application number:
**PCT/CN2024/106031**

(87) International publication number:
**WO 2025/016410 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.07.2023 CN 202310891346**

(71) Applicant: **Huawei Technologies Co., Ltd.**
**Shenzhen, Guangdong 518129 (CN)**

(72) Inventors:
• **HU, Mengshi**
 **Shenzhen, Guangdong 518129 (CN)**
• **YU, Jian**
 **Shenzhen, Guangdong 518129 (CN)**
• **GAN, Ming**
 **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **PPDU-BASED COMMUNICATION METHOD AND APPARATUS**

(57)    This application relates to a PPDU-based communication method and an apparatus. The method includes: generating and sending a PPDU, where an RU/MRU corresponding to the PPDU includes a plurality of RUs, modulation schemes in a plurality of MCSs corresponding to the plurality of RUs are different, and a frequency range corresponding to the RU/MRU is greater than 80 MHz. According to this application, spectrum utilization can be improved. This application is applied to a WLAN system supporting 802.11 series protocols such as a next-generation Wi-Fi protocol of 802.11ax like 802.11be, Wi-Fi 7, or EHT, and a next generation of 802.11be like Wi-Fi 8, UHR, or Wi-Fi AI. This application is further applied to a WPAN system, a sensing system, and the like supporting UWB.

A communication apparatus generates a PPDU, where an RU/MRU corresponding to the PPDU includes a plurality of RUs, the plurality of RUs correspond to different modulation schemes, MCSs corresponding to the plurality of RUs include BPSK modulation and/or DCM, and a frequency range corresponding to the RU/MRU is greater than 80 MHz — S301

The communication apparatus sends the PPDU — S302

FIG. 12

EP 4 734 603 A1

## Description

This application claims priority to Chinese Patent Application No. 202310891346.4, filed with the China National Intellectual Property Administration on July 19, 2023 and entitled "PPDU-BASED COMMUNICATION METHOD AND APPARATUS", which is incorporated herein by reference in its entirety.

## TECHNICAL FIELD

This application relates to the field of wireless communication technologies, and in particular, to a physical layer protocol data unit (physical layer protocol data unit, PPDU)-based communication method and an apparatus.

## BACKGROUND

Wireless local area networks (wireless local area network, WLAN) have been developed for many generations, including standards below 7 GHz, such as 802.11a/b/g, 802.11n, 802.11ac, 802.11ax, 802.11be, and 802.11bn; and high-frequency standards (standards at and above 45 GHz), such as 802.11ad and 802.11ay standards running near 60 GHz, and an integrated millimeter wave (Integrated mmWave) standard that may be formed subsequently. The 802.11n standard is also referred to as high throughput (high throughput, HT), the 802.11ac standard is also referred to as very high throughput (very high throughput, VHT), the 802.11ax standard is also referred to as high efficiency (high efficient, HE), the 802.11be standard is also referred to as extremely high throughput (extremely high throughput, EHT), the 802.11bn standard is also referred to as ultra high reliability (ultra high reliability, UHR), the 802.11ad standard is also referred to as directional multi-gigabit (directional multi-gigabit, DMG), and 802.11ay is also referred to as enhanced directional multi-gigabit (enhanced directional multi-gigabit, EDMG).

In the conventional technology, a segment parser (segment parser) used when an equal modulation and coding scheme (modulation and coding scheme, MCS) is used in a PPDU generation process is designed. The segment parser may divide each stream output by a stream parser (stream parser) into one or more frequency subblocks (frequency block). The equal MCS may be understood as that in an orthogonal frequency division multiplexing (orthogonal frequency division multiplex, OFDM) system, a same modulation and coding scheme is used for a resource, for example, a resource unit (resource unit, RU) or a multiple resource unit (multi-resource unit, MRU), allocated to a user.

However, spectrum utilization for a currently generated PPDU is low.

## SUMMARY

Embodiments of this application provide a PPDU-based communication method and an apparatus, to improve spectrum utilization, reduce leftover bits, and obtain a higher frequency diversity gain.

The following describes this application from different aspects. It should be understood that the following implementations and beneficial effects of different aspects may be mutually referenced.

According to a first aspect, this application provides a PPDU-based communication method. The method is applied to a transmit end, and the method includes: A communication apparatus generates and sends a PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

That modulation schemes corresponding to the plurality of RUs are different may be understood as that modulation schemes corresponding to at least two of the plurality of RUs are different. An MCS corresponding to at least one of the plurality of RUs includes binary phase shift keying (binary phase shift keying, BPSK) modulation.

During segment parsing, for an $i^{th}$ RU in the plurality of RUs, a quantity of bits output each time is determined based on a parameter $s_i$, and the parameter $s_i$ satisfies:

$$s_i = N_{BPSCS,u,i} \,.$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

For example, a process of the segment parsing includes: dividing each spatial stream output by a stream parser (stream parser) into a plurality of frequency subblocks corresponding to the RU/MRU.

In the conventional technology, if BPSK modulation is used for a part of RUs in the foregoing plurality of RUs, and another modulation scheme is used for the other part of RUs, frequency subblocks corresponding to the RUs for which BPSK modulation is used are completely occupied more quickly, resulting in uneven allocation.

Therefore, in this application, in a scenario of unequal MCSs, the parameter $s_i$ is defined to perform segment parsing, so that different modulation schemes can be used for different RUs, thereby improving spectrum utilization, reducing leftover bits, and achieving a better frequency diversity gain.

With reference to the first aspect, in a possible implementation, the RU/MRU corresponds to a plurality of frequency subblocks, and one frequency subblock corresponds to 80 MHz. A first frequency subblock in the plurality of frequency subblocks includes the $i^{th}$ RU and an $(i+1)^{th}$ RU in the plurality of RUs; and during segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

Optionally, a modulation scheme corresponding to the $i^{th}$ RU is different from a modulation scheme corresponding to the $(i+1)^{th}$ RU.

With reference to the first aspect, in a possible implementation, during segment parsing, for each of the plurality of frequency subblocks corresponding to the RU/MRU, a relationship between a quantity of bits output by a segment parser each time and a parameter $s_i$ corresponding to an RU corresponding to the frequency subblock is shown in Table 2 below, and details are not described herein.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter S3.

During segment parsing, the quantity of bits output for the first frequency subblock each time is equal to $s_1+2s_2$, and a quantity of bits output for the second frequency subblock each time is equal to $4s_3$.

With reference to the first aspect, in a possible implementation, the plurality of RUs include a first RU, and an MCS corresponding to the first RU includes BPSK modulation and dual carrier modulation (dual carrier modulation, DCM). During segment parsing, a bit is output once every two rounds for the first RU.

According to a second aspect, this application provides a PPDU-based communication method. The method is applied to a receive end, and the method includes: A communication apparatus receives a PPDU, and processes the PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

That modulation schemes corresponding to the plurality of RUs are different may be understood as that modulation schemes corresponding to at least two of the plurality of RUs are different. An MCS corresponding to at least one of the plurality of RUs includes BPSK modulation.

During segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = N_{BPSCS,u,i}.$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

It may be understood that segment combination at the receive end is an inverse process of segment parsing at the transmit end. For example, a process of the segment combination includes: obtaining a plurality of frequency subblocks corresponding to the RU/MRU, and combining bits corresponding to the plurality of frequency subblocks (on one spatial stream) into one spatial stream.

With reference to the second aspect, in a possible implementation, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment parsing, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

Optionally, a modulation scheme corresponding to the $i^{th}$ RU is different from a modulation scheme corresponding to the $(i+1)^{th}$ RU.

With reference to the second aspect, in a possible implementation, during segment combination, for each of the plurality of frequency subblocks corresponding to the RU/MRU, a quantity of bits obtained from bits corresponding to the frequency subblock each time is equal to $m_1$, and a relationship between $m_1$ and a parameter $s_i$ corresponding to an RU corresponding to the frequency subblock is shown in Table 2 below, and details are not described herein.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the 1st RU and the 2nd RU. A second frequency subblock in the plurality of frequency subblocks corresponding to the 996+484+242-tone MRU includes the 3rd RU. The 1st RU corresponds to a parameter $s_1$, the 2nd RU corresponds to a parameter $s_2$, and the 3rd RU corresponds to a parameter $s_3$. During segment combination, the quantity of bits obtained from the bits corresponding to the first frequency subblock each time is equal to $s_1+2s_2$, and a quantity of bits obtained from bits corresponding to the second frequency subblock each time is equal to $4s_3$.

With reference to the second aspect, in a possible implementation, the plurality of RUs include a first RU, and an MCS corresponding to the first RU includes BPSK modulation and DCM. During segment combination, a bit is obtained once every two rounds from bits corresponding to the first RU.

According to a third aspect, this application provides a communication apparatus. The communication apparatus is configured to perform the method according to any one of the first aspect or the possible implementations of the first aspect. The communication apparatus includes units for performing the method according to any one of the first aspect or the possible implementations of the first aspect.

According to a fourth aspect, this application provides a communication apparatus. The communication apparatus is configured to perform the method according to any one of the second aspect or the possible implementations of the second aspect. The communication apparatus includes units for performing the method according to any one of the second aspect or the possible implementations of the second aspect.

In the third aspect or the fourth aspect, the communication apparatus may include a transceiver unit and a processing unit. For detailed descriptions of the transceiver unit and the processing unit, refer to apparatus embodiments provided below. For beneficial effects of the third aspect and the fourth aspect, refer to related descriptions of the first aspect and the second aspect. Details are not described herein again.

According to a fifth aspect, this application provides a PPDU-based communication method. The method is applied to a transmit end, and the method includes: A communication apparatus generates and sends a PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

The plurality of RUs correspond to a plurality of MCSs, and modulation schemes included in at least two of the plurality of MCSs are different.

During segment parsing, for an ith RU in the plurality of RUs, a quantity of bits output each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an ith RU for a user u, and a value of $N_{BPSCS,u,i}$ is determined based on an MCS corresponding to the ith RU.

When the MCS corresponding to the ith RU includes binary phase shift keying BPSK modulation or dual carrier modulation DCM, a bit is output once every two rounds for the ith RU.

Alternatively, when the MCS corresponding to the ith RU includes BPSK modulation and DCM, a bit is output once every four rounds for the ith RU.

It may be understood that, if DCM is used for a part of RUs in the plurality of RUs, valid data subcarriers of the part of RUs are halved. As a result, the part of RUs is completely occupied more quickly than another RU, causing uneven allocation.

Therefore, in this application, an output frequency in a segment parsing process is modified, so that different modulation schemes can be used for different RUs, thereby improving spectrum utilization, reducing leftover bits caused by BPSK modulation, resolving a problem that a quantity of valid data subcarriers is halved due to DCM, and achieving a better frequency diversity gain.

With reference to the fifth aspect, in a possible implementation, an MCS corresponding to each of other RUs than the ith RU in the plurality of RUs includes neither BPSK modulation nor DCM, and a bit is output once every round for the other RUs during segment parsing.

With reference to the fifth aspect, in a possible implementation, the RU/MRU corresponds to a plurality of frequency subblocks, and a first frequency subblock in the plurality of frequency subblocks includes the ith RU and an (i+1)th RU in the plurality of RUs; and during segment parsing, a quantity of bits output for the first frequency subblock each time is determined based on the parameter $s_i$ corresponding to the ith RU and a parameter $s_{(i+1)}$ corresponding to the (i+1)th RU.

Optionally, a modulation scheme corresponding to the ith RU is different from a modulation scheme corresponding to the (i+1)th RU.

With reference to the fifth aspect, in a possible implementation, during segment parsing, for each of the plurality of frequency subblocks corresponding to the RU/MRU, a relationship between a quantity of bits output by a segment parser each time and a parameter $s_i$ corresponding to an RU corresponding to the frequency subblock is shown in Table 2 below, and details are not described herein.

According to a sixth aspect, this application provides a PPDU-based communication method. The method is applied to a receive end, and the method includes: A communication apparatus receives a PPDU, and processes the PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

The plurality of RUs correspond to a plurality of MCSs, and modulation schemes included in at least two of the plurality of MCSs are different.

During segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

When the MCS corresponding to the $i^{th}$ RU includes binary phase shift keying BPSK modulation or dual carrier modulation DCM, a bit is obtained once every two rounds from the bits corresponding to the $i^{th}$ RU.

Alternatively, when the MCS corresponding to the $i^{th}$ RU includes BPSK modulation and DCM, a bit is obtained once every four rounds from the bits corresponding to the $i^{th}$ RU.

With reference to the sixth aspect, in a possible implementation, an MCS corresponding to each of other RUs than the $i^{th}$ RU in the plurality of RUs includes neither BPSK modulation nor DCM, and a bit is obtained once every round from bits corresponding to the other RUs during segment parsing.

With reference to the sixth aspect, in a possible implementation, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

Optionally, a modulation scheme corresponding to the $i^{th}$ RU is different from a modulation scheme corresponding to the $(i+1)^{th}$ RU.

With reference to the sixth aspect, in a possible implementation, during segment combination, for each of the plurality of frequency subblocks corresponding to the RU/MRU, a quantity of bits obtained from bits corresponding to the frequency subblock each time is equal to $m_1$, and a relationship between $m_1$ and a parameter $s_i$ corresponding to an RU corresponding to the frequency subblock is shown in Table 2 below, and details are not described herein.

According to a seventh aspect, this application provides a communication apparatus. The communication apparatus is configured to perform the method according to any one of the fifth aspect or the possible implementations of the fifth aspect. The communication apparatus includes units for performing the method according to any one of the fifth aspect or the possible implementations of the fifth aspect.

According to an eighth aspect, this application provides a communication apparatus. The communication apparatus is configured to perform the method according to any one of the sixth aspect or the possible implementations of the sixth aspect. The communication apparatus includes units for performing the method according to any one of the sixth aspect or the possible implementations of the sixth aspect.

In the seventh aspect or the eighth aspect, the communication apparatus may include a transceiver unit and a processing unit. For detailed descriptions of the transceiver unit and the processing unit, refer to apparatus embodiments provided below. For beneficial effects of the seventh aspect and the eighth aspect, refer to related descriptions of the fifth aspect and the sixth aspect. Details are not described herein again.

According to a ninth aspect, this application provides a PPDU-based communication method. The method is applied to a transmit end, and the method includes: A communication apparatus generates and sends a PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

That modulation schemes corresponding to the plurality of RUs are different may be understood as that modulation schemes corresponding to at least two of the plurality of RUs are different. An MCS corresponding to at least one of the plurality of RUs includes BPSK modulation and/or DCM.

During segment parsing, for an $i^{th}$ RU in the plurality of RUs, a quantity of bits output each time is determined based on a parameter $s_i$, and the parameter $s_i$ satisfies:

$$s_i = 2N_{BPSCS,u,i}/(1+D).$$

$N_{BPSCS,u,i}$ represents a quantity of coded bits per data subcarrier for each spatial stream of an $i^{th}$ RU for a user u, a value of $N_{BPSCS,u,i}$ is determined based on an MCS corresponding to the $i^{th}$ RU, and D is 1 when the MCS corresponding to the $i^{th}$ RU includes DCM, or D is 0 when the MCS corresponding to the $i^{th}$ RU does not include DCM.

In this application, the parameter $s_i$ in a segment parsing process is modified, so that different modulation schemes can be used for different RUs, thereby improving spectrum utilization, reducing leftover bits caused by BPSK modulation, resolving a problem that a quantity of valid data subcarriers is halved due to DCM, and achieving a better frequency diversity gain.

With reference to the ninth aspect, in a possible implementation, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

Optionally, a modulation scheme corresponding to the $i^{th}$ RU is different from a modulation scheme corresponding to the $(i+1)^{th}$ RU.

With reference to the ninth aspect, in a possible implementation, during segment parsing, for each of the plurality of frequency subblocks corresponding to the RU/MRU, a relationship between a quantity of bits output by a segment parser each time and a parameter $s_i$ corresponding to an RU corresponding to the frequency subblock is shown in Table 2 below, and details are not described herein.

According to a tenth aspect, this application provides a PPDU-based communication method. The method is applied to a receive end, and the method includes: A communication apparatus receives a PPDU, and processes the PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

That modulation schemes corresponding to the plurality of RUs are different may be understood as that modulation schemes corresponding to at least two of the plurality of RUs are different. An MCS corresponding to at least one of the plurality of RUs includes BPSK modulation and/or DCM.

During segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = 2N_{BPSCS,u,i}/(1+D).$$

$N_{BPSCS,u,i}$ represents a quantity of coded bits per data subcarrier for each spatial stream of an $i^{th}$ RU for a user u, a value of $N_{BPSCS,u,i}$ is determined based on an MCS corresponding to the $i^{th}$ RU, and D is 1 when the MCS corresponding to the $i^{th}$ RU includes DCM, or D is 0 when the MCS corresponding to the $i^{th}$ RU does not include DCM.

With reference to the tenth aspect, in a possible implementation, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

Optionally, a modulation scheme corresponding to the $i^{th}$ RU is different from a modulation scheme corresponding to the $(i+1)^{th}$ RU.

With reference to the tenth aspect, in a possible implementation, during segment combination, for each of the plurality of frequency subblocks corresponding to the RU/MRU, a quantity of bits obtained from bits corresponding to the frequency subblock each time is equal to $m_1$, and a relationship between $m_1$ and a parameter $s_i$ corresponding to an RU corresponding to the frequency subblock is shown in Table 2 below, and details are not described herein.

According to an eleventh aspect, this application provides a communication apparatus. The communication apparatus is configured to perform the method according to any one of the ninth aspect or the possible implementations of the ninth aspect. The communication apparatus includes units for performing the method according to any one of the ninth aspect or the possible implementations of the ninth aspect.

According to a twelfth aspect, this application provides a communication apparatus. The communication apparatus is configured to perform the method according to any one of the tenth aspect or the possible implementations of the tenth aspect. The communication apparatus includes units for performing the method according to any one of the tenth aspect or the possible implementations of the tenth aspect.

In the eleventh aspect or the twelfth aspect, the communication apparatus may include a transceiver unit and a processing unit. For detailed descriptions of the transceiver unit and the processing unit, refer to apparatus embodiments provided below. For beneficial effects of the eleventh aspect and the twelfth aspect, refer to related descriptions of the ninth aspect and the tenth aspect. Details are not described herein again.

According to a thirteenth aspect, this application provides a PPDU-based communication method. The method is applied to a transmit end, and the method includes: A communication apparatus generates and sends a PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

The plurality of RUs correspond to a plurality of MCSs, and modulation schemes included in at least two of the plurality of MCSs are different.

During segment parsing, for an $i^{th}$ RU in the plurality of RUs, a quantity of bits output each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

In this application, the parameter $s_i$ is defined at a granularity of RU, so that different modulation schemes can be used for different RUs, and segment parsing in a scenario of unequal MCSs is supported, thereby improving spectrum utilization, and further achieving a better frequency diversity gain.

With reference to the thirteenth aspect, in a possible implementation, an MCS corresponding to each of the plurality of RUs includes neither BPSK modulation nor DCM.

With reference to the thirteenth aspect, in a possible implementation, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

Optionally, a modulation scheme corresponding to the $i^{th}$ RU is different from a modulation scheme corresponding to the $(i+1)^{th}$ RU.

With reference to the thirteenth aspect, in a possible implementation, during segment parsing, for each of the plurality of frequency subblocks corresponding to the RU/MRU, a relationship between a quantity of bits output by a segment parser each time and a parameter $s_i$ corresponding to an RU corresponding to the frequency subblock is shown in Table 2 below, and details are not described herein.

According to a fourteenth aspect, this application provides a PPDU-based communication method. The method is applied to a receive end, and the method includes: A communication apparatus receives a PPDU, and processes the PPDU. An RU/MRU corresponding to the PPDU includes a plurality of RUs, and a frequency range corresponding to the RU/MRU is greater than 80 MHz. A frequency range occupied by each of the plurality of RUs may be less than or equal to 80 MHz, or a frequency range occupied by at least one of the plurality of RUs is greater than 80 MHz.

The plurality of RUs correspond to a plurality of MCSs, and modulation schemes included in at least two of the plurality of MCSs are different.

During segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

With reference to the fourteenth aspect, in a possible implementation, an MCS corresponding to each of the plurality of RUs includes neither BPSK modulation nor DCM.

With reference to the fourteenth aspect, in a possible implementation, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter

$s_{(i+1)}$ corresponding to the $(i+1)^{th}$ RU.

Optionally, a modulation scheme corresponding to the $i^{th}$ RU is different from a modulation scheme corresponding to the $(i+1)^{th}$ RU.

With reference to the fourteenth aspect, in a possible implementation, during segment combination, for each of the plurality of frequency subblocks corresponding to the RU/MRU, a quantity of bits obtained from bits corresponding to the frequency subblock each time is equal to $m_1$, and a relationship between $m_1$ and a parameter $s_i$ corresponding to an RU corresponding to the frequency subblock is shown in Table 2 below, and details are not described herein.

According to a fifteenth aspect, this application provides a communication apparatus. The communication apparatus is configured to perform the method according to any one of the thirteenth aspect or the possible implementations of the thirteenth aspect. The communication apparatus includes units for performing the method according to any one of the thirteenth aspect or the possible implementations of the thirteenth aspect.

According to a sixteenth aspect, this application provides a communication apparatus. The communication apparatus is configured to perform the method according to any one of the fourteenth aspect or the possible implementations of the fourteenth aspect. The communication apparatus includes units for performing the method according to any one of the fourteenth aspect or the possible implementations of the fourteenth aspect.

In the fifteenth aspect or the sixteenth aspect, the communication apparatus may include a transceiver unit and a processing unit. For detailed descriptions of the transceiver unit and the processing unit, refer to apparatus embodiments provided below. For beneficial effects of the fifteenth aspect and the sixteenth aspect, refer to related descriptions of the thirteenth aspect and the fourteenth aspect. Details are not described herein again.

According to a seventeenth aspect, this application provides a PPDU-based communication method. The method is applied to a transmit end, and the method includes: A communication apparatus generates and sends a PPDU. The PPDU corresponds to a plurality of spatial streams, and modulation schemes corresponding to at least two of the plurality of spatial streams are different.

An MCS corresponding to at least one of the plurality of spatial streams includes BPSK modulation.

During stream parsing, for an $i^{th}$ spatial stream in the plurality of spatial streams, a quantity of bits output each time is equal to a parameter $s_i$, and the parameter $s_i$ satisfies:

$$s_i = N_{BPSCS,u,i}.$$

$N_{BPSCS,u,i}$ represents a quantity of coded bits per data subcarrier for an $i^{th}$ spatial stream of a user u, and a value of $N_{BPSCS,u,i}$ is determined based on an MCS corresponding to the $i^{th}$ spatial stream.

For example, the value of $N_{BPSCS,u,i}$ is 1 when the MCS corresponding to the $i^{th}$ spatial stream includes BPSK modulation; the value of $N_{BPSCS,u,i}$ is 2 when the MCS corresponding to the $i^{th}$ spatial stream includes quadrature phase shift keying QPSK modulation; the value of $N_{BPSCS,u,i}$ is 4 when the MCS corresponding to the $i^{th}$ spatial stream includes 16QAM; or the value of $N_{BPSCS,u,i}$ is 6 when the MCS corresponding to the $i^{th}$ spatial stream includes 64QAM.

For example, a process of the stream parsing includes: dividing a string of data bit streams output by an encoder into a plurality of spatial streams.

In this application, the parameter $s_i$ is redefined in the stream parsing process, so that different modulation schemes can be used for different spatial streams, to support stream parsing in a scenario of unequal MCSs, improve spectrum utilization, and conform to an even allocation principle, thereby achieving a better frequency diversity gain.

With reference to the seventeenth aspect, in a possible implementation, the plurality of spatial streams include a first spatial stream, and an MCS corresponding to the first spatial stream includes BPSK modulation and DCM; and during stream parsing, a bit is output once every two rounds for the first spatial stream.

According to an eighteenth aspect, this application provides a PPDU-based communication method. The method is applied to a receive end, and the method includes: A communication apparatus receives and processes a PPDU. The PPDU corresponds to a plurality of spatial streams, and modulation schemes corresponding to at least two of the plurality of spatial streams are different.

MCSs corresponding to the plurality of spatial streams include BPSK modulation. During stream combination, for an $i^{th}$ spatial stream in the plurality of spatial streams, a quantity of bits obtained from the $i^{th}$ spatial stream each time is equal to a parameter $s_i$, and the parameter $s_i$ satisfies:

$$s_i = N_{BPSCS,u,i}.$$

$N_{BPSCS,u,i}$ represents a quantity of coded bits per data subcarrier for an $i^{th}$ spatial stream of a user u, and a value of $N_{BPSCS,u,i}$ is determined based on an MCS corresponding to the $i^{th}$ spatial stream.

For example, the value of $N_{BPSCS,u,i}$ is 1 when the MCS corresponding to the $i^{th}$ spatial stream includes BPSK modulation; the value of $N_{BPSCS,u,i}$ is 2 when the MCS corresponding to the $i^{th}$ spatial stream includes quadrature phase shift keying QPSK modulation; the value of $N_{BPSCS,u,i}$ is 4 when the MCS corresponding to the $i^{th}$ spatial stream includes 16QAM; or the value of $N_{BPSCS,u,i}$ is 6 when the MCS corresponding to the $i^{th}$ spatial stream includes 64QAM.

For example, stream combination at the receive end is an inverse process of stream parsing at the transmit end. For example, a process of the stream combination includes: combining the plurality of spatial streams into a string of data bit streams.

With reference to the eighteenth aspect, in a possible implementation, the plurality of spatial streams include a first spatial stream, and an MCS corresponding to the first spatial stream includes BPSK modulation and DCM; and during stream combination, a bit is obtained once every two rounds from the first spatial stream.

According to a nineteenth aspect, this application provides a communication apparatus. The communication apparatus is configured to perform the method according to any one of the seventeenth aspect or the possible implementations of the seventeenth aspect. The communication apparatus includes units for performing the method according to any one of the seventeenth aspect or the possible implementations of the seventeenth aspect.

According to a twentieth aspect, this application provides a communication apparatus. The communication apparatus is configured to perform the method according to any one of the eighteenth aspect or the possible implementations of the eighteenth aspect. The communication apparatus includes units for performing the method according to any one of the eighteenth aspect or the possible implementations of the eighteenth aspect.

In the nineteenth aspect or the twentieth aspect, the communication apparatus may include a transceiver unit and a processing unit. For detailed descriptions of the transceiver unit and the processing unit, refer to apparatus embodiments provided below. For beneficial effects of the nineteenth aspect and the twentieth aspect, refer to related descriptions of the seventeenth aspect and the eighteenth aspect. Details are not described herein again.

According to a twenty-first aspect, this application provides a PPDU-based communication method. The method is applied to a transmit end, and the method includes: A communication apparatus generates and sends a PPDU. The PPDU corresponds to a plurality of spatial streams, and modulation schemes included in at least two of a plurality of MCSs corresponding to the plurality of spatial streams are different.

During stream parsing, for an $i^{th}$ spatial stream in the plurality of spatial streams, a quantity of bits output each time is equal to a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for an $i^{th}$ spatial stream of a user u, and a value of $N_{BPSCS,u,i}$ is determined based on an MCS corresponding to the $i^{th}$ spatial stream.

When the MCS corresponding to the $i^{th}$ spatial stream includes BPSK modulation or DCM, a bit is output once every two rounds for the $i^{th}$ spatial stream.

Alternatively, when the MCS corresponding to the $i^{th}$ spatial stream includes BPSK modulation and DCM, a bit is output once every four rounds for the $i^{th}$ spatial stream.

For example, the value of $N_{BPSCS,u,i}$ is 1 when the MCS corresponding to the $i^{th}$ spatial stream includes BPSK modulation; the value of $N_{BPSCS,u,i}$ is 2 when the MCS corresponding to the $i^{th}$ spatial stream includes quadrature phase shift keying QPSK modulation; the value of $N_{BPSCS,u,i}$ is 4 when the MCS corresponding to the $i^{th}$ spatial stream includes 16QAM; or the value of $N_{BPSCS,u,i}$ is 6 when the MCS corresponding to the $i^{th}$ spatial stream includes 64QAM.

In this application, an output frequency is modified in a stream parsing process, so that different modulation schemes can be used for different spatial streams, to support stream parsing in a scenario of unequal MCSs, improve spectrum utilization, and conform to an even allocation principle, thereby achieving a better frequency diversity gain.

With reference to the twenty-first aspect, in a possible implementation, an MCS corresponding to each of spatial streams other than the $i^{th}$ spatial stream in the plurality of spatial streams includes neither BPSK modulation nor DCM, and a bit is output once every round for the other spatial streams during stream parsing.

According to a twenty-second aspect, this application provides a PPDU-based communication method. The method is applied to a receive end, and the method includes: A communication apparatus receives and processes a PPDU. The PPDU corresponds to a plurality of spatial streams, and modulation schemes included in at least two of a plurality of MCSs corresponding to the plurality of spatial streams are different.

During stream combination, for an $i^{th}$ spatial stream in the plurality of spatial streams, a quantity of bits obtained from the $i^{th}$ spatial stream each time is equal to a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for an $i^{th}$ spatial stream of a user u, and a value of

$N_{BPSCS,u,i}$ is determined based on an MCS corresponding to the $i^{th}$ spatial stream.

When the MCS corresponding to the $i^{th}$ spatial stream includes binary phase shift keying BPSK modulation or dual carrier modulation DCM, a bit is obtained once every two rounds from the $i^{th}$ spatial stream.

Alternatively, when the MCS corresponding to the $i^{th}$ spatial stream includes BPSK modulation and DCM, a bit is obtained once every four rounds from the $i^{th}$ spatial stream.

For example, the value of $N_{BPSCS,u,i}$ is 1 when the MCS corresponding to the $i^{th}$ spatial stream includes BPSK modulation; the value of $N_{BPSCS,u,i}$ is 2 when the MCS corresponding to the $i^{th}$ spatial stream includes quadrature phase shift keying QPSK modulation; the value of $N_{BPSCS,u,i}$ is 4 when the MCS corresponding to the $i^{th}$ spatial stream includes 16QAM; or the value of $N_{BPSCS,u,i}$ is 6 when the MCS corresponding to the $i^{th}$ spatial stream includes 64QAM.

With reference to the twenty-second aspect, in a possible implementation, an MCS corresponding to each of spatial streams other than the $i^{th}$ spatial stream in the plurality of spatial streams includes neither BPSK modulation nor DCM, and a bit is obtained once every round from the other spatial streams during stream combination.

According to a twenty-third aspect, this application provides a communication apparatus. The communication apparatus is configured to perform the method according to any one of the twenty-first aspect or the possible implementations of the twenty-first aspect. The communication apparatus includes units for performing the method according to any one of the twenty-first aspect or the possible implementations of the twenty-first aspect.

According to a twenty-fourth aspect, this application provides a communication apparatus. The communication apparatus is configured to perform the method according to any one of the twenty-second aspect or the possible implementations of the twenty-second aspect. The communication apparatus includes units for performing the method according to any one of the twenty-second aspect or the possible implementations of the twenty-second aspect.

In the twenty-third aspect or the twenty-fourth aspect, the communication apparatus may include a transceiver unit and a processing unit. For detailed descriptions of the transceiver unit and the processing unit, refer to apparatus embodiments provided below. For beneficial effects of the twenty-third aspect and the twenty-fourth aspect, refer to related descriptions of the twenty-first aspect and the twenty-second aspect. Details are not described herein again.

According to a twenty-fifth aspect, this application provides a PPDU-based communication method. The method is applied to a transmit end, and the method includes: A communication apparatus generates and sends a PPDU. The PPDU corresponds to a plurality of spatial streams, and modulation schemes included in at least two of a plurality of MCSs corresponding to the plurality of spatial streams are different.

MCSs corresponding to the plurality of spatial streams include BPSK modulation and/or DCM. During stream parsing, for an $i^{th}$ spatial stream in the plurality of spatial streams, a quantity of bits output each time is equal to a parameter $s_i$, and the parameter $s_i$ satisfies:

$$s_i = 2N_{BPSCS,u,i}/(1+D).$$

$N_{BPSCS,u,i}$ represents a quantity of coded bits per data subcarrier for an $i^{th}$ spatial stream of a user u, a value of $N_{BPSCS,u,i}$ is determined based on an MCS corresponding to the $i^{th}$ spatial stream, and D is 1 when the MCS corresponding to the $i^{th}$ spatial stream includes DCM, or D is 0 when the MCS corresponding to the $i^{th}$ spatial stream does not include DCM.

For example, the value of $N_{BPSCS,u,i}$ is 1 when the MCS corresponding to the $i^{th}$ spatial stream includes BPSK modulation; the value of $N_{BPSCS,u,i}$ is 2 when the MCS corresponding to the $i^{th}$ spatial stream includes quadrature phase shift keying QPSK modulation; the value of $N_{BPSCS,u,i}$ is 4 when the MCS corresponding to the $i^{th}$ spatial stream includes 16QAM; or the value of $N_{BPSCS,u,i}$ is 6 when the MCS corresponding to the $i^{th}$ spatial stream includes 64QAM.

In this application, the parameter $s_i$ is redefined in the stream parsing process, so that different modulation schemes can be used for different spatial streams, to support stream parsing in a scenario of unequal MCSs, improve spectrum utilization, and conform to an even allocation principle, thereby achieving a better frequency diversity gain.

According to a twenty-sixth aspect, this application provides a PPDU-based communication method. The method is applied to a receive end, and the method includes: A communication apparatus receives and processes a PPDU. The PPDU corresponds to a plurality of spatial streams, and modulation schemes included in at least two of a plurality of MCSs corresponding to the plurality of spatial streams are different.

MCSs corresponding to the plurality of spatial streams include BPSK modulation and/or DCM. During stream combination, for an $i^{th}$ spatial stream in the plurality of spatial streams, a quantity of bits obtained from the $i^{th}$ spatial stream each time is equal to a parameter $s_i$, and the parameter $s_i$ satisfies:

$$s_i = 2N_{BPSCS,u,i}/(1+D).$$

$N_{BPSCS,u,i}$ represents a quantity of coded bits per data subcarrier for an $i^{th}$ spatial stream of a user u, a value of $N_{BPSCS,u,i}$ is determined based on an MCS corresponding to the $i^{th}$ spatial stream, and D is 1 when the MCS corresponding to the $i^{th}$ spatial stream includes DCM, or D is 0 when the MCS corresponding to the $i^{th}$ spatial stream does not include DCM.

For example, the value of $N_{BPSCS,u,i}$ is 1 when the MCS corresponding to the $i^{th}$ spatial stream includes BPSK modulation; the value of $N_{BPSCS,u,i}$ is 2 when the MCS corresponding to the $i^{th}$ spatial stream includes quadrature phase shift keying QPSK modulation; the value of $N_{BPSCS,u,i}$ is 4 when the MCS corresponding to the $i^{th}$ spatial stream includes 16QAM; or the value of $N_{BPSCS,u,i}$ is 6 when the MCS corresponding to the $i^{th}$ spatial stream includes 64QAM.

According to a twenty-seventh aspect, this application provides a communication apparatus. The communication apparatus is configured to perform the method according to any one of the twenty-fifth aspect or the possible implementations of the twenty-fifth aspect. The communication apparatus includes units for performing the method according to any one of the twenty-fifth aspect or the possible implementations of the twenty-fifth aspect.

According to a twenty-eighth aspect, this application provides a communication apparatus. The communication apparatus is configured to perform the method according to any one of the twenty-sixth aspect or the possible implementations of the twenty-sixth aspect. The communication apparatus includes units for performing the method according to any one of the twenty-sixth aspect or the possible implementations of the twenty-sixth aspect.

In the twenty-seventh aspect or the twenty-eighth aspect, the communication apparatus may include a transceiver unit and a processing unit. For detailed descriptions of the transceiver unit and the processing unit, refer to apparatus embodiments provided below. For beneficial effects of the twenty-seventh aspect and the twenty-eighth aspect, refer to related descriptions of the twenty-fifth aspect and the twenty-sixth aspect. Details are not described herein again.

According to a twenty-ninth aspect, this application provides a communication apparatus. The communication apparatus includes a processor, configured to perform the method according to the first aspect, the second aspect, the fifth aspect, the sixth aspect, the ninth aspect, the tenth aspect, the thirteenth aspect, the fourteenth aspect, the seventeenth aspect, the eighteenth aspect, the twenty-first aspect, the twenty-second aspect, the twenty-fifth aspect, the twenty-sixth aspect, or any possible implementation of any one of the aspects. Alternatively, the processor is configured to execute a program stored in a memory. When the program is executed, the method according to the first aspect, the second aspect, the fifth aspect, the sixth aspect, the ninth aspect, the tenth aspect, the thirteenth aspect, the fourteenth aspect, or any possible implementation of any one of the aspects is performed.

With reference to the twenty-ninth aspect, in a possible implementation, the memory is located outside the communication apparatus.

With reference to the twenty-ninth aspect, in a possible implementation, the memory is located inside the communication apparatus.

In this application, the processor and the memory may alternatively be integrated into one component. In other words, the processor and the memory may alternatively be integrated together.

With reference to the twenty-ninth aspect, in a possible implementation, the communication apparatus further includes a transceiver. The transceiver is configured to send or receive a PPDU.

According to a thirtieth aspect, this application provides a communication apparatus. The communication apparatus may be implemented in a form of a chip, or may be in a form of a device. This is not limited in this application. The communication apparatus includes a logic circuit and an interface, and the logic circuit is coupled to the interface. The interface is configured to input and/or output a PPDU, and the logic circuit is configured to perform the method according to the first aspect, the second aspect, the fifth aspect, the sixth aspect, the ninth aspect, the tenth aspect, the thirteenth aspect, the fourteenth aspect, the seventeenth aspect, the eighteenth aspect, the twenty-first aspect, the twenty-second aspect, the twenty-fifth aspect, the twenty-sixth aspect, or any possible implementation of any one of the aspects.

According to a thirty-first aspect, this application provides a readable storage medium. The readable storage medium stores program instructions, and when the program instructions are run on a communication apparatus, the communication apparatus is enabled to perform the method according to the first aspect, the second aspect, the fifth aspect, the sixth aspect, the ninth aspect, the tenth aspect, the thirteenth aspect, the fourteenth aspect, the seventeenth aspect, the eighteenth aspect, the twenty-first aspect, the twenty-second aspect, the twenty-fifth aspect, the twenty-sixth aspect, or any possible implementation of any one of the aspects.

According to a thirty-second aspect, this application provides a computer program product. The computer program product includes a computer program or computer code, and when the computer program or computer code is run on a computer, the method according to the first aspect, the second aspect, the fifth aspect, the sixth aspect, the ninth aspect, the tenth aspect, the thirteenth aspect, the fourteenth aspect, the seventeenth aspect, the eighteenth aspect, the twenty-first aspect, the twenty-second aspect, the twenty-fifth aspect, the twenty-sixth aspect, or any possible implementation of any one of the aspects is performed.

According to a thirty-third aspect, this application provides a computer program. When the computer program is run on a computer, the method according to the first aspect, the second aspect, the fifth aspect, the sixth aspect, the ninth aspect, the tenth aspect, the thirteenth aspect, the fourteenth aspect, the seventeenth aspect, the eighteenth aspect, the twenty-first aspect, the twenty-second aspect, the twenty-fifth aspect, the twenty-sixth aspect, or any possible implementation of any one of the aspects is performed.

According to a thirty-fourth aspect, this application provides a wireless communication system. The wireless communication system includes: a communication apparatus configured to perform the method according to the first aspect, the fifth aspect, the ninth aspect, the thirteenth aspect, the seventeenth aspect, the twenty-first aspect, the twenty-fifth aspect, or any possible implementation of any one of the aspects, and a communication apparatus configured to perform the method according to the second aspect, the sixth aspect, the tenth aspect, the fourteenth aspect, the eighteenth aspect, the twenty-second aspect, the twenty-sixth aspect, or any possible implementation of any one of the aspects.

For technical effects achieved in the foregoing aspects, refer to each other or refer to beneficial effects in method embodiments shown below. Details are not repeated herein.

**BRIEF DESCRIPTION OF DRAWINGS**

FIG. 1 is a diagram of an architecture of a communication system according to an embodiment of this application;

FIG. 2a is a diagram of a structure of an access point according to an embodiment of this application;

FIG. 2b is a diagram of a structure of a station according to an embodiment of this application;

FIG. 3 is a diagram of a tone plan and an RU plan at 20 MHz according to an embodiment of this application;

FIG. 4 is a diagram of a tone plan and an RU plan at 40 MHz according to an embodiment of this application;

FIG. 5 is a diagram of a tone plan and an RU plan at 80 MHz according to an embodiment of this application;

FIG. 6 is a diagram of a transmitter module according to an embodiment of this application;

FIG. 7a is a diagram of input and output of a segment parser when an RU size is less than or equal to 996 subcarriers according to an embodiment of this application;

FIG. 7b is a diagram of input and output of a segment parser when an RU size is greater than 996 subcarriers according to an embodiment of this application;

FIG. 8 is a diagram of input and output of a segment parser when a 996+484-tone MRU is used according to an embodiment of this application;

FIG. 9 is a first schematic flowchart of a PPDU-based communication method according to an embodiment of this application;

FIG. 10 is a second schematic flowchart of a PPDU-based communication method according to an embodiment of this application;

FIG. 11 is a diagram of processing a PPDU by a receive end according to an embodiment of this application;

FIG. 12 is a third schematic flowchart of a PPDU-based communication method according to an embodiment of this application;

FIG. 13a is a diagram of input and output of a segment parser in a same modulation scheme according to an embodiment of this application;

FIG. 13b is a diagram of input and output of a segment parser in different modulation schemes according to an embodiment of this application;

FIG. 14 is a diagram of input and output of a segment parser when different modulation schemes are used for a 996+484-tone MRU according to an embodiment of this application;

FIG. 15 is another diagram of input and output of a segment parser when different modulation schemes are used for a 996+484-tone MRU according to an embodiment of this application;

FIG. 16 is a fourth schematic flowchart of a PPDU-based communication method according to an embodiment of this application;

FIG. 17 is a fifth schematic flowchart of a PPDU-based communication method according to an embodiment of this application;

FIG. 18 is a sixth schematic flowchart of a PPDU-based communication method according to an embodiment of this application;

FIG. 19 is a diagram of a structure of a communication apparatus according to an embodiment of this application;

FIG. 20 is a diagram of another structure of a communication apparatus according to an embodiment of this application; and

FIG. 21 is a diagram of another structure of a communication apparatus according to an embodiment of this application.

**DESCRIPTION OF EMBODIMENTS**

The following clearly and completely describes the technical solutions in embodiments of this application with reference to the accompanying drawings in embodiments of this application.

In the descriptions of this application, words such as "first" and "second" are merely used to distinguish between different objects, and do not limit quantities and execution sequences. In addition, the words such as "first" and "second" do not indicate a definite difference. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

In descriptions of this application, unless otherwise specified, "/" means "or". For example, A/B may mean A or B. The term "and/or" in this specification is merely an association relationship of associated objects, and indicates that three relationships may exist. For example, A and/or B may indicate the following three cases: Only A exists, both A and B exist, and only B exists. In addition, "at least one (item)" means one or more, "a plurality of" means two or more, and "at least two (items)" means two or three or more. "One or more of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c. Herein, a, b, and c may be singular or plural.

In descriptions of this application, words such as "example" or "for example" are used to represent giving examples, illustrations, or descriptions. Any embodiment or design scheme described by "example", "such as", or "for example" in this application should not be construed as being more preferred or having more advantages than another embodiment or design scheme. Exactly, use of the word "example", "such as", "for example", or the like is intended to present a related concept in a specific manner.

It may be understood that, in descriptions of this application, both "when" and "if" mean that an apparatus performs corresponding processing in an objective case, are not intended to limit time, and do not require a determining action during implementation of the apparatus, or do not mean that there is another limitation.

"Simultaneously" or "parallel" in this application may be understood as being at a same time point, may be understood as being in a period of time, or may be understood as being in a same periodicity, and may be specifically understood with reference to a context.

In this application, unless otherwise specified, an element indicated in a singular form is intended to indicate "one or more", but does not indicate "one and only one".

It may be understood that in embodiments of this application, "B corresponding to A" or a similar expression thereof indicates that B is associated with A, or B may be determined based on A. However, it should be further understood that determining B based on A does not mean that B is determined based on only A. B may alternatively be determined based on A and/or other information.

The technical solutions provided in this application are applicable to a WLAN system. For example, the method provided in this application is applicable to the 802.11be protocol, a next generation of the 802.11be protocol, for example, the 802.11bn protocol, UHR, and Wi-Fi AI, or a WLAN protocol of a future generation. In addition, the technical solutions provided in this application may be further applied to an ultra-wideband (ultra-wideband, UWB)-based wireless personal area network (wireless personal area network, WPAN) system, sensing (sensing) system, or the like. The technical solutions provided in this application may be further applied to the following communication system, for example, an internet of things (internet of things, IoT) system, vehicle to X (vehicle to X, V2X), a narrowband internet of things (narrowband internet of things, NB-IoT) system, a device used in an internet of vehicles, an internet of things node, a sensor, or the like in an internet of things (IoT), a smart camera, a smart remote control, a smart water meter, or a smart electricity meter in a smart household, a sensor in a smart city, and the like; or is further applicable to a long term evolution (long term evolution, LTE) system, a 5th-generation (5th-generation, 5G) communication system, a new communication system emerging in future communication development, and the like.

Although this application is mainly described by using a network in which 802.11 is deployed as an example, a person skilled in the art easily understands that various aspects of this application may be extended to other networks that use various standards or protocols, for example, a high performance radio LAN (high performance radio LAN, HIPERLAN) (which is a wireless standard that is similar to the 802.11 standard, and is mainly used in Europe), a wide area network (wide area network, WAN), a wireless local area network (WLAN), a personal area network (personal area network, PAN), or another known or later developed network.

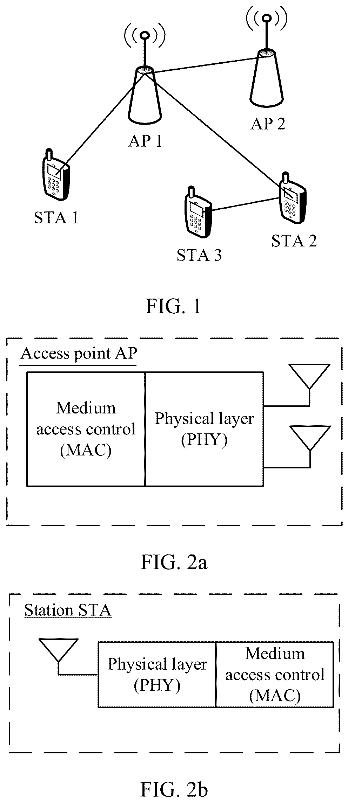

The technical solutions provided in this application are applicable to a scenario in which one AP communicates with one or more STAs, a scenario in which an AP communicates with another AP, and a scenario in which a STA communicates with another STA. Refer to FIG. 1. FIG. 1 is a diagram of an architecture of a communication system according to an embodiment of this application. As shown in FIG. 1, the communication system may include one or more APs (for example, an AP 1 and an AP 2 in FIG. 1) and one or more STAs (for example, a STA 1, a STA 2, and a STA 3 in FIG. 1). Both the AP and the STA support a WLAN communication protocol. The communication protocol may include 802.11bn (or referred to as a Wi-Fi 8 or UHR protocol), and may further include protocols such as 802.11be (or referred to as a Wi-Fi 7 or EHT protocol), 802.11ax, and 802.11ac. Certainly, with continuous evolution and development of communication technologies, the communication protocol may further include a next generation protocol of 802.11bn, and the like. A WLAN is used as an example, an apparatus for implementing the method in this application may be an AP or a STA in the WLAN, or a chip or a processing system installed in the AP or the STA.

It may be understood that, in FIG. 1, an example in which the STA is a mobile phone and the AP is a router is used. This does not mean that types of the AP and the STA in embodiments of this application are limited. In addition, FIG. 1 shows only two APs and three STAs as an example. However, there may be more or fewer APs or STAs in the communication system. This is not limited in embodiments of this application.

For example, an access point (for example, any AP in FIG. 1) is an apparatus having a wireless communication function, supports communication according to a WLAN protocol, has a function of communicating with another device (for example, a station or another access point) in a WLAN network, and certainly may further have a function of communicating with another device. In a WLAN system, the access point may be referred to as an access point station (access point station, AP STA). The apparatus having the wireless communication function may be an entire device, or may be a chip or processing system installed in the entire device. A device in which the chip or the processing system is installed may implement the methods and the functions in embodiments of this application under control of the chip or the processing system. The AP in embodiments of this application is an apparatus that provides a service for a STA, and may support the 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the methods and the functions in embodiments of this application.

For example, a station (for example, any STA in FIG. 1) is an apparatus having a wireless communication function, supports communication according to a WLAN protocol, and has a capability of communicating with another station or an access point in a WLAN network. In the WLAN system, the station may be referred to as a non-access point station (non-access point station, non-AP STA). For example, the STA is any user communication device that allows a user to communicate with an AP and further communicate with the WLAN. The apparatus having the wireless communication function may be an entire device, or may be a chip or processing system installed in the entire device. A device in which the chip or the processing system is installed may implement the methods and the functions in embodiments of this application under control of the chip or the processing system. For example, the STA may be user equipment that can be connected to the internet, for example, a tablet computer, a desktop computer, a laptop computer, a notebook computer, an ultra-mobile personal computer (Ultra-mobile personal computer, UMPC), a handheld computer, a netbook computer, a personal digital assistant (personal digital assistant, PDA), or a mobile phone. Alternatively, the STA may be an internet of things node in an internet of things, an in-vehicle communication apparatus in an internet of vehicles, an entertainment device, a game device or system, a global positioning system device, or the like. Alternatively, the STA may be a chip and a processing system in the foregoing terminals.

The WLAN system can provide high-rate and low-latency transmission. With continuous evolution of WLAN application scenarios, the WLAN system is to be applied to more scenarios or industries, for example, the Internet of Things industry, the Internet of Vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicle device in the internet of vehicle, infrastructure (for example, a vending machine, a self-service navigation station of a supermarket, a self-service cash register device, or a self-service ordering machine) in daily life scenarios, a device in a large sports and music venue, or the like. Specific forms of the station and the access point are not limited in embodiments of this application, and are merely examples for description herein.

It should be understood that the 802.11 standard focuses on a physical layer (physical layer, PHY) and a medium access control (medium access control, MAC) layer. In an example, refer to FIG. 2a. FIG. 2a is a diagram of a structure of an access point according to an embodiment of this application. The AP may be a multi-antenna/multi-radio frequency, or may be a single-antenna/single-radio frequency. The antenna/radio frequency is used to send/receive a physical layer protocol data unit (physical layer protocol data unit, PPDU). In an implementation, an antenna part or a radio frequency part of the AP may be separated from a main body part of the AP, that is, may be remotely arranged. In FIG. 2a, the AP may include a physical layer processing circuit and a medium access control processing circuit. The physical layer processing circuit may be configured to process a physical layer signal, and the MAC layer processing circuit may be configured to process a MAC layer signal. In another example, refer to FIG. 2b. FIG. 2b is a diagram of a structure of a station according to an embodiment of this application. FIG. 2b is a diagram of a structure of a single-antenna/single-radio frequency STA. In an actual scenario, the STA may alternatively be multi-antenna/multi-radio frequency, and may be a device with at least two antennas. The antenna/radio frequency is used to send/receive a data packet. In an implementation, an antenna part or a radio frequency part of the STA may be separated from a main body part of the STA, that is, may be remotely arranged. In FIG. 2b, the STA may include a PHY processing circuit and a MAC processing circuit. The physical layer processing circuit may be configured to process a physical layer signal, and the MAC layer processing circuit may be configured to process a MAC layer signal.

In some embodiments, in the communication system shown in FIG. 1, the AP may be replaced with an access point multi-link device (AP multi-link device, AP MLD), and the STA may be replaced with a non-access point multi-link device (non-AP multi-link device, non-AP MLD). That is, the technical solutions provided in embodiments of this application may also be applied to a scenario in which a multi-link device (multi-link device, MLD) communicates with a multi-link device. The multi-link device is a wireless communication device that supports parallel transmission on a plurality of links. Compared with a device that supports only single-link transmission, the multi-link device has higher transmission efficiency and a higher throughput. The multi-link device includes one or more affiliated stations STAs (affiliated STA). The affiliated STA is a logical station and may work on one link. The affiliated station may be an access point (access point, AP) or a non-access point station (non-access point station, non-AP STA). A multi-link device whose affiliated station is an AP may be referred to as an AP MLD, and a multi-link device whose affiliated station is a non-AP STA may be referred to as a non-AP MLD.

In a possible implementation, the multi-link device (which may be a non-AP MLD or an AP MLD herein) in embodiments of this application is an apparatus having a wireless communication function. The apparatus may be an entire device, or may be a chip, a processing system, or the like installed in the entire device. The device in which the chip or processing system is installed may implement methods and functions in embodiments of this application under control of the chip or processing system.

The following briefly describes some terms or nouns in this application.

1. Resource unit (RU) and multiple resource unit (MRU) in 802.11be

A concept of the resource unit (resource unit, RU) is introduced in 802.11ax. For ease of description, this application mainly describes a tone plan (Tone Plan) currently defined in the 802.11be standard. The following separately describes tone plans and RU plans at different bandwidths.

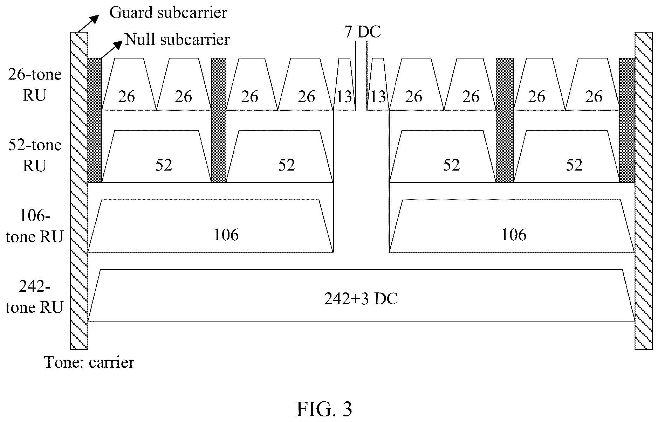

Refer to FIG. 3. FIG. 3 is a diagram of a tone plan and an RU plan at 20 MHz according to an embodiment of this application. As shown in FIG. 3, when a bandwidth is 20 MHz, the entire bandwidth (that is, 20 MHz) may include one 242-tone RU, or include various combinations of a 26-tone RU, a 52-tone RU, and a 106-tone RU. Each RU includes a data subcarrier and a pilot subcarrier, the data subcarrier is used to carry data information, and the pilot subcarrier is used to estimate a phase offset and/or a frequency offset. In addition to the RU, the bandwidth of 20 MHz further includes some guard (guard) subcarriers, null subcarriers, and/or direct current (direct current, DC) subcarriers.

It may be understood that the 242-tone RU may be understood as an RU including 242 subcarriers. Similarly, the 26-tone RU may be understood as an RU including 26 subcarriers, the 52-tone RU may be understood as an RU including 52 subcarriers, and the 106-tone RU may be understood as an RU including 106 subcarriers.

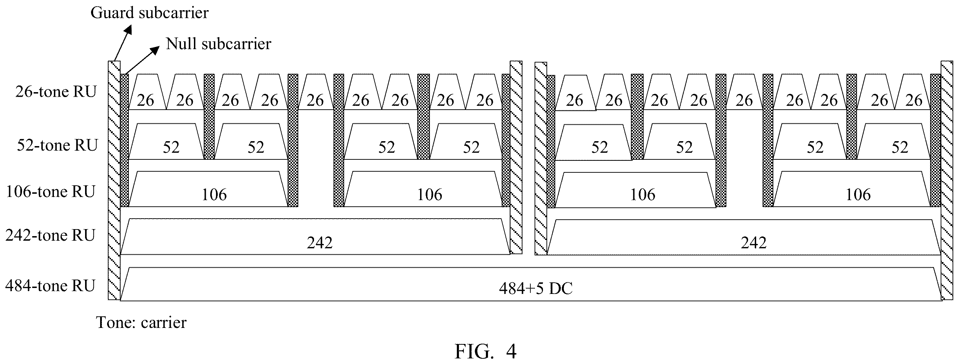

Refer to FIG. 4. FIG. 4 is a diagram of a tone plan and an RU plan at 40 MHz according to an embodiment of this application. As shown in FIG. 4, when a bandwidth is 40 MHz, the entire bandwidth (that is, 40 MHz) may include one 484-tone RU, or include various combinations of a 26-tone RU, a 52-tone RU, a 106-tone RU, and a 242-tone RU. The 484-tone RU may be understood as an RU including 484 subcarriers.

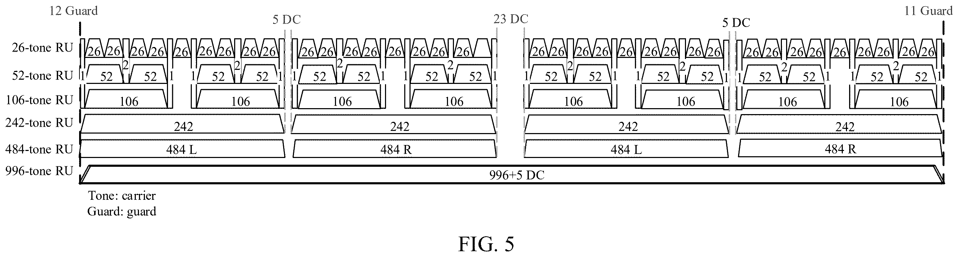

Refer to FIG. 5. FIG. 5 is a diagram of a tone plan and an RU plan at 80 MHz according to an embodiment of this application. As shown in FIG. 5, when a bandwidth is 80 MHz, the entire bandwidth (that is, 80 MHz) may include one 996-tone RU, or include various combinations of a 26-tone RU, a 52-tone RU, a 106-tone RU, a 242-tone RU, and a 484-tone RU. As shown in FIG. 5, 484 L in FIG. 5 represents a left half part of a 484-tone RU (that is, a subcarrier range [-500:-17] or a subcarrier range [17:500]), 484 R in FIG. 5 represents a right half part of the 484-tone RU, and 484 L and 484 R each include 242 subcarriers. This is another schematic manner of 484+5 DC. The 996-tone RU may be understood as an RU including 996 subcarriers. The "left" and "right" herein mean only a relative relationship relative to a central location in frequency domain. A 484-tone RU [-500:-17] is used as an example. On an actual frequency domain resource, "484 L" is a low frequency part relative to a frequency domain center of the 484-tone RU, that is, [-500:-259], and "484 R" is a high frequency part relative to the frequency domain center of the 484-tone RU, that is, [-258:-17]. Similarly, a 484-tone RU [17:500] is used as an example. "484 L" is [17:258], and "484 R" is [259:500].

When a bandwidth is 160 MHz, the entire bandwidth (that is, 160 MHz) may be understood as a replication of two 80 MHz tone plans. The entire bandwidth (that is, 160 MHz) may include two 996-tone RUs or various combinations of a 26-tone RU, a 52-tone RU, a 106-tone RU, a 242-tone RU, a 484-tone RU, and a 996-tone RU. When a bandwidth is 320 MHz, the entire bandwidth (that is, 320 MHz) may be understood as a replication of four 80 MHz tone plans. Details are not described herein again.

In the foregoing tone plans shown in FIG. 3 to FIG. 5, a 242-tone RU is used as a unit. It is assumed that a leftmost RU in FIG. 3 to FIG. 5 is at a lowest frequency, and a rightmost RU in FIG. 3 to FIG. 5 is at a highest frequency. From left to right, 242-tone RUs may be numbered as follows: 1st (1st), 2nd (2nd), ..., and 16th (16th). It may be understood that, using a bandwidth of 320 MHz as an example, a data (Data) field in a radio frame occupies at most 16 242-tone RUs. That is, in the data field, at most 16 242-tone RUs are in one-to-one correspondence with 16 20-MHz channels in ascending order of frequencies.

In terms of bandwidth, a 26-tone RU approximately corresponds to 2 MHz, a 52-tone RU approximately corresponds to 4 MHz, a 106-tone RU approximately corresponds to 8 MHz, and a 242-tone RU approximately corresponds to 20 MHz. A bandwidth corresponding to an RU of another size may be correspondingly deduced through addition or multiplication. Details are not described herein again.

It may be understood that, because the 802.11be standard allows a plurality of RUs to be allocated to one STA, that is, a plurality of RUs are combined and allocated to one STA, the 802.11be standard supports a multiple resource unit (multiple RU, MRU). In other words, in the 802.11be standard, in addition to the RUs mentioned above, some MRUs are further introduced. For example, one 52-tone RU and one 26-tone RU may form a 52+26-tone MRU, and one 106-tone RU and one 26-tone RU may form a 106+26-tone MRU. For another example, one 484-tone RU and one 242-tone RU may form a 484+242-tone MRU, and one 996-tone RU and one 484-tone RU may form a 996+484-tone MRU. For another example, one 996-tone RU, one 484-tone RU, and one 242-tone RU may form a 996+484+242-tone MRU, two 996-tone RUs and one 484-tone RU may form a 2*996+484-tone MRU, three 996-tone RUs may form a 3*996-tone MRU, three 996-tone RUs and one 484-tone RU may form a 3*996+484-tone MRU, and the like. It may be understood that, with continuous evolution and development of communication technologies, a next generation standard of 802.11be may support more RU or MRU formats. This is not limited in this application.

In this specification, the symbol "*" represents "multiply" or "multiply by".

2. Unequal modulation and coding schemes

The unequal MCSs mean that in an OFDM system, a resource allocated to a user may use different modulation and coding schemes (MCS) in a specific dimension (for example, at a spatial stream level or a subcarrier level), for example, use different modulation schemes or different code rates. For example, the modulation scheme may include but is not limited to: binary phase shift keying (binary phase shift keying, BPSK) modulation, quadrature phase shift keying (quadrature phase shift keying, QPSK) modulation, 16QAM (quadrature amplitude modulation, quadrature amplitude modulation), 64QAM, dual carrier modulation (dual carrier modulation, DCM), or the like.

For example, the unequal MCSs may mean using different modulation schemes or different code rates on different spatial streams. For example, a user uses four spatial streams (spatial stream) for transmission. 64QAM may be used on a first stream in the four spatial streams, and 16QAM is used on all of a second stream, a third stream, and a fourth stream.

For another example, the unequal MCSs may alternatively mean using different modulation schemes or different code rates on different resource units. For example, a user is allocated a 996+484-tone MRU, where a 484-tone RU corresponds to a modulation scheme of 64QAM, and a 996-tone RU corresponds to a modulation scheme of 16QAM.

It may be understood that the unequal MCSs may mean different code rates and a same modulation scheme, or may mean different modulation schemes and a same code rate, or may mean different modulation schemes and different code rates. This application mainly focuses on a case in which modulation schemes in the unequal MCSs are different. It may be further understood that, unless otherwise specified, "unequal MCSs" described below in this application usually mean that modulation schemes are different, and there is no other limitation.

3. Location and function of a segment parser in a transmitter module

A data (data) field may be composed of a service (service) field, a physical layer service data unit (PHY service data unit, PSDU), a tail (tail) bit (if binary convolutional code is used), and a pre-forward error correction (forward error correction, FEC) code padding bit (The DATA field, composed of SERVICE, PSDU, Tail (if BCC is used), and pre-FEC pad parts).

The following uses generation of the data field as an example. Steps of generating the data field in the transmitter module may be roughly represented as follows:

(1) The service field is generated, and the PSDU is added after the service field.
(2) Pre-forward error correction code padding: The pre-forward error correction code padding bit is padded in the data field. If a coding scheme with a binary convolutional code (binary convolutional code, BCC) is used, the tail bit needs to be added to the data field.
(3) Scrambling: A scrambling operation is performed on data to which the pre-forward error correction code padding bit is added.

(4) Encoding: Encoding is performed by using a BCC or a low-density parity-check (low-density parity-check, LDPC) code.

(5) Post-forward error correction padding: A post-forward error correction code padding bit is added, and a packet extension field is added.

(6) Stream parsing: Output of an encoder is divided into one or more streams.

(7) Segment parsing: Each stream is divided into one or more frequency subblocks (frequency subblock). Each frequency subblock corresponds to 80 MHz.

(8) BCC interleaving: If BCC coding is used, the stream passes through a BCC interleaver. If LDPC coding is used, the stream does not pass through the BCC interleaver.

(9) Constellation mapping: The foregoing bit stream is mapped to a plurality of constellation points.

(10) LDPC subcarrier mapping: If LDPC coding is used, a subcarrier passes through an LDPC subcarrier mapper; or if BCC coding is used, the subcarrier skips the LDPC subcarrier mapper.

(11) Segment deparsing: Bit streams corresponding to a plurality of frequency subblocks are combined into one stream. For example, bits corresponding to an $(i+1)^{th}$ frequency subblock are concatenated to a tail of bits corresponding to an $i^{th}$ frequency subblock, to form a string of data bit streams again. In this way, a quantity of points may be the same as that of subsequent inverse discrete Fourier transform (inverse discrete Fourier transform, IDFT), so that the string of data bit streams can be transmitted to the outside.

(12) Frequency domain replication: If EHT-MCS 14 is used, frequency domain replication is performed.

(13) Pilot insertion: A pilot subcarrier is inserted.

(14) Cyclic shift diversity (cyclic shift diversity, CSD): A cyclic shift operation is performed on each stream.

After (1) to (14) described above are performed for a plurality of users, the following operations may be performed for all users.

(15) Spatial mapping: A Q matrix is used.

(16) An inverse discrete Fourier transform (inverse discrete Fourier transform, IDFT) operation is performed.

(17) A guard interval (guard interval, GI) is inserted and windowing is applied.

(18) Analog and radio frequency operations are performed.

It may be understood that, for specific steps of generating the data field in the transmitter module, refer to the conventional technology, and only brief descriptions are provided herein.

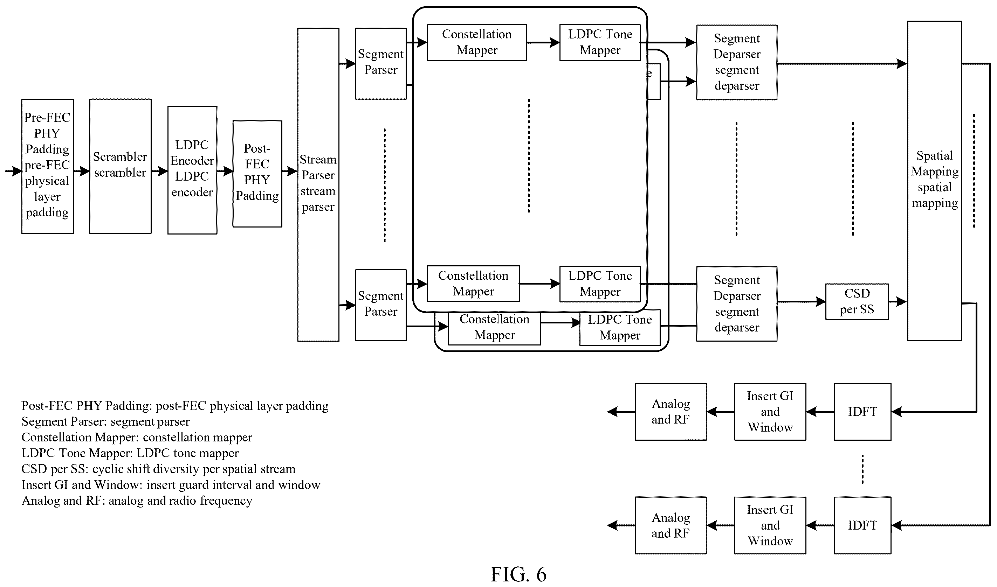

Refer to FIG. 6. FIG. 6 is a diagram of a transmitter module according to an embodiment of this application. FIG. 6 is a diagram of a transmitter module when a size of an RU or an MRU allocated to a user is greater than 996 subcarriers and less than or equal to 2*996 subcarriers (LDPC coding is used). As shown in FIG. 6, pre-FEC physical layer padding is performed on a string of bit streams, a scrambling operation is performed by using a scrambler, encoding is performed by using an LDPC encoder, then post-FEC physical layer padding is performed, a plurality of streams are obtained through division by using a stream parser, each stream is divided into two frequency subblocks by using a segment parser, cyclic shift diversity is performed on each stream after the stream is processed by a constellation mapper, an LDPC subcarrier mapper, and a segment deparser, then spatial mapping, IDFT, guard interval (GI) insertion, and windowing are performed, and finally sending is performed through analog and radio frequency operations. FIG. 6 may be understood as a process of generating and sending a PPDU.

The following of this application mainly focuses on a segment parser design and a stream parser design in a PPDU generation process.

4. Segment parser design in 802.11ax

It can be learned from the foregoing transmitter module that after stream parsing, segment parsing is performed. In some scenarios, a segment parser (segment parser) may be understood as dividing a stream into a plurality of parallel outputs, and each output corresponds to one frequency subblock (frequency subblock). One frequency subblock corresponds to 80 MHz, and an RU size corresponding to 80 MHz is a 996-tone RU (that is, a resource unit including 996 subcarriers).

The following describes the segment parser in 802.11ax.

If an RU size (RU size) is less than or equal to 996 subcarriers, the segment parser is equivalent to being bypassed (bypassed). In this case, an output bit of the segment parser is as follows:

$$y_{k,l} = x_k \quad\dots\dots\dots\dots\dots\dots\dots\dots\dots\dots\dots\dots\dots\dots\dots\dots\dots\dots\dots\dots\dots(1\text{-}1)$$

Herein, $x_k$ represents a $k^{th}$ bit in a quantity (denoted as $N_{CBPSS}$) of coded bits per OFDM symbol corresponding to the stream, and a value of k is greater than or equal to 0 and less than or equal to $(N_{CBPSS}-1)$, that is, $0 \leq k \leq (N_{CBPSS}-1)$. The subscript CBPSS of $N_{CBPSS}$ indicates coded bits per symbol for a spatial stream. $l$ is an index number of a frequency subblock. When the RU size (RU size) is less than or equal to 996 subcarriers, a value of 1 is $0$. $y_{k,l}$ indicates a $k^{th}$ bit of the frequency subblock $l$.

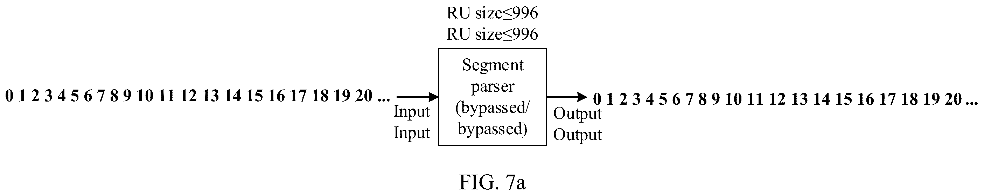

For example, refer to FIG. 7a. FIG. 7a is a diagram of input and output of a segment parser when an RU size is less than or equal to 996 subcarriers according to an embodiment of this application. As shown in FIG. 7a, an input direction is from left to right. When an RU size (RU size) is less than or equal to 996 subcarriers, the segment parser has only one output (output), and the output corresponds to one frequency subblock. In other words, when the RU size is less than or equal to 996 subcarriers, the segment parser may divide an input into one frequency subblock. The input (input) of the segment parser may be a stream that is output through stream parsing, and details are not described below.

If the RU size (RU size) is greater than 996 subcarriers, an output bit of the segment parser is as follows:

$$y_{k,l} = x_m \quad\text{...............................................................................................(1-2)}$$

$$m = 2s \cdot \left\lfloor \frac{k}{s} \right\rfloor + l \cdot s + (k \bmod s), k = 0, 1, ..., (\frac{N_{CBPSS}}{2} - 1) \quad\text{.......................................(1-3)}$$

Herein, $x_m$ represents an $m^{th}$ bit in a quantity ($N_{CBPSS}$) of coded bits per OFDM symbol corresponding to the stream, and a value of m is greater than or equal to 0 and less than or equal to ($N_{CBPSS}$-1), that is, $0 \le m \le (N_{CBPSS}-1)$. $l$ is an index number of a frequency subblock, and has a value of 0 or $1$. $y_{k,l}$ indicates a $k^{th}$ bit of the frequency subblock $l$. A symbol $\lfloor\_\rfloor$ represents rounding down, and mod represents a modulo operation. A same symbol in the following represents a same meaning, and details are not described again.

s in the foregoing formula (1-3) satisfies the following formula:

$$s = \max(1, \frac{N_{BPSCS}}{2}) \quad\text{...........................................................................(1-4)}$$

Herein, $N_{BPSCS}$ represents a quantity of coded bits per subcarrier for a spatial stream (Number of coded bits per single carrier for a spatial stream). It may be understood that a value of $N_{BPSCS}$ may be determined by a modulation scheme. For example, when the modulation scheme is BPSK modulation, the value of $N_{BPSCS}$ is 1; when the modulation scheme is QPSK modulation, the value of $N_{BPSCS}$ is 2; when the modulation scheme is 16QAM, the value of $N_{BPSCS}$ is 4; or when the modulation scheme is 64QAM, the value of $N_{BPSCS}$ is 6. max() indicates a maximizing operation, and details are not described below.

For the foregoing formula (1-3), physical meanings of terms on the right of the equation are as follows:

First term (that is, $2s \cdot \left\lfloor \dfrac{k}{s} \right\rfloor$ ): For output bits in a same frequency subblock (frequency subblock), bit sequence numbers, for a same location, corresponding to s bits output at a $z^{th}$ time and s bits output at a $(z+1)^{th}$ time are at an interval of 2s. z is a positive integer.

Second term (that is, $l \cdot s$ ): In one round of output, an output bit when the value of $l$ is 1 is s bits later than an output bit when the value of $l$ is 0.

Third term (that is, ($k \bmod s$)): For each frequency subblock, s bits are output every round.

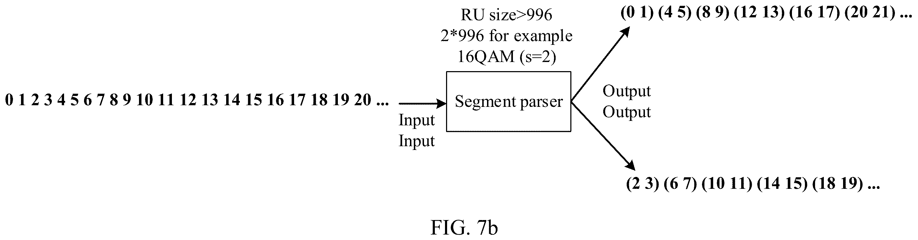

For example, refer to FIG. 7b. FIG. 7b is a diagram of input and output of a segment parser when an RU size is greater than 996 subcarriers according to an embodiment of this application. In FIG. 7b, an input direction of the segment parser is from left to right. For ease of description, FIG. 7b uses a 2*996-tone RU as an example, and a modulation scheme is 16QAM. It can be learned from the foregoing formula (1-4) that, when the modulation scheme is 16QAM, s is equal to 2, that is, for each frequency subblock, two bits are output every round. As shown in FIG. 7b, it is assumed that from top to bottom, a 1st output branch corresponds to a frequency subblock 0 (that is, $l$ is equal to 0), and a 2nd output branch corresponds to a frequency subblock 1 (that is, $l$ is equal to 1). "One round" may be understood as that round-robin is separately performed on the two output branches (or the two frequency subblocks) once. As shown in FIG. 7b, (0 1) is output through round-robin on the frequency subblock 0 (that is, the 1st output branch) once, (2 3) is output through round-robin on the frequency subblock 1 (that is, the 2nd output branch) once, and this is one round; and (4 5) is output through round-robin on the frequency subblock 0 (that is, the 1st output branch) once again, (6 7) is output through round-robin on the frequency subblock 1 (that is, the 2nd output branch) once again, and this is another round. It can be learned that, in one round of output, an output bit (for example, (2 3)) when the value of $l$ is 1 is 2 bits later than an output bit (for example, (0 1)) when the value of $l$ is 0. For the frequency subblock 0 (that is, the 1st output branch), the 1st output is (0 1), the 2nd output is (4

5), and bit sequence numbers (0 and 4, and 1 and 5) of the two outputs are at an interval of 4 (that is, 2s).

5. Segment parser design in the 802.11be draft D3.1 version

In the 802.11be draft D3.1 version, the segment parser is similar to the segment parser in 802.11ax. A difference mainly lies in the following two aspects.

1. A bandwidth is changed from 160 MHz to 320 MHz. Still at a granularity of 80 MHz, the segment parser in 802.11be can support at most four frequency subblocks, that is, there can be at most four parallel outputs.
2. A new concept of MRU is introduced in 802.11be. That is, one user can be allocated a plurality of resource units at the same time. This affects total quantities of bits corresponding to different frequency subblocks, and "leftover bits (Leftover bits)" may occur during segmentation.

Specifically, parameters of the segment parser in the 802.11be draft D3.1 version are shown in the following Table 1.

Table 1

| RU or MRU | RU order/RU order (low to high frequency low to high frequency) | Quantity $L$ of frequency subblocks | Is DCM used? Is DCM used? | $m_0$ | $m_1$ | $m_2$ | $m_3$ | Leftover bits per fully occupied frequency subblock leftover bits per fully occupied frequency subblock |
|---|---|---|---|---|---|---|---|---|
| 996+484 | 484+996 | 2 | No (No) | $s$ | $2s$ | | | $44 \times N_{BPSCS,u}$ |
| | | | Yes (Yes) | | | | | 22 |
| | 996+484 | | No | $2s$ | $s$ | | | $44 \times N_{BPSCS,u}$ |
| | | | Yes | | | | | 22 |
| 996+484 +242 | (242+484)+996 | | No | $3s$ | $4s$ | | | $44 \times N_{BPSCS,u}$ |
| | | | Yes | | | | | 22 |
| | 996+(242+484) | | No | $4s$ | $3s$ | | | $44 \times N_{BPSCS,u}$ |
| | | | Yes | | | | | 22 |
| 2×996+ 484 | 484+996+996 | 3 | No | $s$ | $2s$ | $2s$ | | $44 \times N_{BPSCS,u}$ |
| | 996+484+996 | | No | $2s$ | $s$ | $2s$ | | $44 \times N_{BPSCS,u}$ |
| | 996+996+484 | | No | $2s$ | $2s$ | $s$ | | $44 \times N_{BPSCS,u}$ |
| 3×996+ 484 | 484+996+996+ 996 | 4 | No | $s$ | $2s$ | $2s$ | $2s$ | $44 \times N_{BPSCS,u}$ |
| | 996+484+996+ 996 | | No | $2s$ | $s$ | $2s$ | $2s$ | $44 \times N_{BPSCS,u}$ |
| | 996+996+484+ 996 | | No | $2s$ | $2s$ | $s$ | $2s$ | $44 \times N_{BPSCS,u}$ |
| | 996+996+996+ 484 | | No | $2s$ | $2s$ | $2s$ | $s$ | $44 \times N_{BPSCS,u}$ |
| 2×996 | 996+996 | 2 | No | $s$ | $s$ | | | 0 |
| | | | Yes | | | | | |
| 3×996 | 996+996+996 | 3 | No | $s$ | $s$ | $s$ | | 0 |
| | | | Yes | | | | | |

(continued)

| RU or MRU | RU order/RU order (low to high frequency low to high frequency) | Quantity $L$ of frequency subblocks | Is DCM used? Is DCM used? | $m_0$ | $m_1$ | $m_2$ | $m_3$ | Leftover bits per fully occupied frequency subblock leftover bits per fully occupied frequency subblock |
|---|---|---|---|---|---|---|---|---|
| $4\times996$ | 996+996+996+996 | 4 | No / Yes | $s$ | $s$ | $s$ | $s$ | 0 |

It may be understood that, in Table 1, "L" represents a quantity of frequency subblocks, and $m_0$, $m_1$, $m_2$, and $m_3$ represent quantities of bits respectively output every round for four frequency subblocks. For example, $m_0$ represents a quantity of bits output every round for a frequency subblock 0, $m_1$ represents a quantity of bits output every round for a frequency subblock 1, $m_2$ represents a quantity of bits output every round for a frequency subblock 2, and $m_3$ represents a quantity of bits output every round for a frequency subblock 3. For another example, the subscript 0 of $m_0$ may represent an index number 0 of the frequency subblock, the subscript 1 of $m_1$ may represent an index number 1 of the frequency subblock, the subscript 2 of $m_2$ may represent an index number 2 of the frequency subblock, and the subscript 3 of $m_3$ may represent an index number 3 of the frequency subblock.

It may be further understood that s in the foregoing Table 1 may satisfy the foregoing formula (1-4), and $N_{BPSCS,u}$ in Table 1 may represent a quantity of coded bits per subcarrier for a spatial stream of a user u.

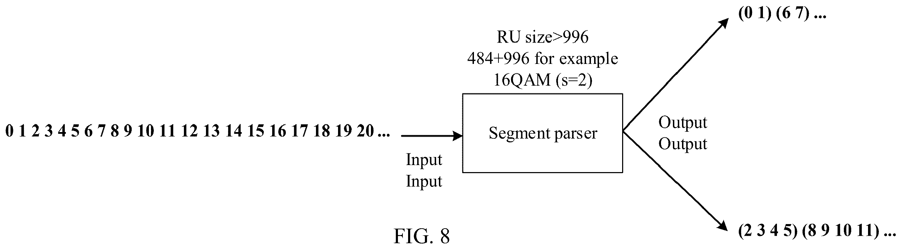

For a 2*996-tone RU, a segment parser has two output branches. A ratio of quantities of bits output by the two output branches every round is s:s. For a 3*996-tone MRU, the segment parser in 802.11be has three output branches, and a ratio of quantities of bits output by the three output branches every round is s:s:s. For a 4*996-tone RU, the segment parser in 802.11be has four output branches, and a ratio of quantities of bits output by the four output branches every round is s:s:s:s. In addition, for another RU/MRU in Table 1, the segment parser in 802.11be further has another output ratio every round. A 996+484-tone MRU is used as an example. Refer to FIG. 8. FIG. 8 is a diagram of input and output of a segment parser when a 996+484-tone MRU is used according to an embodiment of this application. In FIG. 8, an input direction of the segment parser is from left to right. A 484-tone RU in the 996+484-tone MRU corresponds to one frequency subblock, and a 996-tone RU corresponds to another frequency subblock. That is, for the 996+484-tone MRU, an output (output) of the segment parser has two branches in total, and one branch corresponds to one frequency subblock. As shown in FIG. 8, if a 1st output branch from top to bottom corresponds to the 484-tone RU, and a 2nd output branch corresponds to the 996-tone RU, a ratio of quantities of bits output by the two output branches every round is s:2s. As shown in FIG. 8, if a modulation scheme is 16QAM, s is equal to 2. In this case, the 1st output branch outputs two bits every round, and the 2nd output branch outputs four bits every round.

The following describes the concept of "leftover bit (Leftover bits)" in the foregoing Table 1. Using a 996+484-tone MRU as an example, a 484-tone RU includes 468 data subcarriers, a 996-tone RU includes 980 data subcarriers, and two output branches of the segment parser perform output at a ratio of s:2s every round. In this case, after the 484-tone RU is completely occupied, the 996-tone RU still has 980-468*2=44 subcarriers that are not occupied. Therefore, the 996-tone RU may further carry $44\times N_{BPSCS,u}$ bits, and the $44\times N_{BPSCS,u}$ bits are referred to as "leftover bits". Leftover bits (Leftover bits) of another RU/MRU in Table 1 may also be deduced similarly, and are not listed one by one herein. It may be understood that, in this application, the "leftover bits" are allocated to an RU that is not completely occupied. Using the 996+484-tone MRU as an example, after the 484-tone RU is completely occupied, leftover bits (a maximum quantity is $44\times N_{BPSCS,u}$) in a stream are allocated to a frequency subblock corresponding to the 996-tone RU in the 996+484-tone MRU. Then, using the 2*996+484-tone MRU as an example, after the 484-tone RU is completely occupied, leftover bits (a maximum quantity is $2\times44\times N_{BPSCS,u}$) in a stream are allocated to frequency subblocks corresponding to the two 996-tone RUs in the 2*996+484-tone MRU.

It may be further understood that, because every two subcarriers correspond to one bit in a dual carrier modulation (dual carrier modulation, DCM) mode, for the 996+484-tone MRU, if DCM is used, 44 subcarriers correspond to 22 bits, that is, when DCM is used, the 996+484-tone MRU corresponds to 22 leftover bits. Leftover bits (Leftover bits) of another RU/MRU in Table 1 when DCM is used may also be deduced similarly, and are not listed one by one herein.

It may be further understood that a concept of "leftover bit" is introduced in 802.11be. After a frequency subblock is completely occupied, a ratio of quantities of bits output every round by a plurality of output branches of the segment parser changes. Using the 996+484-tone MRU as an example, when the 484-tone RU is completely occupied, a ratio of quantities of bits output every round by two output branches (a 1st output branch corresponds to the 484-tone RU) of the segment parser is 0:2s. That is, for the 996+484-tone MRU, before the 484-tone RU is completely occupied, an output of the segment parser has two branches, and a ratio of quantities of bits output every round by the two output branches (the 1st

output branch corresponds to the 484-tone RU) is s:2s. In some scenarios, after the 484-tone RU is completely occupied, it may be further understood that the output of the segment parser changes from two branches to one branch, and a quantity of bits output every round by the branch (an output branch corresponding to the 996-tone RU) is 2s. Then, using the 2*996+484-tone MRU as an example, when the 484-tone RU is completely occupied, a ratio of quantities of bits output every round by three output branches (a $1^{st}$ output branch corresponds to the 484-tone RU) of the segment parser is 0:2s:2s. Similarly, for another RU/MRU in Table 1, after a frequency subblock is completely occupied, a ratio of quantities of bits output every round by a plurality of output branches of the segment parser changes correspondingly. This is not listed one by one herein.

In conclusion, it can be learned that, in the conventional technology, a segment parser for an equal MCS (or a same modulation scheme) is designed. To further improve spectrum utilization, it is considered that unequal MCSs are to be introduced into a WLAN system. However, in the conventional technology, there is no segment parser design for unequal MCSs (or different modulation schemes).

Embodiments of this application provide a PPDU-based communication method and an apparatus. A parameter $s_i$ is defined and/or an output frequency is modified, so that segment parsing in a scenario of unequal MCSs can be supported, spectrum utilization can be improved, and leftover bits can be reduced, thereby achieving a better frequency diversity gain.

Embodiments of this application provide another PPDU-based communication method and an apparatus. A parameter $s_i$ is defined and/or an output frequency is modified, so that stream parsing in a scenario of unequal MCSs can be supported, spectrum utilization can be improved, and an even allocation principle can be complied with, thereby achieving a better frequency diversity gain.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of the embodiments or implementations, refer to each other. In embodiments of this application and the implementations/implementation methods in the embodiments, unless otherwise specified or unless a logical conflict occurs, terms and/or descriptions are consistent and may be mutually referenced between different embodiments and between the implementations/implementation methods in the embodiments. Technical features in the different embodiments and the implementations/implementation methods in the embodiments may be combined to form a new embodiment, implementation, or implementation method based on an internal logical relationship thereof. The following implementations of this application are not intended to limit the protection scope of this application. In addition, an order of the following embodiments does not represent an importance degree.

In this application, a communication apparatus may be an AP or a STA, and the communication apparatus may support a WLAN communication protocol. The WLAN communication protocol may include but is not limited to the 802.11be protocol, Wi-Fi 7, or a next generation protocol of 802.11be, for example, 802.11bn, Wi-Fi 8, UHR, or Wi-Fi AI.

Embodiment 1

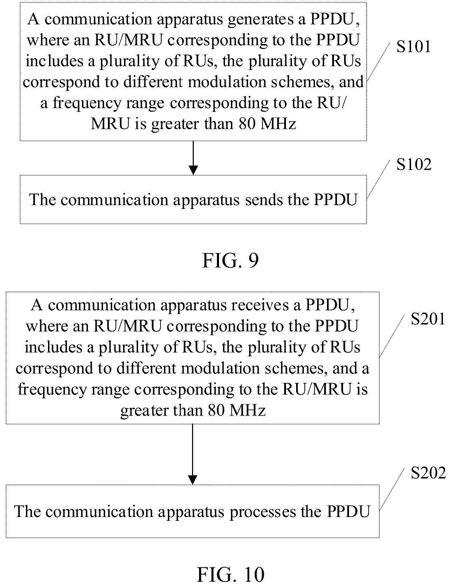

Refer to FIG. 9. FIG. 9 is a first schematic flowchart of a PPDU-based communication method according to an embodiment of this application. FIG. 9 shows a PPDU-based communication procedure at a transmit end. As shown in FIG. 9, the PPDU-based communication method includes but is not limited to the following steps.

S101: A communication apparatus generates a PPDU, where an RU/MRU corresponding to the PPDU includes a plurality of RUs, the plurality of RUs correspond to different modulation schemes, and a frequency range corresponding to the RU/MRU is greater than 80 MHz. In this embodiment of this application, spectrum utilization can be improved by using different modulation schemes.

S102: The communication apparatus sends the PPDU.

In a possible implementation, the communication apparatus generates and sends the PPDU. The RU/MRU corresponding to the PPDU may be the RU/MRU shown in Table 1, and the frequency range occupied by the RU/MRU is greater than 80 MHz. The RU/MRU includes the plurality of RUs. For example, a frequency range occupied by each of the plurality of RUs may be less than or equal to 80 MHz, or a frequency range occupied by at least one of the plurality of RUs is greater than 80 MHz. In other words, a division granularity of the RU/MRU is not limited in this embodiment of this application, provided that the RU/MRU is divided into a plurality of RUs. A frequency range occupied by at least one of the RUs may be greater than 80 MHz, or frequency ranges occupied by all the RUs may be less than or equal to 80 MHz. For example, if the division granularity of the RU/MRU is less than or equal to 80 MHz, a 3*996-tone MRU includes three 996-tone RUs. However, if the division granularity of the RU/MRU is allowed to be greater than 80 MHz, a 3*996-tone MRU may include one 2*996-tone RU and one 996-tone RU. For another example, if the division granularity of the RU/MRU is less than or equal to 80 MHz, a 4*996-tone RU includes four 996-tone RUs. However, if the division granularity of the RU/MRU is allowed to be greater than 80 MHz, a 4*996-tone RU may include two 2*996-tone RUs, or one 2*996-tone RU and two 996-tone RUs.

In a possible implementation, the PPDU includes a data field (DATA field). For a method for generating the data field by the communication apparatus, refer to a data field generation method in the conventional technology. Details are not described herein. This embodiment of this application mainly focuses on a design of a segment parser (segment parser) in a data field generation process. The segment parser may divide each spatial stream output by a stream parser (stream parser) into a plurality of frequency subblocks corresponding to the RU/MRU. The following mainly describes the design of the segment parser in this embodiment of this application.

It can be learned from Table 1 that, for a frequency subblock 1, a quantity $m_1$ of bits output by the (segment parser) every round (or each time) may be determined based on a parameter s. In a possible implementation, modulation schemes corresponding to at least two of the plurality of RUs included in the RU/MRU are different. In other words, in this embodiment of this application, unequal MCSs are at a granularity of RU, and different modulation schemes may be used for different RUs. It may be understood that the modulation scheme affects a quantity of coded bits per data subcarrier for each spatial stream. Therefore, during segment parsing, for an $i$th RU in the plurality of RUs in ascending order of frequencies, a quantity of bits output each time may be determined based on a parameter $s_i$. In this embodiment of this application, the parameter $s_i$ may also be defined at a granularity of RU. For example, the parameter $s_i$ satisfies:

$$s_i = \max(1, \frac{N_{BPSCS,u,i}}{2}) \dots\dots\dots\dots\dots\dots\dots\dots\dots\dots\dots\dots\dots\dots\dots\dots\dots(2\text{-}1)$$

Herein, u represents a user, and $N_{BPSCS,u,i}$ represents a quantity of coded bits per data subcarrier for each spatial stream of an $i$th RU for the user u, that is, a quantity of bits corresponding to a constellation point corresponding to each data subcarrier for each spatial stream of the $i$th RU for the user u. Herein, the quantity of bits corresponding to the constellation point corresponding to each data subcarrier, or the quantity of coded bits per data subcarrier, that is, $N_{BPSCS,u,i}$, is determined by an MCS corresponding to the $i$th RU. For example, if the MCS corresponding to the $i$th RU includes BPSK modulation, a value of $N_{BPSCS,u,i}$ is 1; if the MCS corresponding to the $i$th RU includes QPSK modulation, a value of $N_{BPSCS,u,i}$ is 2; if the MCS corresponding to the $i$th RU includes 16QAM, a value of $N_{BPSCS,u,i}$ is 4; or if the MCS corresponding to the $i$th RU includes 64QAM, a value of $N_{BPSCS,u,i}$ is 6.

For example, the RU corresponding to the PPDU is a 4*996-tone RU, which includes four 996-tone RUs. In this case, a value range of i may be 1, 2, 3, and 4 (or may be 0, 1, 2, and 3 if the value range starts from 0).

In a possible implementation, an MCS corresponding to each of the plurality of RUs included in the RU/MRU includes neither BPSK modulation nor DCM. Certainly, in some scenarios, an MCS corresponding to an RU in the plurality of RUs included in the RU/MRU includes BPSK modulation and/or DCM. This is not limited in embodiments of this application.

In a possible implementation, because one frequency subblock corresponds to 80 MHz, and the frequency range occupied by the RU/MRU is greater than 80 MHz, it indicates that the RU/MRU corresponds to a plurality of frequency subblocks. Because a frequency range occupied by each of the plurality of RUs is less than or equal to 80 MHz, one frequency subblock may correspond to a plurality of RUs. If a same modulation scheme is used for a plurality of RUs corresponding to one frequency subblock, modulation schemes corresponding to different frequency subblocks may be different, that is, unequal MCSs may be at a granularity of frequency subblock. In this case, i in the foregoing formula (2-1) may represent a number of a frequency subblock. In addition, when one frequency subblock of the user corresponds to one RU, i in the foregoing formula (2-1) may also be understood as a number of a frequency subblock. It may be understood that the granularity of frequency subblock for the unequal MCSs is a specific example of the granularity of RU. Therefore, in this embodiment of this application, the granularity of RU is mainly used for description.

It may be understood that, for any frequency subblock (for example, a first frequency subblock) in the plurality of frequency subblocks corresponding to the RU/MRU, if an RU included in the frequency subblock (for example, the first frequency subblock) is an $i$th RU in ascending order of frequencies in the plurality of RUs included in the RU/MRU, during segment parsing, a quantity of bits output for the frequency subblock (for example, the first frequency subblock) each time is determined based on a parameter $s_i$ corresponding to the $i$th RU, and $N_{BPSCS,u,i}$ in the parameter $s_i$ is determined by an MCS corresponding to the $i$th RU. It may be further understood that, if the frequency subblock (for example, the first frequency subblock) includes a plurality of RUs, for example, an $i$th RU and an $(i+1)$th RU in ascending order of frequencies in the plurality of RUs included in the RU/MRU, during segment parsing, a quantity of bits output for the frequency subblock (for example, the first frequency subblock) each time is determined based on parameters corresponding to the plurality of RUs (for example, a parameter $s_i$ corresponding to the $i$th RU and a parameter $s_{(i+1)}$ corresponding to the $(i+1)$th RU). Optionally, a modulation scheme corresponding to the $i$th RU may be different from a modulation scheme corresponding to the $(i+1)$th RU.

For example, the division granularity of the RU/MRU is less than or equal to 80 MHz. The following Table 2 shows a quantity of bits output each time by each output branch of the segment parser. In other words, the following Table 2 shows

a quantity $m_1$ of bits output by the segment parser each time for a frequency subblock 1.

Table 2

| RU or MRU | RU order/RU order (low to high frequency low to high frequency) | Quantity *L* of frequency subblocks | $m_0$ | $m_1$ | $m_2$ | $m_3$ |
|---|---|---|---|---|---|---|
| 996+484 | 484+996 | 2 | $s_1$ | $2s_2$ | - | - |
| | 996+484 | | $2s_1$ | $s_2$ | - | - |
| 996+484+242 | (242+484)+996 | 2 | $s_1+2s_2$ | $4s_3$ | - | - |
| | 996+(242+484) | | $4s_1$ | $s_2+2s_3$ | | |
| 2*996+484 | 484+996+996 | 3 | $s_1$ | $2s_2$ | $2s_3$ | - |
| | 996+484+996 | | $2s_1$ | $s_2$ | $2s_3$ | - |
| | 996+996+484 | | $2s_1$ | $2s_2$ | $s_3$ | - |
| 3*996+484 | 484+996+996+996 | 4 | $s_1$ | $2s_2$ | $2s_3$ | $2s_4$ |
| | 996+484+996+996 | | $2_{s1}$ | $s_2$ | $2s_3$ | $2s_4$ |
| | 996+996+484+996 | | $2s_1$ | $2s_2$ | $s_3$ | $2s_4$ |
| | 996+996+996+484 | | $2s_1$ | $2s_2$ | $2s_3$ | $s_4$ |
| 2*996 | 996+996 | 2 | $s_1$ | $s_2$ | - | - |
| 3*996 | 996+996+996 | 3 | $s_1$ | $s_2$ | $s_3$ | - |
| 4*996 | 996+996+996+996 | 4 | $s_1$ | $s_2$ | $s_3$ | $s_4$ |

It may be understood that Table 2 shows that $m_1$ bits are output for the frequency subblock *l* every round/each time, and the $m_1$ bits may be represented by one or more $s_i$. It may be further understood that Table 2 shows a quantity of bits output each time by each output branch of the segment parser in unequal MCSs at a granularity of RU. It may be further understood that, for a 996+484+242-tone MRU, because a 484-tone RU and a 242-tone RU correspond to a same frequency subblock, when a same modulation scheme is used in the same frequency subblock, $s_1$ and $s_2$ in $m_0=s_1+2s_2$ are the same when an RU order is (242+484)+996, or $s_2$ and $s_3$ in $m_1=s_2+2s_3$ are the same when an RU order is 996+(242+484).

It may be understood that, if the division granularity of the RU/MRU is allowed to be greater than 80 MHz, a frequency range occupied by at least one RU included in each of the 3 *996-tone MRU and the 4*996-tone RU in Table 2 is greater than 80 MHz. For example, if the 4*996-tone RU includes two 2*996-tone RUs, in Table 2, $m_0=m_1=s_1$, and $m_2=m_3=s_2$. Certainly, in this case, it may also be understood that the 4*996-tone RU includes four 996-tone RUs. However, in ascending order of frequencies, a same modulation scheme is used for the first two 996-tone RUs, and another modulation scheme is used for the last two 996-tone RUs. It may be further understood that, in this embodiment of this application, the division granularity of the RU/MRU does not affect a calculation manner of the parameter $s_i$ in a segment parsing process, and the like. Actually, two division granularities are equivalent in terms of a segment parsing method.

In a possible implementation, because total quantities of bits corresponding to different frequency subblocks may be different, after a plurality of rounds of output are completed based on the foregoing quantity $m_1$ of output bits, there are still leftover bits (leftover bits). It may be understood that, similar to that of the segment parser in 802.11be, because there are leftover bits, after a frequency subblock is completely occupied, a ratio of quantities of bits output every round by a plurality of output branches of the segment parser changes. Values of $m_0$, $m_1$, $m_2$, and $m_3$ shown in Table 2 each are obtained before a frequency subblock is completely occupied. After a frequency subblock is completely occupied, a value of m corresponding to the frequency subblock is 0. For example, a 996+484-tone MRU is used as an example. It is assumed that a 484-tone RU corresponds to a frequency subblock 0. After the frequency subblock 0 corresponding to the 484-tone RU is completely occupied, a value of $m_0$ corresponding to the frequency subblock 0 changes from $s_1$ to 0.

The following analyzes and describes leftover bits when unequal MCSs (or different modulation schemes) are used. For ease of description, the following analysis and description of the leftover bits when unequal MCSs (or different modulation schemes) are used do not consider a case in which the MCS includes BPSK modulation and DCM.

It may be understood that, because the 484-tone RU and the 242-tone RU in the 996+484+242-tone MRU correspond to the same frequency subblock, based on whether different modulation schemes are used for the 484-tone RU and the 242-tone RU, the leftover bits need to be discussed in different cases.

For example, if the 484-tone RU and the 242-tone RU in the 996+484+242-tone MRU correspond to a same modulation scheme, for the 996+484+242-tone MRU, leftover bits (leftover bits) are shown in the following Table 3a. If none of MCSs corresponding to the 484-tone RU, the 242-tone RU, and the 996-tone RU in the 996+484+242-tone MRU includes BPSK modulation, it can be learned from the foregoing formula (2-1) that the parameter $s_i$ is half of a quantity of bits corresponding to one constellation point, that is, the parameter $s_i$ is equal to half of $N_{BPSCS,u,i}$. Because the 484-tone RU includes 468 data subcarriers, the 242-tone RU includes 234 data subcarriers, and the 484-tone RU and the 242-tone RU correspond to a same modulation scheme, during segment parsing, $(s_1+2s_2)$ (where $s_1$ and $s_2$ are the same) or $(s_2+2s_3)$ (where $s_2$ and $s_3$ are the same) bits are output each time for frequency subblocks corresponding to the 484-tone RU and the 242-tone RU. In this case, if DCM is not used, bits required by the 484-tone RU and the 242-tone RU can be completely allocated only after (468+234)*2/3 rounds. During segment parsing, $4s_i$ bits are output each time for a frequency subblock corresponding to the 996-tone RU. Because one 996-tone RU includes 980 data subcarriers, a total quantity of bits required by the 996-tone RU is $980*N_{BPSCS,u,i}$ when DCM is not used. After (468+234)*2/3 rounds, a quantity of unallocated leftover bits is $980*N_{BPSCS,u,i}-(702*2/3)*4s_i=980*N_{BPSCS,u,i}-936*2s_i=44*N_{BPSCS,u,i}$. $s_i$ is equal to $(N_{BPSCS,u,i})/2$.

Table 3a

| RU or MRU | RU order/RU order (low to high frequency low to high frequency) | Quantity *L* of frequency subblocks | $m_0$ | $m_1$ | $m_2$ | $m_3$ | Leftover bits for fully occupied frequency subblock / leftover bits for fully occupied frequency subblock *l* |
|---|---|---|---|---|---|---|---|
| 996+484+242 | (242+484)+996 | 2 | $s_1+2s_2$, where $s_1$ and $s_2$ are the same | $4s_3$ | - | - | $44 \times N_{BPSCS,u,3}$ |
| | 996+(242+484) | | $4s_1$ | $S_2+2s_3$, where $s_2$ and $s_3$ are the same | - | - | $44 \times N_{BPSCS,u,1}$ |

For another example, if the 484-tone RU and the 242-tone RU in the 996+484+242-tone MRU correspond to different modulation schemes, for the 996+484+242-tone MRU, leftover bits (leftover bits) are shown in the following Table 3b. If none of MCSs corresponding to the 484-tone RU, the 242-tone RU, and the 996-tone RU in the 996+484+242-tone MRU includes BPSK modulation, it can be learned from the foregoing formula (2-1) that the parameter $s_i$ is half of a quantity of bits corresponding to one constellation point, that is, the parameter $s_i$ is equal to half of $N_{BPSCS,u,i}$. For example, an RU order is (242+484)+996. Because the 484-tone RU includes 468 data subcarriers, and the 242-tone RU includes 234 data subcarriers, during segment parsing, $(s_1+2s_2)$ bits are output each time for frequency subblocks corresponding to the 484-tone RU and the 242-tone RU. If DCM is not used, bits required by the 484-tone RU and the 242-tone RU can be completely allocated only after 234*2 rounds. During segment parsing, $4s_3$ bits are output each time for a frequency subblock corresponding to the 996-tone RU. Because one 996-tone RU includes 980 data subcarriers, a total quantity of bits required by the 996-tone RU is $980*N_{BPSCS,u,i}$ when DCM is not used. After 234*2 rounds, a quantity of unallocated leftover bits is $980*N_{BPSCS,u,3}-(234*2)*4s_3=980*N_{BPSCS,u,3}-936*2s_3=44*N_{BPSCS,u,3}$. $S_3$ is equal to $(N_{BPSCS,u,3})/2$. Certainly, when an RU order is 996+(242+484), manners of calculating leftover bits are similar, and are not enumerated one by one herein.

Table 3b

| RU or MRU | RU order/RU order (low to high frequency low to high frequency) | Quantity $L$ of frequency subblocks | $m_0$ | $m_1$ | $m_2$ | $m_3$ | Leftover bits for fully occupied frequency subblock $l$ leftover bits for fully occupied frequency subblock $l$ |
|---|---|---|---|---|---|---|---|
| 996+484+242 | (242+484)+996 | 2 | $s_1+2s_2$ | $4s_3$ | - | - | $44\times N_{BPSCS,u,3}$ |
| | 996+(242+484) | | $4s_1$ | $s_2+2s_3$ | - | - | $44\times N_{BPSCS,u,1}$ |

It may be further understood that, for an RU/MRU other than the 996+484+242-tone MRU in Table 2, leftover bits (leftover bits) are shown in the following Table 4. Using a 996+484-tone MRU as an example, if neither of MCSs corresponding to the 484-tone RU and the 996-tone RU includes BPSK modulation, it can be learned from the foregoing formula (2-1) that the parameter $s_i$ is half of a quantity of bits corresponding to one constellation point, that is, the parameter $s_i$ is equal to half of $N_{BPSCS,u,i}$. During segment parsing, $s_i$ bits are output each time for a frequency subblock corresponding to the 484-tone RU. Because the 484-tone RU includes 468 data subcarriers, if DCM is not used, bits required by the 484-tone RU can be completely allocated only after 468*2 rounds. During segment parsing, $2s_i$ bits are output each time for a frequency subblock corresponding to the 996-tone RU. Because one 996-tone RU includes 980 data subcarriers, a total quantity of bits required by the 996-tone RU is $980*N_{BPSCS,u,i}$ when DCM is not used. After 468*2 rounds, a quantity of unallocated leftover bits is $980*N_{BPSCS,u,i}-(468*2)*2s_i=980*N_{BPSCS,u,i}-936*2s_i=44*N_{BPSCS,u,i}$. $s_i$ is equal to $(N_{BPSCS,u,i})/2$.

Table 4

| RU or MRU | RU order/RU order (low to high frequency low to high frequency) | Quantity $L$ of frequency subblocks | $m_0$ | $m_1$ | $m_2$ | $m_3$ | Leftover bits for fully occupied frequency subblock $l$ leftover bits for fully occupied frequency subblock $l$ |
|---|---|---|---|---|---|---|---|
| 996+484 | 484+996 | 2 | $s_1$ | $2s_2$ | - | - | $44\times N_{BPSCS,u,2}$ |
| | 996+484 | | $2s_1$ | $s_2$ | - | - | $44\times N_{BPSCS,u,1}$ |
| 2*996+484 | 484+996+996 | 3 | $s_1$ | $2s_2$ | $2s_3$ | - | $44\times N_{BPSCS,u,i}$ for RU i |
| | 996+484+996 | | $2s_1$ | $s_2$ | $2s_3$ | - | $44\times N_{BPSCS,u,i}$ for RU i |
| | 996+996+484 | | $2s_1$ | $2s_2$ | $s_3$ | - | $44\times N_{BPSCS,u,i}$ for RU i |
| 3*996+484 | 484+996+996+996 | 4 | $s_1$ | $2s_2$ | $2s_3$ | $2s_4$ | $44\times N_{BPSCS,u,i}$ for RU i |
| | 996+484+996+996 | | $2s_1$ | $s_2$ | $2s_3$ | $2s_4$ | $44\times N_{BPSCS,u,i}$ for RU i |
| | 996+996+484+996 | | $2s_1$ | $2s_2$ | $s_3$ | $2s_4$ | $44\times N_{BPSCS,u,i}$ for RU i |
| | 996+996+996+484 | | $2s_1$ | $2s_2$ | $2s_3$ | $s_4$ | $44\times N_{BPSCS,u,i}$ for RU i |
| 2*996 | 996+996 | 2 | $s_1$ | $s_2$ | - | - | 0 |
| 3*996 | 996+996+996 | 3 | $s_1$ | $s_2$ | $s_3$ | - | 0 |
| 4*996 | 996+996+996+996 | 4 | $s_1$ | $s_2$ | $s_3$ | $s_4$ | 0 |

In embodiments of this application, a meaning of the parameter s is modified, and the parameter $s_i$ is defined at a granularity of RU, so that different modulation schemes can be used for different RUs, and segment parsing in a scenario of unequal MCSs is supported, thereby improving spectrum utilization, and further achieving a better frequency diversity gain.

FIG. 9 describes the PPDU-based communication method at the transmit end. The following describes a PPDU-based communication method at a receive end. Refer to FIG. 10. FIG. 10 is a second schematic flowchart of a PPDU-based communication method according to an embodiment of this application. FIG. 10 shows a PPDU-based communication method at a receive end corresponding to FIG. 9. As shown in FIG. 10, the PPDU-based communication method includes but is not limited to the following steps.

S201: A communication apparatus receives a PPDU, where an RU/MRU corresponding to the PPDU includes a plurality of RUs, the plurality of RUs correspond to different modulation schemes, and a frequency range corresponding to the RU/MRU is greater than 80 MHz.

S202: The communication apparatus processes the PPDU.

In a possible implementation, a method for processing the PPDU by the receive end is an inverse process of a method for generating the PPDU by the transmit end. For example, the PPDU includes a data field (DATA field). A method for processing the data field by the communication apparatus is an inverse process of a method for generating the data field, and details are not described herein. This embodiment of this application mainly focuses on an inverse operation corresponding to a segment parser (segment parser) in a data field processing process. For example, that the communication apparatus processes the data field includes: The communication apparatus obtains a plurality of frequency subblocks corresponding to the RU/MRU, and combines bits corresponding to the plurality of frequency subblocks (on one spatial stream) into one spatial stream. It may be understood that, in this embodiment of this application, the RU/MRU corresponding to the PPDU is learned in advance by the transmit end and the receive end, for example, learned through pre-negotiation or pre-configuration.

In a possible implementation, because segment combination at the receive end is an inverse process of segment parsing at the transmit end, for an $i^{th}$ RU in ascending order of frequencies in the plurality of RUs included in the RU/MRU, a quantity of bits obtained from bits corresponding to the $i^{th}$ RU each time is the same as a quantity of bits output by the transmit end for the $i^{th}$ RU each time. In this case, the quantity of bits obtained from the bits corresponding to the $i^{th}$ RU each time is also determined based on the parameter $s_i$, the parameter $s_i$ satisfies the foregoing formula (2-1), and $N_{BPSCS,u,i}$ in the parameter $s_i$ is determined by an MCS corresponding to the $i^{th}$ RU.

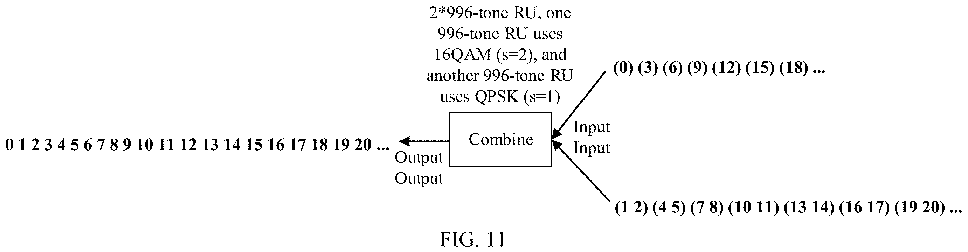

For example, refer to FIG. 11. FIG. 11 is a diagram of processing a PPDU by a receive end according to an embodiment of this application. FIG. 11 shows a processing procedure at the receive end when unequal MCSs are used for a 2*996-tone RU. As shown in FIG. 11, in the 2*996-tone RU, 16QAM is used for one 996-tone RU, and QPSK modulation is used for the other 996-tone RU. As shown in FIG. 11, it is assumed that QPSK modulation is used for a 996-tone RU corresponding to a $1^{st}$ input branch from top to bottom, and 16QAM modulation is used for a 996-tone RU corresponding to a $2^{nd}$ input branch. The receive end each time takes one bit from the $1^{st}$ input branch for output, and takes two bits from the $2^{nd}$ input branch for output.

This embodiment of this application provides a manner of processing the PPDU by the receive end, to ensure that the receive end can correctly obtain data.

Embodiment 2

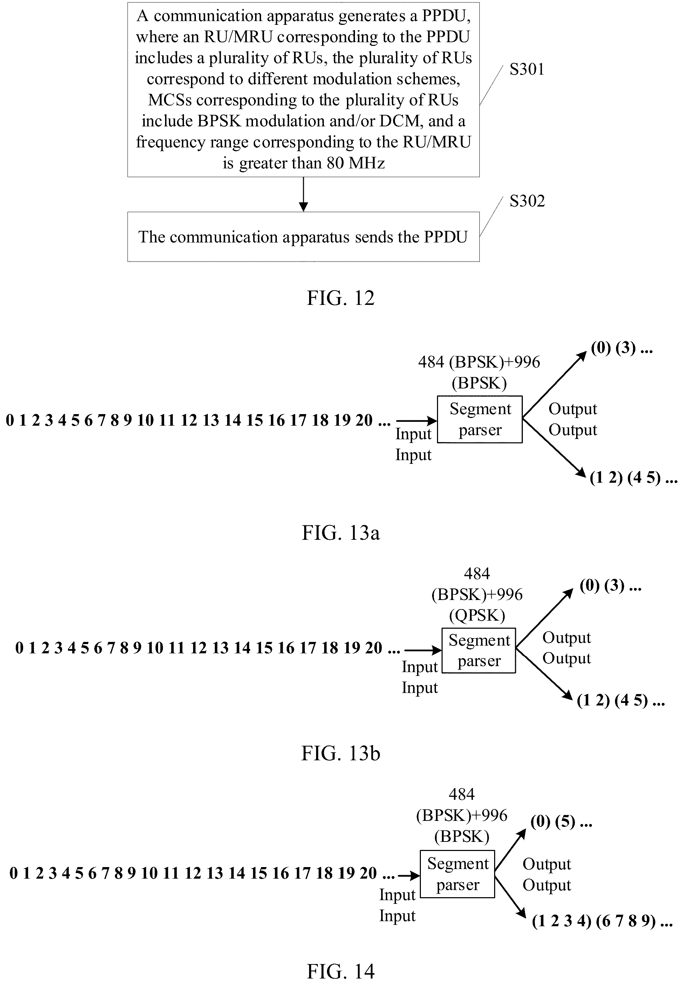

Refer to FIG. 12. FIG. 12 is a third schematic flowchart of a PPDU-based communication method according to an embodiment of this application. FIG. 12 shows a PPDU-based communication procedure at a transmit end. As shown in FIG. 12, the PPDU-based communication method includes but is not limited to the following steps.

S301: A communication apparatus generates a PPDU, where an RU/MRU corresponding to the PPDU includes a plurality of RUs, the plurality of RUs correspond to different modulation schemes, MCSs corresponding to the plurality of RUs include BPSK modulation and/or DCM, and a frequency range corresponding to the RU/MRU is greater than 80 MHz. In this embodiment of this application, spectrum utilization can be improved by using different modulation schemes at a granularity of RU.

S302: The communication apparatus sends the PPDU.

In a possible implementation, the communication apparatus generates and sends the PPDU. The RU/MRU corresponding to the PPDU may be the RU/MRU shown in Table 1, and the frequency range occupied by the RU/MRU is greater than 80 MHz. The RU/MRU includes the plurality of RUs. For example, a frequency range occupied by each of the plurality of RUs is less than or equal to 80 MHz, or a frequency range occupied by at least one of the plurality of RUs is greater than 80 MHz. This is not limited in embodiments of this application.

In a possible implementation, the PPDU includes a data field (DATA field). For a method for generating the data field by the communication apparatus, refer to a data field generation method in the conventional technology. Details are not described herein. This embodiment of this application mainly focuses on a design of a segment parser (segment parser) in a data field generation process. The segment parser may divide each spatial stream output by a stream parser (stream parser) into a plurality of frequency subblocks corresponding to the RU/MRU. It may be understood that, because one frequency subblock corresponds to 80 MHz, and the frequency range occupied by the RU/MRU is greater than 80 MHz, it indicates that the RU/MRU corresponds to a plurality of frequency subblocks. The following mainly describes the design of the segment parser in this embodiment of this application.

In a possible implementation, at least two of the plurality of RUs included in the RU/MRU correspond to different modulation schemes, and an MCS corresponding to an RU in the plurality of RUs included in the RU/MRU includes BPSK modulation and/or DCM. Discussion is performed in different cases below.

1. An MCS corresponding to an RU in the plurality of RUs included in the RU/MRU includes BPSK modulation. Optionally, an MCS corresponding to no RU in the plurality of RUs included in the RU/MRU includes DCM.

26

It may be understood that, if an MCS corresponding to an RU in the plurality of RUs included in the RU/MRU includes BPSK modulation, because $N_{BPSCS,u,i}$ is equal to 1 in BPSK modulation, a parameter $s_i$ calculated according to the foregoing formula (2-1) is equal to 1. That is, for the RU, a quantity of bits corresponding to one constellation point (that is, a quantity $N_{BPSCS,u,i}$ of coded bits of one data subcarrier) is output each time during segment parsing. However, for another RU in the plurality of RUs included in the RU/MRU, when another modulation scheme such as QPSK modulation or 16QAM is used for the another RU, $s_i$ calculated according to the foregoing formula (2-1) is equal to half of a quantity of bits corresponding to one constellation point (that is, half of a quantity of coded bits of one data subcarrier), that is, ($N_{BPSCS,u,i}$/2). In this case, a frequency subblock corresponding to the RU for which BPSK modulation is used is completely occupied more quickly. This does not comply with an overall principle of even allocation.

For example, when a same modulation scheme is used for all of the plurality of RUs included in the RU/MRU, a 996+484-tone MRU is used as an example. Refer to FIG. 13a. FIG. 13a is a diagram of input and output of a segment parser in a same modulation scheme according to an embodiment of this application. In FIG. 13a, if BPSK modulation is used for both a 996-tone RU and a 484-tone RU included in the 996+484-tone MRU, s calculated according to the foregoing formula (1-4) is equal to 1. As shown in FIG. 13a, if a 1st output branch from top to bottom corresponds to the 484-tone RU, and a 2nd output branch corresponds to the 996-tone RU, a ratio of quantities of bits output by the two output branches each time is 1:2. The 484-tone RU includes 468 data subcarriers, the 996-tone RU includes 980 data subcarriers, and the two output branches of the segment parser perform output at a ratio of 1:2 every round. After the 484-tone RU is completely occupied, the 996-tone RU still has 980-468*2=44 subcarriers that are not occupied. Therefore, there are $44 \times N_{BPSCS,u}$ leftover bits. It can be learned that, when BPSK modulation is used for each of the plurality of RUs included in the RU/MRU, a principle of even allocation can be basically complied with.

When BPSK modulation is used for an RU in the plurality of RUs included in the RU/MRU, and another modulation scheme (for example, QPSK modulation) is used for another RU, there are a large quantity of leftover bits. A 996+484-tone MRU is used as an example. Refer to FIG. 13b. FIG. 13b is a diagram of input and output of a segment parser in different modulation schemes according to an embodiment of this application. As shown in FIG. 13b, BPSK modulation is used for a 484-tone RU included in the 996+484-tone MRU, and $s_i$ calculated according to the foregoing formula (2-1) is equal to 1. Because $N_{BPSCS,u,i}$ is also equal to 1 in BPSK modulation, $s_i$ may represent a quantity of bits corresponding to one constellation point in BPSK modulation. However, if QPSK modulation is used for a 996-tone RU, although $s_i$ calculated according to the foregoing formula (2-1) is also equal to 1, because $N_{BPSCS,u,i}$ is equal to 2 in QPSK modulation, $s_i$ represents half of a quantity of bits corresponding to one constellation point in QPSK modulation. As shown in FIG. 13b, if a 1st output branch from top to bottom corresponds to the 484-tone RU, and a 2nd output branch corresponds to the 996-tone RU, a quantity of bits output by the 1st output branch each time is 1, and a quantity of bits output by the 2nd output branch each time is 2. The 484-tone RU includes 468 data subcarriers, and a quantity of coded bits per data subcarrier is 1 (that is, $N_{BPSCS,u,i}$ is equal to 1). The 996-tone RU includes 980 data subcarriers, and a quantity of coded bits per data subcarrier is 2 (that is, $N_{BPSCS,u,i}$ is equal to 2). Therefore, after the 484-tone RU is completely occupied, the 996-tone RU still has 980-468=512 subcarriers that are not occupied. Therefore, there are $512 \times N_{BPSCS,u,i}$ leftover bits.

It can be learned that, when BPSK modulation is used for an RU in the plurality of RUs included in the RU/MRU, and another modulation scheme such as QPSK modulation or 16QAM is used for another RU, if the parameter $s_i$ is calculated according to the foregoing formula (2-1), for the RU for which BPSK modulation is used, a quantity $N_{BPSCS,u,i}$ of coded bits of one data subcarrier for a spatial stream is output each time, and for the RU for which the another modulation scheme is used, half (that is, $N_{BPSCS,u,i}$/2) of a quantity $N_{BPSCS,u,i}$ of coded bits of one data subcarrier for a spatial stream is output each time. In this case, a frequency subblock corresponding to the RU for which BPSK modulation is used is completely occupied more quickly, causing uneven allocation.

Therefore, in this embodiment of this application, the parameter $s_i$ or an output frequency is modified, to eliminate a case of uneven allocation in which for an RU for which some modulation schemes (for example, BPSK modulation) are used, a quantity of coded bits of one data subcarrier for a spatial stream is output; and for another first RU for which another modulation scheme (for example, a modulation scheme other than BPSK modulation, such as QPSK modulation or 16QAM) is used, half of a quantity of coded bits of one data subcarrier for a spatial stream is output in a scenario of unequal MCSs.

Implementation 1.1: The parameter $s_i$ is modified.

During segment parsing, for an ith RU in ascending order of frequencies in the plurality of RUs included in the RU/MRU, or for a frequency subblock i, a quantity of bits output each time is determined based on the parameter $s_i$. For example, the parameter $s_i$ satisfies:

$$s_i = N_{BPSCS,u,i} \quad\text{................................................................................(2-2)}$$

Herein, u represents a user, and $N_{BPSCS,u,i}$ represents a quantity of coded bits per data subcarrier for each spatial stream of an $i^{th}$ RU for the user u, that is, a quantity of bits corresponding to a constellation point corresponding to each data subcarrier for each spatial stream of the $i^{th}$ RU for the user u. Herein, the quantity of bits corresponding to the constellation point corresponding to each data subcarrier, or the quantity of coded bits per data subcarrier, that is, $N_{BPSCS,u,i}$, is determined by an MCS corresponding to the $i^{th}$ RU.

It may be understood that, for any frequency subblock (for example, a first frequency subblock) in the plurality of frequency subblocks corresponding to the RU/MRU, if an RU included in the frequency subblock (for example, the first frequency subblock) is an $i^{th}$ RU in ascending order of frequencies in the plurality of RUs included in the RU/MRU, during segment parsing, a quantity of bits output for the frequency subblock (for example, the first frequency subblock) each time is determined based on a parameter $s_i$ corresponding to the $i^{th}$ RU, and $N_{BPSCS,u,i}$ in the parameter $s_i$ is determined by an MCS corresponding to the $i^{th}$ RU. It may be further understood that, if the frequency subblock (for example, the first frequency subblock) includes a plurality of RUs, for example, an $i^{th}$ RU and an $(i+1)^{th}$ RU in ascending order of frequencies in the plurality of RUs included in the RU/MRU, during segment parsing, a quantity of bits output for the frequency subblock (for example, the first frequency subblock) each time is determined based on parameters corresponding to the plurality of RUs (for example, a parameter $s_i$ corresponding to the $i^{th}$ RU and a parameter $s_{(i+1)}$ corresponding to the $(i+1)^{th}$ RU). In this way, a relationship between a quantity of bits output each time by each output branch of the segment parser and the parameter $s_i$ is still shown in Table 2, but $s_i$ (i is 1, 2, 3, or 4) in Table 2 satisfies the foregoing formula (2-2). Optionally, a modulation scheme corresponding to the $i^{th}$ RU may be different from a modulation scheme corresponding to the $(i+1)^{th}$ RU.

For example, using a 996+484-tone MRU as an example, the quantity ($m_0$ and $m_1$) of bits output each time by each output branch of the segment parser is shown in Table 5 below.

Table 5

| RU or MRU | RU order/RU order (low to high frequency low to high frequency) | Quantity $L$ of frequency subblocks | $m_0$ | $m_1$ |
|---|---|---|---|---|
| 996+484 | 484+996 | 2 | $s_1$ | $2s_2$ |
| | 996+484 | | $2s_1$ | $s_2$ |

Refer to FIG. 14. FIG. 14 is a diagram of input and output of a segment parser when different modulation schemes are used for a 996+484-tone MRU according to an embodiment of this application. FIG. 14 uses an example in which an RU order in the 996+484-tone MRU is 484+996. As shown in FIG. 14, BPSK modulation is used for a 484-tone RU in the 996+484-tone MRU, and $s_1$ calculated according to the foregoing formula (2-2) is equal to 1; and QPSK modulation is used for a 996-tone RU, and $s_2$ calculated according to the foregoing formula (2-2) is equal to 2. It is assumed that a $1^{st}$ output branch from top to bottom in FIG. 14 corresponds to the 484-tone RU, and a $2^{nd}$ output branch corresponds to the 996-tone RU. It can be learned from Table 5 that, the $1^{st}$ output branch outputs 1($s_1$) bits each time, and the $2^{nd}$ output branch outputs 4($2s_2$) bits each time. Therefore, for the 484-tone RU, 468 rounds of allocation are required to allocate all bits required by the 484-tone RU. For the 996-tone RU, after 468 rounds, a quantity of unallocated leftover bits is $980*N_{BPSCS,u,2}-(468)*2s_2=980*N_{BPSCS,u,2}-936s_2=44*N_{BPSCS,u,2}$. $s_2$ is equal to $N_{BPSCS,u,2}$.

It can be learned that, in this embodiment of this application, the parameter $s_i$ is modified, so that not only segment parsing for unequal MCSs including BPSK modulation can be supported, and spectrum utilization can be improved, but also leftover bits can be reduced, and a principle of even allocation can be basically complied with, thereby achieving a better frequency diversity gain.

It may be understood that, because there are leftover bits, after a frequency subblock is completely occupied, a ratio of quantities of bits output each time by a plurality of output branches of the segment parser changes. Details are not described again below. Values of $m_0$ and $m_1$ shown in Table 5 are obtained before a frequency subblock corresponding to the 484-tone RU is completely occupied. After the frequency subblock $l$ corresponding to the 484-tone RU is completely occupied, a value of $m_l$ corresponding to the frequency subblock $l$ corresponding to the 484-tone RU is 0.

Implementation 1.2: An output frequency is modified.

During segment parsing, for an $i^{th}$ RU in ascending order of frequencies in the plurality of RUs included in the RU/MRU, or for a frequency subblock i, a quantity of bits output each time is determined based on the parameter $s_i$. For example, the parameter $s_i$ satisfies the foregoing formula (2-1). However, when the MCS corresponding to the $i^{th}$ RU includes BSPK modulation, during segment parsing, a bit is output once every two rounds for the $i^{th}$ RU; and for another RU in the plurality of RUs (an MCS corresponding to the another RU does not include BPSK modulation), a bit is output once every round. It may be understood that "every round" or "every two rounds" herein is before an RU is completely occupied.

After an RU is completely occupied, no bit is output for the RU. It may be further understood that, if MCSs corresponding to two or three or more RUs in the plurality of RUs included in the RU/MRU include BPSK modulation, during segment parsing, for these RUs for which BPSK modulation is used, a bit is output once every two rounds; and for an RU for which another modulation scheme (such as QPSK modulation or 16QAM) is used, a bit is output once every round.

It may be understood that, for any frequency subblock (for example, a first frequency subblock) in the plurality of frequency subblocks corresponding to the RU/MRU, if an RU included in the frequency subblock (for example, the first frequency subblock) is an $i^{th}$ RU in ascending order of frequencies in the plurality of RUs included in the RU/MRU, during segment parsing, a quantity of bits output for the frequency subblock (for example, the first frequency subblock) each time is determined based on a parameter $s_i$ corresponding to the $i^{th}$ RU, and $N_{BPSCS,u,i}$ in the parameter $s_i$ is determined by an MCS corresponding to the $i^{th}$ RU. It may be further understood that, if the frequency subblock (for example, the first frequency subblock) includes a plurality of RUs, for example, an $i^{th}$ RU and an $(i+1)^{th}$ RU in ascending order of frequencies in the plurality of RUs included in the RU/MRU, during segment parsing, a quantity of bits output for the frequency subblock (for example, the first frequency subblock) each time is determined based on parameters corresponding to the plurality of RUs (for example, a parameter $s_i$ corresponding to the $i^{th}$ RU and a parameter $s_{(i+1)}$ corresponding to the $(i+1)^{th}$ RU). In this way, a relationship between a quantity of bits output each time by each output branch of the segment parser and the parameter $s_i$ is still shown in Table 2, and $s_i$ (i is 1, 2, 3, or 4) in Table 2 satisfies the foregoing formula (2-1). Optionally, a modulation scheme corresponding to the $i^{th}$ RU may be different from a modulation scheme corresponding to the $(i+1)^{th}$ RU.

It may be further understood that, if a frequency subblock (for example, the first frequency subblock) includes a plurality of RUs, for example, an $i^{th}$ RU and an $(i+1)^{th}$ RU in ascending order of frequencies in the plurality of RUs included in the RU/MRU, an MCS corresponding to the $i^{th}$ RU includes BPSK modulation, and an MCS corresponding to the $(i+1)^{th}$ RU includes another modulation scheme, during segment parsing, a bit is output once every two rounds for the $i^{th}$ RU; and during segment parsing, a bit is output once every round for the $(i+1)^{th}$ RU. Therefore, a quantity of bits output once for the frequency subblock (for example, the first frequency subblock) during segment parsing is determined based on the quantities of bits output every round for the two RUs.

For example, a 996+484+242-tone MRU is used as an example. A 484-tone RU and a 242-tone RU correspond to a same frequency subblock, and a 996-tone RU corresponds to another frequency subblock. It is assumed that an RU order in the 996+484+242-tone MRU is (242+484)+996. If an MCS corresponding to the 242-tone RU includes BPSK modulation, a bit is output once every two rounds for the 242-tone RU during segment parsing. It may also be understood that a bit is output once every round, but a quantity of bits output in one of every two rounds is 0, and a quantity of bits output in the other round is $s_1$. A reason is as follows: During BPSK modulation, $(N_{BPSCS,u,i}/2)$ is equal to 0.5. There is physical significance only when an output of the segment parser each time includes at least one bit. Therefore, output is not performed until there is one bit after two rounds of accumulation. If an MCS corresponding to the 484-tone RU includes 16QAM, a bit is output once every round for the 484-tone RU during segment parsing. For the 242-tone RU, a quantity of bits output in one of every two rounds is 0, and a quantity of bits output in the other round is $s_1$. Therefore, during segment parsing, for frequency subblocks corresponding to the 484-tone RU and the 242-tone RU, quantities of bits output by the segment parser are $(s_1+2s_2)$, $(2s_2)$, $(s_1+2s_2)$, $(2s_2)$, .... In other words, during segment parsing, for the frequency subblocks corresponding to the 484-tone RU and the 242-tone RU, quantities of bits output by the segment parser are alternately $(s_1+2s_2)$ and $(2s_2)$. During segment parsing, for the frequency subblock corresponding to the 996-tone RU, a quantity of bits output every round is $(4s_3)$, that is, quantities of bits output by the segment parser are $(4s_3)$, $(4s_3)$, $(4s_3)$, ....

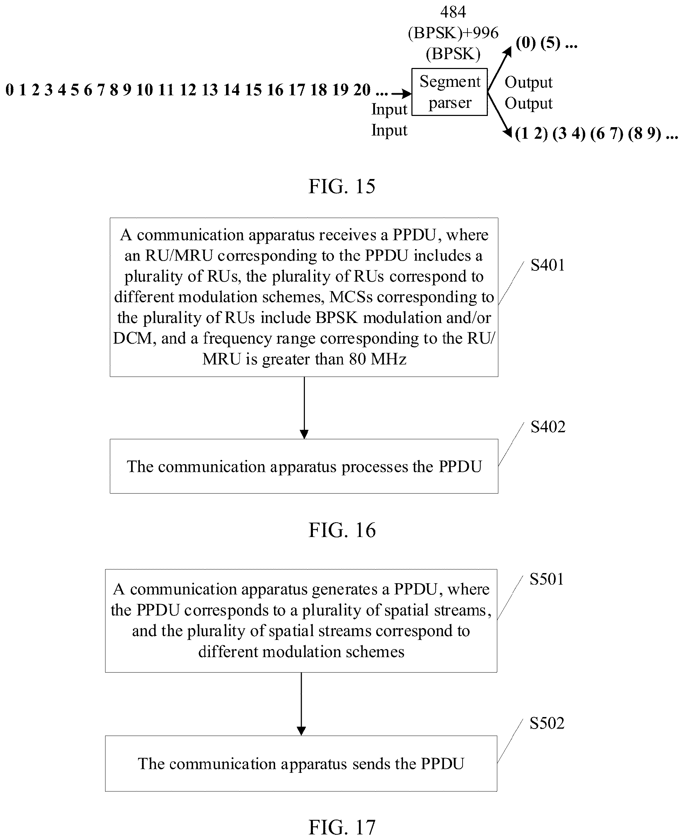

For another example, using a 996+484-tone MRU as an example, the quantity ($m_0$ and $m_1$) of bits output each time by each output branch of the segment parser is shown in Table 5 above. Refer to FIG. 15. FIG. 15 is another diagram of input and output of a segment parser when different modulation schemes are used for a 996+484-tone MRU according to an embodiment of this application. FIG. 15 uses an example in which an RU order in the 996+484-tone MRU is 484+996. As shown in FIG. 15, BPSK modulation is used for a 484-tone RU in the 996+484-tone MRU, and $s_1$ calculated according to the foregoing formula (2-1) is equal to 1. However, during segment parsing, a bit is output once every two rounds for the 484-tone RU. QPSK modulation is used for a 996-tone RU, and $s_2$ calculated according to the foregoing formula (2-1) is equal to 1. During segment parsing, a bit is output once every round for the 996-tone RU. It is assumed that a $1^{st}$ output branch from top to bottom in FIG. 15 corresponds to the 484-tone RU, and a $2^{nd}$ output branch corresponds to the 996-tone RU. In this case, it can be learned from Table 5 that, in a first round, the $1^{st}$ output branch outputs 1($s_1$) bits, and the $2^{nd}$ output branch outputs 2($2s_2$) bits; in a second round, the $1^{st}$ output branch does not output a bit or outputs 0 bits, and the $2^{nd}$ output branch outputs 2 bits; in a third round, the $1^{st}$ output branch outputs 1($s_1$) bits, and the $2^{nd}$ output branch outputs 2($2s_2$) bits; in a fourth round, the $1^{st}$ output branch does not output a bit or outputs 0 bits, and the $2^{nd}$ output branch outputs 2 bits; and so on.

It may be understood that, when BPSK modulation is used for the 484-tone RU, $s_1=1$, but a bit is output once every two rounds during segment parsing. Therefore, 468*2 rounds of allocation are needed to allocate all bits required by the 484-tone RU. For the 996-tone RU, after 468*2 rounds, a quantity of unallocated leftover bits is $980*N_{BPCS,u,2}-(468*2)*2s_2=980*N_{BPSCS,u,2}-936s_2=44*N_{BPSCS,u,2}$. $s_2$ is equal to $(N_{BPSCS,u,2}/2)$. When BPSK modulation is used for the 996-tone

RU, $s_2$=1, and a bit is output once every two rounds during segment parsing. For the 484-tone RU, half of $N_{BPSCS,u,1}$ bits are output every round. Therefore, 468*2 rounds are needed to allocate all bits required by the 484-tone RU. For the 996-tone RU, after 468*2 rounds, a quantity of unallocated leftover bits is $980*N_{BPSCS,u,2}-468*2s_2=44$, where $N_{BPSCS,u,2}$ and $s_2$ are both equal to 1.

It can be learned that, in this embodiment of this application, an output frequency of an RU for which BPSK modulation is used is modified, so that not only segment parsing for unequal MCSs including BPSK modulation can be supported, and spectrum utilization can be improved, but also leftover bits can be reduced, and a principle of even allocation can be basically complied with, thereby achieving a better frequency diversity gain.

Implementation 1.3: The method in Embodiment 1 is still used.

During segment parsing, for an $i^{th}$ RU in ascending order of frequencies in the plurality of RUs included in the RU/MRU, or for a frequency subblock i, a quantity of bits output each time is determined based on the parameter $s_i$. For example, the parameter $s_i$ satisfies the foregoing formula (2-1). It may be understood that, for any frequency subblock (for example, a first frequency subblock) in the plurality of frequency subblocks corresponding to the RU/MRU, if an RU included in the frequency subblock (for example, the first frequency subblock) is an $i^{th}$ RU in ascending order of frequencies in the plurality of RUs included in the RU/MRU, during segment parsing, a quantity of bits output for the frequency subblock (for example, the first frequency subblock) each time is determined based on a parameter $s_i$ corresponding to the $i^{th}$ RU, and $N_{BPSCS,u,i}$ in the parameter $s_i$ is determined by an MCS corresponding to the $i^{th}$ RU. It may be further understood that, if the frequency subblock (for example, the first frequency subblock) includes a plurality of RUs, for example, an $i^{th}$ RU and an $(i+1)^{th}$ RU in ascending order of frequencies in the plurality of RUs included in the RU/MRU, during segment parsing, a quantity of bits output for the frequency subblock (for example, the first frequency subblock) each time is determined based on parameters corresponding to the plurality of RUs (for example, a parameter $s_i$ corresponding to the $i^{th}$ RU and a parameter $s_{(i+1)}$ corresponding to the $(i+1)^{th}$ RU). In this way, a relationship between a quantity of bits output each time by each output branch of the segment parser and the parameter $s_i$ is still shown in Table 2. Optionally, a modulation scheme corresponding to the $i^{th}$ RU may be different from a modulation scheme corresponding to the $(i+1)^{th}$ RU.

For example, using a 996+484-tone MRU as an example, the quantity ($m_0$ and $m_1$) of bits output every round by each output branch of the segment parser is shown in Table 5 above. It is assumed that an RU order in the 996+484-tone MRU is 484+996. When BPSK modulation is used for the 484-tone RU, $s_1$=1, and 468 rounds of allocation are needed to allocate all bits required by the 484-tone RU. For the 996-tone RU, after 468 rounds, a quantity of unallocated leftover bits is $980*N_{BPSCS,u,2}-(468)*2s_2=980*N_{BPSCS,u,2}-468*N_{BPSCS,u,2}=512*N_{BPSCS,u,2}$, where $s_2$ is equal to ($N_{BPSCS,u,2}/2$). When BPSK modulation is used for the 996-tone RU, $s_2$=1, but for the 484-tone RU, 468*2 rounds of allocation are needed to allocate all bits required by the 484-tone RU. For the 996-tone RU, after 468*2 rounds, a quantity of unallocated leftover bits is $980*N_{BPSCS,u,2}-(468*2)*2s_2=980*N_{BPSCS,u,2}-936*N_{BPSCS,u,2}=44$, where $N_{BPSCS,u,2}$ is equal to 1.

It can be learned that, in this embodiment of this application, the method in Embodiment 1 is still used (that is, a meaning of the parameter s is modified, and the parameter $s_i$ is defined at a granularity of RU), so that segment parsing for unequal MCSs can be supported, thereby improving spectrum utilization.

2. An MCS corresponding to an RU in the plurality of RUs included in the RU/MRU includes both BPSK modulation and DCM.

It may be understood that, in 802.11be, DCM may be used together with only BPSK modulation (for example, EHT-MCS 15). DCM may be understood as halving a quantity of required subcarriers. That is, when DCM is used for a 26-tone RU (including 24 data subcarriers), a quantity of valid data subcarriers is 12. When DCM is used for a 242-tone RU, a quantity of valid data subcarriers is 234/2=117. When DCM is used for a 484+242-tone MRU, a quantity of valid data subcarriers is 351. When DCM is used for a 996-tone RU, a quantity of valid data subcarriers is 490. When an RU or MRU size is greater than 996 subcarriers (corresponding to 80 MHz), DCM performs an operation in every 80 MHz. For example, for the 484+996-tone MRU, if DCM is used, the 484-tone RU corresponds to 234 valid data subcarriers, and the 996-tone RU corresponds to 490 valid data subcarriers, and other RUs or MRUs are deduced by analogy, and are not enumerated one by one herein.

It can be learned that, when an MCS corresponding to an RU in the plurality of RUs included in the RU/MRU includes DCM, valid data subcarriers of the RU are halved. Consequently, the RU is completely occupied more quickly than another RU, resulting in uneven allocation.

Therefore, in this embodiment of this application, the parameter $s_i$ and/or the output frequency are/is modified, to eliminate a case of uneven allocation in which an RU for which DCM is used is completely occupied more quickly than another RU for which DCM is not used in a scenario of unequal MCSs.

Implementation 2.1: The parameter $s_i$ is modified + an output frequency is modified.

During segment parsing, for an $i^{th}$ RU in ascending order of frequencies in the plurality of RUs included in the RU/MRU, or for a frequency subblock i, a quantity of bits output each time is determined based on the parameter $s_i$. For example, the parameter $s_i$ satisfies the foregoing formula (2-2). In this way, a problem of excessive leftover bits caused by BPSK modulation in a case of unequal MCSs can be resolved. In addition, to resolve a problem that a quantity of valid data subcarriers is halved due to DCM, a method of outputting a bit once every two rounds may be used for an RU for which DCM is used during segment parsing. In this way, an output rate of an RU for which both BPSK modulation and DCM are used can be reduced to 1/4 of an original rate.

Specifically, for any frequency subblock (for example, a frequency subblock $l$) in the plurality of frequency subblocks corresponding to the RU/MRU, if an RU included in the frequency subblock (for example, the frequency subblock $l$) is an $i^{th}$ RU in ascending order of frequencies in the plurality of RUs included in the RU/MRU, during segment parsing, a quantity of bits output for the frequency subblock (for example, the frequency subblock $l$) each time is determined based on a parameter $s_i$, and a value of $N_{BPSCS,u,i}$ in the parameter $s_i$ is determined by an MCS corresponding to the $i^{th}$ RU.

For example, a 996+484-tone MRU is used as an example. It is assumed that an RU order in the 996+484-tone MRU is 484+996. If an MCS corresponding to a 484-tone RU includes BPSK modulation and DCM, $s_1$ calculated according to the foregoing formula (2-2) is equal to 1, and a bit is output once every two rounds for the 484-tone RU during segment parsing. It may also be understood that a bit is output once every round, but a quantity of bits output in one of every two rounds is 0, and a quantity of bits output in the other round is $s_1$. If an MCS corresponding to a 996-tone RU includes QPSK modulation, $s_2$ calculated according to the foregoing formula (2-2) is equal to 2. During segment parsing, a bit is output once every round for the 996-tone RU. For the 484-tone RU, a quantity of bits output in one of every two rounds is 0, and a quantity of bits output in the other round is $s_1$. Therefore, for a frequency subblock corresponding to the 484-tone RU, quantities of bits output by the segment parser are $s_1$, 0, $s_1$, 0, .... In other words, for the frequency subblock corresponding to the 484-tone RU, quantities of bits output by the segment parser are alternately $s_1$ and 0. For the frequency subblock corresponding to the 996-tone RU, a quantity of bits output every round is $(2s_2)$, that is, quantities of bits output by the segment parser are $(2s_2)$, $(2s_2)$, $(2s_2)$, ....

If a frequency subblock (for example, a first frequency subblock) in the plurality of frequency subblocks corresponding to the RU/MRU corresponds to a plurality of RUs, when an MCS corresponding to an RU (for example, an $i^{th}$ RU in ascending order of frequencies) corresponding to the frequency subblock (for example, the first frequency subblock) includes BPSK modulation and DCM, a bit is output once every two rounds for the $i^{th}$ RU during segment parsing; and for another RU (an MCS corresponding to the another RU does not include DCM) corresponding to the frequency subblock (for example, the first frequency subblock), a bit is output once every round for the another RU. Therefore, a quantity of bits output once for the frequency subblock (for example, the first frequency subblock) during segment parsing is determined based on quantities of bits output every round for a plurality of RUs corresponding to the frequency subblock. It may be understood that "every round" or "every two rounds" herein is before an RU is completely occupied. After an RU is completely occupied, no bit is output for the RU.

For example, a 996+484+242-tone MRU is used as an example. A 484-tone RU and a 242-tone RU correspond to a same frequency subblock, and a 996-tone RU corresponds to another frequency subblock. It is assumed that an RU order in the 996+484+242-tone MRU is (242+484)+996. If an MCS corresponding to a 242-tone RU includes BPSK modulation and DCM, $s_1$ calculated according to the foregoing formula (2-2) is equal to 1, and a bit is output once every two rounds for the 242-tone RU during segment parsing. It may also be understood that a bit is output once every round, but a quantity of bits output in one of every two rounds is 0, and a quantity of bits output in the other round is $s_1$. If an MCS corresponding to a 484-tone RU includes 16QAM, $s_2$ calculated according to the foregoing formula (2-2) is equal to 4. During segment parsing, a bit is output once every round for the 484-tone RU. For the 242-tone RU, a quantity of bits output in one of every two rounds is 0, and a quantity of bits output in the other round is $s_1$. Therefore, for frequency subblocks corresponding to the 484-tone RU and the 242-tone RU, quantities of bits output by the segment parser are $(s_1+2s_2)$, $(2s_2)$, $(s_1+2s_2)$, $(2s_2)$, .... In other words, during segment parsing, for the frequency subblocks corresponding to the 484-tone RU and the 242-tone RU, quantities of bits output by the segment parser are alternately $(s_1+2s_2)$ and $(2s_2)$. During segment parsing, for the frequency subblock corresponding to the 996-tone RU, a quantity of bits output every round is $(4s_3)$, that is, quantities of bits output by the segment parser are $(4s_3)$, $(4s_3)$, $(4s_3)$, ....

Implementation 2.2: Only an output frequency is modified.

During segment parsing, for an $i^{th}$ RU in ascending order of frequencies in the plurality of RUs included in the RU/MRU, or for a frequency subblock i, a quantity of bits output each time is determined based on the parameter $s_i$. For example, the parameter $s_i$ satisfies the foregoing formula (2-1). However, when the MCS corresponding to the $i^{th}$ RU includes BSPK modulation and DCM, during segment parsing, a bit is output once every four rounds for the $i^{th}$ RU; and during segment parsing, for another RU in the plurality of RUs (an MCS corresponding to the another RU includes neither BPSK modulation nor DCM), a bit is output once every round. It may be understood that "every round" or "every four rounds" herein is before an RU is completely occupied. After an RU is completely occupied, no bit is output for the RU. It may be further understood that, if MCSs corresponding to two or three or more RUs in the plurality of RUs included in the RU/MRU include BPSK modulation and DCM, during segment parsing, for these RUs for which BPSK modulation and DCM are used, a bit is output once every two rounds; and for an RU for which another modulation scheme (such as QPSK modulation or 16QAM) is used, a bit is output once every round.

For any frequency subblock (for example, a frequency subblock *l*) in the plurality of frequency subblocks corresponding to the RU/MRU, if an RU corresponding to the frequency subblock (for example, the frequency subblock *l*) is an $i^{th}$ RU in ascending order of frequencies in the plurality of RUs included in the RU/MRU, during segment parsing, a quantity of bits output for the frequency subblock (for example, the frequency subblock *l*) each time is determined based on a parameter $s_i$ corresponding to the $i^{th}$ RU, and a value of $N_{BPSCS,u,i}$ in the parameter $s_i$ is determined by an MCS corresponding to the $i^{th}$ RU.

For example, a 996+484-tone MRU is used as an example. It is assumed that an RU order in the 996+484-tone MRU is 484+996. If an MCS corresponding to a 484-tone RU includes BPSK modulation and DCM, $s_1$ calculated according to the foregoing formula (2-2) is equal to 1, and a bit is output once every four rounds for the 484-tone RU during segment parsing. It may also be understood that a bit is output once every round, but quantities of bits output in three of every four rounds are 0, and a quantity of bits output in the other round is $s_1$. If an MCS corresponding to a 996-tone RU includes QPSK modulation, $s_2$ calculated according to the foregoing formula (2-2) is equal to 2. During segment parsing, a bit is output once every round for the 996-tone RU. For the 484-tone RU, quantities of bits output in three of every four rounds are 0, and a quantity of bits output in the other round is $s_1$. Therefore, for a frequency subblock corresponding to the 484-tone RU, quantities of bits output by the segment parser are $s_1, 0, 0, 0, s_1, 0, 0, 0, ....$ For the frequency subblock corresponding to the 996-tone RU, a quantity of bits output every round is $(2s_2)$, that is, quantities of bits output by the segment parser are $(2s_2), (2s_2), (2s_2), ....$

If a frequency subblock (for example, a first frequency subblock) in the plurality of frequency subblocks corresponding to the RU/MRU corresponds to a plurality of RUs, when an MCS corresponding to an RU (for example, an $i^{th}$ RU in the plurality of RUs in ascending order of frequencies) corresponding to the frequency subblock (for example, the first frequency subblock) includes BPSK modulation and DCM, a bit is output once every four rounds for the $i^{th}$ RU during segment parsing; and for another RU (for example, an $(i+1)^{th}$ RU in the plurality of RUs in ascending order of frequencies, where an MCS corresponding to the another RU includes neither BPSK modulation nor DCM) corresponding to the frequency subblock (for example, the first frequency subblock), a bit is output once every round for the another RU. Therefore, a quantity of bits output once for the frequency subblock (for example, the first frequency subblock) during segment parsing is determined based on quantities of bits output every round for a plurality of RUs corresponding to the frequency subblock.

For example, a 996+484+242-tone MRU is used as an example. A 484-tone RU and a 242-tone RU correspond to a same frequency subblock, and a 996-tone RU corresponds to another frequency subblock. It is assumed that an RU order in the 996+484+242-tone MRU is (242+484)+996. If an MCS corresponding to a 242-tone RU includes BPSK modulation and DCM, $s_1$ calculated according to the foregoing formula (2-1) is equal to 1, and a bit is output once every four rounds for the 242-tone RU during segment parsing. It may also be understood that a bit is output once every round, but quantities of bits output in three of every four rounds are 0, and a quantity of bits output in the other round is $s_1$. If an MCS corresponding to a 484-tone RU includes 16QAM, $s_2$ calculated according to the foregoing formula (2-1) is equal to 2. During segment parsing, a bit is output once every round for the 484-tone RU. For the 242-tone RU, quantities of bits output in three of every four rounds are 0, and a quantity of bits output in the other round is $s_1$. Therefore, during segment parsing, for frequency subblocks corresponding to the 484-tone RU and the 242-tone RU, quantities of bits output by the segment parser are $(s_1+2s_2), (2s_2), (2s_2), (2s_2), (s_1+2s_2), (2s_2), (2s_2), (2s_2), ....$ During segment parsing, for the frequency subblock corresponding to the 996-tone RU, a quantity of bits output every round is $(4s_3)$, that is, quantities of bits output by the segment parser are $(4s_3), (4s_3), (4s_3), ....$

Implementation 2.3: Only the parameter $s_i$ is modified.

During segment parsing, for an $i^{th}$ RU in ascending order of frequencies in the plurality of RUs included in the RU/MRU, or for a frequency subblock i, a quantity of bits output each time is determined based on the parameter $s_i$. For example, the parameter $s_i$ satisfies:

$$s_i = 2N_{BPSCS,u,i}/(1+D) .............................................................................(2-3)$$

Meanings represented by u, i, and $N_{BPSCS,u,i}$ remain unchanged. For details, refer to the foregoing descriptions. Details are not described herein again. D is 1 when an MCS corresponding to the $i^{th}$ RU includes DCM; or D is 0 when an MCS corresponding to the $i^{th}$ RU does not include DCM. It may be understood that, when an MCS corresponding to at least one of the plurality of RUs included in the RU/MRU includes BPSK modulation, D in the foregoing formula (2-3) may be 0; or certainly, D may be 1. It may be further understood that, when an MCS corresponding to no RU in the plurality of RUs included in the RU/MRU includes BPSK modulation, D in the foregoing formula (2-3) is 1. That is, the foregoing formula (2-3) may be applicable to a scenario in which an MCS corresponding to an RU in the plurality of RUs included in the RU/MRU includes DCM, but no RU includes BPSK modulation; or may be applicable to a scenario in which an MCS corresponding to an RU in the plurality of RUs included in the RU/MRU includes both BSPK modulation and DCM; or may be applicable to a scenario in which an MCS corresponding to an RU in the plurality of RUs included in the RU/MRU includes BPSK modulation, but no RU includes DCM.

For any frequency subblock (for example, a first frequency subblock) in the plurality of frequency subblocks corresponding to the RU/MRU, if an RU included in the frequency subblock (for example, the first frequency subblock) is an $i^{th}$ RU in ascending order of frequencies in the plurality of RUs included in the RU/MRU, during segment parsing, a quantity of bits output for the frequency subblock (for example, the first frequency subblock) each time is determined based on a parameter $s_i$ corresponding to the $i^{th}$ RU, and $N_{BPSCS,u,i}$ in the parameter $s_i$ is determined by an MCS corresponding to the $i^{th}$ RU. It may be understood that, if the frequency subblock (for example, the first frequency subblock) includes a plurality of RUs, for example, an $i^{th}$ RU and an $(i+1)^{th}$ RU in ascending order of frequencies in the plurality of RUs included in the RU/MRU, during segment parsing, a quantity of bits output for the frequency subblock (for example, the first frequency subblock) each time is determined based on parameters corresponding to the plurality of RUs (for example, a parameter $s_i$ corresponding to the $i^{th}$ RU and a parameter $s_{(i+1)}$ corresponding to the $(i+1)^{th}$ RU). In this way, a relationship between a quantity of bits output each time by each output branch of the segment parser and the parameter $s_i$ is still shown in Table 2, but $s_i$ (i is 1, 2, 3, or 4) in Table 2 satisfies the foregoing formula (2-3). Optionally, a modulation scheme corresponding to the $i^{th}$ RU may be different from a modulation scheme corresponding to the $(i+1)^{th}$ RU.

3. An MCS corresponding to an RU in the plurality of RUs included in the RU/MRU includes DCM. Optionally, an MCS corresponding to no RU in the plurality of RUs included in the RU/MRU includes BPSK modulation.

As described above, when an MCS corresponding to an RU in the plurality of RUs included in the RU/MRU includes DCM, valid data subcarriers of the RU are halved, resulting in a case of uneven allocation in which an RU for which DCM is used is completely occupied more quickly than another RU for which DCM is not used. In this embodiment of this application, the parameter $s_i$ is modified or the output frequency is modified, to eliminate such a case of uneven allocation.

Implementation 3.1: The parameter $s_i$ is modified.

During segment parsing, for an $i^{th}$ RU in ascending order of frequencies in the plurality of RUs included in the RU/MRU, or for a frequency subblock i, a quantity of bits output each time is determined based on the parameter $s_i$. For example, the parameter $s_i$ satisfies:

$$s_i = \frac{2 \times \max(1, \frac{N_{BPSCS,u,i}}{2})}{1+D} = \frac{N_{BPSCS,u,i}}{1+D} \quad \text{.............................................................(2-4)}$$

Meanings represented by u, i, and $N_{BPSCS,u,i}$ remain unchanged. For details, refer to the foregoing descriptions. Details are not described herein again. D is 1 when an MCS corresponding to the $i^{th}$ RU includes DCM; or D is 0 when an MCS corresponding to the $i^{th}$ RU does not include DCM.

A relationship between a quantity $m_l$ of bits allocated to a frequency subblock $l$ each time during the segment parsing and a parameter $s_i$ is still shown in Table 2, but $s_i$ (i is 1, 2, 3, or 4) in Table 2 satisfies the foregoing formula (2-4). Details are not described herein again.

Implementation 3.2: An output frequency is modified.

During segment parsing, for an $i^{th}$ RU in ascending order of frequencies in the plurality of RUs included in the RU/MRU, or for a frequency subblock i, a quantity of bits output each time is determined based on the parameter $s_i$. For example, the parameter $s_i$ satisfies the foregoing formula (2-1). However, when the MCS corresponding to the $i^{th}$ RU includes DCM, during segment parsing, a bit is output once every two rounds for the $i^{th}$ RU; and for another RU in the plurality of RUs (an MCS corresponding to the another RU does not include DCM), a bit is output once every round. It may be understood that "every round" or "every two rounds" herein is before an RU is completely occupied. After an RU is completely occupied, no bit is output for the RU. It may be further understood that, if MCSs corresponding to two or three or more RUs in the plurality of RUs included in the RU/MRU include DCM, during segment parsing, for these RUs for which DCM is used, a bit is output once every two rounds; and for an RU for which another modulation scheme (such as QPSK modulation or 16QAM) is used, a bit is output once every round.

In this embodiment of this application, in a scenario of unequal MCSs, when an MCS corresponding to an RU includes BPSK modulation and/or DCM, the parameter $s_i$ is redefined and/or the output frequency is modified, so that different modulation schemes can be used for different RUs, and segment parsing in a scenario of unequal MCSs is supported. This improves spectrum utilization, reduces leftover bits caused by BPSK modulation, and resolves a problem of halving a quantity of valid data subcarriers due to DCM, thereby achieving a better frequency diversity gain.

FIG. 12 describes the PPDU-based communication method at the transmit end. The following describes a PPDU-based communication method at a receive end. Refer to FIG. 16. FIG. 16 is a fourth schematic flowchart of a PPDU-based communication method according to an embodiment of this application. FIG. 16 shows a PPDU-based communication method at a receive end corresponding to FIG. 12. As shown in FIG. 16, the PPDU-based communication method includes but is not limited to the following steps.

S401: A communication apparatus receives a PPDU, where an RU/MRU corresponding to the PPDU includes a plurality of RUs, the plurality of RUs correspond to different modulation schemes, MCSs corresponding to the plurality of RUs include BPSK modulation and/or DCM, and a frequency range corresponding to the RU/MRU is greater than 80 MHz.

S402: The communication apparatus processes the PPDU.

In a possible implementation, a method for processing the PPDU by the receive end is an inverse process of a method for generating the PPDU by the transmit end. For example, the PPDU includes a data field (DATA field). A method for processing the data field by the communication apparatus is an inverse process of a method for generating the data field, and details are not described herein. This embodiment of this application mainly focuses on an inverse operation corresponding to a segment parser (segment parser) in a data field processing process. For example, that the communication apparatus processes the data field includes: The communication apparatus obtains a plurality of frequency subblocks corresponding to the RU/MRU, and combines bits corresponding to the plurality of frequency subblocks (on one spatial stream) into one spatial stream. It may be understood that, in this embodiment of this application, the RU/MRU corresponding to the PPDU is learned in advance by the transmit end and the receive end, for example, learned through pre-negotiation or pre-configuration.

In a possible implementation, because segment combination at the receive end is an inverse process of segment parsing at the transmit end, for an $i^{th}$ RU in ascending order of frequencies in the plurality of RUs included in the RU/MRU, a quantity of bits obtained from bits corresponding to the $i^{th}$ RU each time is the same as a quantity of bits output by the transmit end for the $i^{th}$ RU each time. In this case, the quantity of bits obtained from the bits corresponding to the $i^{th}$ RU each time is also determined based on the parameter $s_i$, and $N_{BPSCS,u,i}$ in the parameter $s_i$ is determined by an MCS corresponding to the $i^{th}$ RU. It may be understood that, if the transmit end outputs a bit once every m rounds for an RU during segment parsing, the receive end correspondingly obtains a bit once every m rounds from bits corresponding to the RU. A value of m is a positive integer.

This embodiment of this application provides a manner of processing the PPDU by the receive end, to ensure that the receive end can correctly obtain data.

Embodiment 3

In a possible implementation, Embodiment 3 of this application may be separately implemented, or may be implemented in combination with Embodiment 1 or Embodiment 2. This is not limited in this application.

Refer to FIG. 17. FIG. 17 is a fifth schematic flowchart of a PPDU-based communication method according to an embodiment of this application. FIG. 17 shows a PPDU-based communication procedure at a transmit end. As shown in FIG. 17, the PPDU-based communication method includes but is not limited to the following steps.

S501: A communication apparatus generates a PPDU, where the PPDU corresponds to a plurality of spatial streams, and the plurality of spatial streams correspond to different modulation schemes. In this embodiment of this application, different modulation schemes are used for different spatial streams, so that spectrum utilization can be improved.

S502: The communication apparatus sends the PPDU.

In a possible implementation, the communication apparatus generates and sends the PPDU. The PPDU includes a data field (DATA field). This embodiment of this application mainly focuses on a design of a stream parser (stream parser) in a data field generation process. The stream parser may divide a bit stream output by an encoder into a plurality of spatial streams. The following mainly describes the design of the stream parser in this embodiment of this application.

Although the stream parser and the segment parser are used in different scenarios, the stream parser may also use the parameter s to divide a string of bit streams into a plurality of spatial streams. For example, during stream parsing, a quantity of bits output every round for each spatial stream is equal to the parameter s. In a possible implementation, the PPDU corresponds to a plurality of spatial streams, and modulation schemes corresponding to at least two of the plurality of spatial streams are different. In this case, during stream parsing, a quantity of bits output each time for an $i^{th}$ spatial stream in the plurality of spatial streams may be equal to a parameter $s_i$, where the parameter $s_i$ satisfies the foregoing formula (2-1), and $N_{BPSCS,u,i}$ may represent a quantity of coded bits per data subcarrier for an $i^{th}$ spatial stream of a user u. $N_{BPSCS,u,i}$ is determined by an MCS corresponding to the $i^{th}$ spatial stream. For example, if the MCS corresponding to the

$i^{th}$ spatial stream includes BPSK modulation, a value of $N_{BPSCS,u,i}$ is 1; if the MCS corresponding to the $i^{th}$ spatial stream includes QPSK modulation, a value of $N_{BPSCS,u,i}$ is 2; if the MCS corresponding to the $i^{th}$ spatial stream includes 16QAM, a value of $N_{BPSCS,u,i}$ is 4; or if the MCS corresponding to the $i^{th}$ spatial stream includes 64QAM, a value of $N_{BPSCS,u,i}$ is 6.

It may be understood that one of differences between this embodiment of this application and the foregoing Embodiment 1 and Embodiment 2 is that each stream corresponds to a same quantity of subcarriers. Therefore, there is no leftover bit when BPSK modulation and DCM are not used. For a case in which BPSK modulation and/or DCM are/is used, a method similar to that in Embodiment 2 may be used. For details, refer to the following.

In a possible implementation, modulation schemes corresponding to at least two spatial streams in the plurality of spatial streams are different, and an MCS corresponding to at least one of the plurality of spatial streams includes BPSK modulation and/or DCM. Discussion is performed in different cases below.

1. An MCS corresponding to at least one of the plurality of spatial streams includes BPSK modulation. Optionally, an MCS corresponding to no spatial stream in the plurality of spatial streams includes DCM.

As described in the foregoing Embodiment 2, when an MCS corresponding to at least one of the plurality of spatial streams includes BPSK modulation, and an MCS corresponding to another spatial stream includes another modulation scheme, if the parameter $s_i$ is calculated according to the foregoing formula (2-1), even if each stream corresponds to a same quantity of subcarriers, a leftover bit still exists. For example, the user u has four spatial streams in total, an MCS corresponding to a $1^{st}$ spatial stream includes BPSK modulation, and MCSs corresponding to the other spatial streams all include QPSK modulation. In this case, through calculation according to the foregoing formula (2-1), quantities of bits allocated to the four spatial streams each time are 1:1:1:1. The MCS corresponding to the $1^{st}$ spatial stream includes BPSK modulation. In this case, during stream parsing, a quantity of bits output each time for the $1^{st}$ spatial stream is $N_{BPSCS,u,1}$, and a quantity of bits output each time for another spatial stream is ($N_{BPSCS,u,i}/2$). In addition, because each stream corresponds to a same quantity of subcarriers, a total quantity of bits required by the $1^{st}$ spatial stream is less than a total quantity of bits required by another spatial stream. In this case, after the $1^{st}$ spatial stream is completely occupied, there are still subcarriers that are not occupied in the another spatial stream, and there are leftover bits.

To resolve a problem of leftover bits caused by BPSK modulation in unequal MCSs, in this embodiment of this application, the parameter $s_i$ is modified or an output frequency is modified, to eliminate the leftover bits caused by BPSK modulation.

In a possible implementation, during stream parsing, for an $i^{th}$ spatial stream in the plurality of spatial streams, a quantity of bits output each time is equal to a parameter $s_i$, and the parameter $s_i$ is equal to $N_{BPSCS,u,i}$, that is, the foregoing formula (2-2). In other words, the parameter $s_i$ is a quantity of coded bits per data subcarrier for the $i^{th}$ spatial stream, that is, a quantity of bits corresponding to a constellation point corresponding to each data subcarrier in the $i^{th}$ spatial stream. In other words, the quantity of bits allocated to the $i^{th}$ spatial stream each time is the quantity of coded bits per data subcarrier for the $i^{th}$ spatial stream. In this embodiment of this application, the parameter $s_i$ is modified to be equal to $N_{BPSCS,u,i}$. In unequal MCSs, when BPSK modulation is used for at least one stream, there is no leftover bit, and an even allocation principle is complied with, so that a better frequency diversity gain can be obtained.

In another possible implementation, during stream parsing, for an $i^{th}$ spatial stream in the plurality of spatial streams, a quantity of bits output each time is equal to a parameter $s_i$, and the parameter $s_i$ satisfies the foregoing formula (2-1). However, if an MCS corresponding to one or more spatial streams in the plurality of spatial streams includes BPSK modulation, during stream parsing, a bit is output once every two rounds for the one or more spatial streams, and a bit is output once every round for a spatial stream other than the one or more spatial streams in the plurality of spatial streams (an MCS corresponding to the another spatial stream does not include BPSK modulation). A reason is as follows: During BPSK modulation, ($N_{BPSCS,u,i}/2$) is equal to 0.5. There is physical significance only when an output of the stream parser each time includes at least one bit. Therefore, output is not performed until there is one bit after two rounds of accumulation.

2. An MCS corresponding to at least one of the plurality of spatial streams includes BPSK modulation and DCM.

As described in the foregoing Embodiment 2, when an MCS corresponding to at least one spatial stream in the plurality of spatial streams includes DCM, valid data subcarriers of the at least one spatial stream are halved, and a quantity of valid data subcarriers of another spatial stream remains unchanged. Consequently, the at least one spatial stream is completely occupied more quickly than the another spatial stream, causing uneven allocation.

To resolve a problem of leftover bits caused by BPSK modulation and a problem of halving valid data subcarriers due to DCM in unequal MCSs, in this embodiment of this application, the parameter $s_i$ is modified and/or the output frequency is modified, to eliminate impact of leftover bits caused by BPSK modulation and halving valid data subcarriers due to DCM.

In a possible implementation, in 802.11be, DCM may be used together with only BPSK modulation (for example, EHT-MCS 15). If an MCS corresponding to one or more spatial streams in the plurality of spatial streams includes BPSK modulation and DCM, during stream parsing, a bit is output once every two rounds for the one or more spatial streams, and a bit is output once every round for a spatial stream other than the one or more spatial streams in the plurality of spatial streams (an MCS corresponding to the another spatial stream does not include DCM). In addition, during stream parsing, for an $i^{th}$ spatial stream in the plurality of spatial streams, a quantity of bits output each time is equal to a parameter $s_i$, and the parameter $s_i$ is equal to $N_{BPSCS,u,i}$, that is, the foregoing formula (2-2). In other words, the parameter $s_i$ is a quantity of coded bits per data subcarrier for the $i^{th}$ spatial stream, that is, a quantity of bits corresponding to a constellation point corresponding to each data subcarrier in the $i^{th}$ spatial stream. The quantity of bits allocated to the $i^{th}$ spatial stream each time is the quantity of coded bits per data subcarrier for the $i^{th}$ spatial stream.

In another possible implementation, during stream parsing, for an $i^{th}$ spatial stream in the plurality of spatial streams, a quantity of bits output each time is equal to a parameter $s_i$, and the parameter $s_i$ satisfies the foregoing formula (2-1). However, if an MCS corresponding to one or more spatial streams in the plurality of spatial streams includes BPSK modulation and DCM, during stream parsing, a bit is output once every four rounds for the one or more spatial streams, and a bit is output once every round for a spatial stream other than the one or more spatial streams in the plurality of spatial streams (an MCS corresponding to the another spatial stream includes neither BPSK modulation nor DCM).

In another possible implementation, during stream parsing, for an $i^{th}$ spatial stream in the plurality of spatial streams, a quantity of bits output each time is equal to a parameter $s_i$, and the parameter $s_i$ satisfies the foregoing formula (2-3). D is 1 when an MCS corresponding to the $i^{th}$ spatial stream includes DCM; or D is 0 when an MCS corresponding to the $i^{th}$ spatial stream does not include DCM. It may be understood that, when an MCS corresponding to at least one spatial stream in the plurality of spatial streams includes BPSK modulation, D in the foregoing formula (2-3) may be 0; or certainly, D may be 1. It may be further understood that, when an MCS corresponding to no spatial stream in the plurality of spatial streams includes BPSK modulation, D in the foregoing formula (2-3) is 1. In other words, the foregoing formula (2-3) may be applicable to a scenario in which an MCS corresponding to a spatial stream in the plurality of spatial streams includes DCM but no spatial stream includes BPSK modulation; or may be applicable to a scenario in which an MCS corresponding to a spatial stream in the plurality of spatial streams includes both BSPK modulation and DCM; or may be applicable to a scenario in which an MCS corresponding to a spatial stream in the plurality of spatial streams includes BPSK modulation but no spatial stream includes DCM.

3. An MCS corresponding to at least one of the plurality of spatial streams includes DCM. Optionally, an MCS corresponding to no spatial stream in the plurality of spatial streams includes BPSK modulation.

In a possible implementation, during stream parsing, for an $i^{th}$ spatial stream in the plurality of spatial streams, a quantity of bits output each time is equal to a parameter $s_i$, and the parameter $s_i$ satisfies the foregoing formula (2-4). D is 1 when an MCS corresponding to the $i^{th}$ spatial stream includes DCM; or D is 0 when an MCS corresponding to the $i^{th}$ spatial stream does not include DCM.

In another possible implementation, during stream parsing, for an $i^{th}$ spatial stream in the plurality of spatial streams, a quantity of bits output each time is equal to a parameter $s_i$, and the parameter $s_i$ uses the foregoing formula (2-1). However, if an MCS corresponding to one or more spatial streams in the plurality of spatial streams includes DCM, during stream parsing, a bit is output once every two rounds for the one or more spatial streams, and a bit is output once every round for a spatial stream other than the one or more spatial streams in the plurality of spatial streams (an MCS corresponding to the another spatial stream does not include DCM).

In conclusion, in embodiments of this application, the parameter $s_i$ is redefined, the output frequency is modified, and/or the like, so that different modulation schemes can be used for different spatial streams, to support stream parsing in a scenario of unequal MCSs, improve spectrum utilization, and conform to an even allocation principle, thereby achieving a better frequency diversity gain.

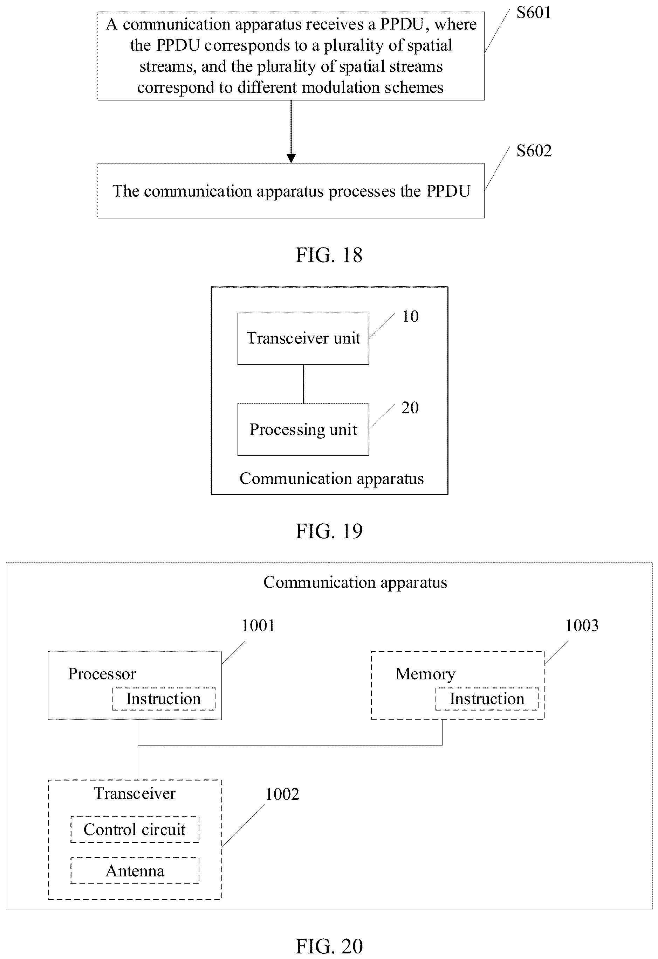

FIG. 17 describes the PPDU-based communication method at the transmit end. The following describes a PPDU-based communication method at a receive end. Refer to FIG. 18. FIG. 18 is a sixth schematic flowchart of a PPDU-based communication method according to an embodiment of this application. FIG. 18 shows a PPDU-based communication method at a receive end corresponding to FIG. 17. As shown in FIG. 18, the PPDU-based communication method includes but is not limited to the following steps.

S601: A communication apparatus receives a PPDU, where the PPDU corresponds to a plurality of spatial streams, and the plurality of spatial streams correspond to different modulation schemes.

S602: The communication apparatus processes the PPDU.

In a possible implementation, a method for processing the PPDU by the receive end is an inverse process of a method for generating the PPDU by the transmit end. For example, the PPDU includes a data field (DATA field). A method for processing the data field by the communication apparatus is an inverse process of a method for generating the data field, and details are not described herein. This embodiment of this application mainly focuses on an inverse operation corresponding to a stream parser (stream parser) in a data field processing process. For example, that the communication apparatus processes the data field includes: The communication apparatus obtains a plurality of spatial streams, and combines the plurality of spatial streams into a string of data bit streams.

In a possible implementation, because stream combination at the receive end is an inverse process of stream parsing at the transmit end, during stream combination, for an $i^{th}$ spatial stream in the plurality of spatial streams, a quantity of bits obtained from the $i^{th}$ spatial stream each time is the same as a quantity of bits output by the transmit end for the $i^{th}$

spatial stream each time, and both are equal to a parameter $s_i$. For an implementation of the parameter $s_i$, refer to the descriptions in the method shown in FIG. 17. It may be understood that, if the transmit end outputs a bit once every m rounds for a spatial stream during stream parsing, the receive end correspondingly obtains a bit once every m rounds from the spatial stream. A value of m is a positive integer.

This embodiment of this application provides a manner of processing the PPDU by the receive end, to ensure that the receive end can correctly obtain data.

The foregoing content describes in detail the method provided in this application. To facilitate implementation of the foregoing solutions in embodiments of this application, embodiments of this application further provide a corresponding apparatus or device.

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that division into the modules in this application is an example, and is merely logical function division. In actual implementation, there may be another division manner. The following describes in detail communication apparatuses in embodiments of this application with reference to FIG. 19 to FIG. 21.

Refer to FIG. 19. FIG. 19 is a diagram of a structure of a communication apparatus according to an embodiment of this application. As shown in FIG. 19, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface or a communication unit.

In some embodiments of this application, the communication apparatus may be configured to perform the steps, the functions, or the like performed by the communication apparatus at the transmit end in the foregoing method embodiments. For example, the communication apparatus may be an AP or a STA, or a chip or a functional module configured in the AP or the STA. This is not limited in embodiments of this application.

For example, the processing unit 20 is configured to generate a PPDU, where an RU/MRU corresponding to the PPDU includes a plurality of RUs, and a frequency range corresponding to the RU/MRU is greater than 80 MHz; and the transceiver unit 10 is configured to send or output the PPDU.

The plurality of RUs correspond to a plurality of MCSs, modulation schemes in the plurality of MCSs are different, and the plurality of MCSs include BPSK modulation; and during segment parsing, for an $i^{th}$ RU in the plurality of RUs, a quantity of bits output each time is determined based on a parameter $s_i$, and the parameter $s_i$ satisfies:

$$s_i = N_{BPSCS,u,i} \, .$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

It may be understood that the transceiver unit 10 may send the PPDU to another communication apparatus, or the transceiver unit 10 outputs the PPDU from the processing unit 20 to another component, another functional module, or the like in the communication apparatus. Related descriptions of outputting other information by the transceiver unit are similar. Details are not described below again.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a 1st RU is a 242-tone RU, a 2nd RU is a 484-tone RU, and a 3rd RU is a 996-tone RU in ascending order of frequencies. The first frequency subblock in the plurality of frequency subblocks corresponding to the 996+484+242-tone MRU includes the 1st RU and the 2nd RU, and a second frequency subblock in the plurality of frequency subblocks corresponding to the 996+484+242-tone MRU includes the 3rd RU. The 1st RU corresponds to a parameter $s_1$, the 2nd RU corresponds to a parameter $s_2$, and the 3rd RU corresponds to a parameter $s_3$. During segment parsing, the quantity of bits output for the first frequency subblock each time is equal to $s_1 + 2s_2$, and a quantity of bits output for the second frequency subblock each time is equal to $4s_3$.

For example, the plurality of RUs include a first RU, and an MCS corresponding to the first RU includes BPSK modulation and DCM. During segment parsing, a bit is output once every two rounds for the first RU.

It may be understood that, for specific descriptions of the PPDU, the $i^{th}$ RU, the parameter $s_i$, the frequency

subblock, the segment parsing, and the like, refer to the foregoing method Embodiment 2, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 2 (as shown in FIG. 12). Details are not described herein again.

For example, the processing unit 20 is configured to generate a PPDU, where an RU/MRU corresponding to the PPDU includes a plurality of RUs, and a frequency range corresponding to the RU/MRU is greater than 80 MHz; and the transceiver unit 10 is configured to send or output the PPDU.

The plurality of RUs correspond to a plurality of MCSs, and modulation schemes in the plurality of MCSs are different.

During segment parsing, for an $i^{th}$ RU in the plurality of RUs, a quantity of bits output each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

When the MCS corresponding to the $i^{th}$ RU includes binary phase shift keying BPSK modulation or dual carrier modulation DCM, a bit is output once every two rounds for the $i^{th}$ RU.

Alternatively, when the MCS corresponding to the $i^{th}$ RU includes BPSK modulation and DCM, a bit is output once every four rounds for the $i^{th}$ RU.

For example, an MCS corresponding to each of other RUs than the $i^{th}$ RU in the plurality of RUs includes neither BPSK modulation nor DCM, and a bit is output once every round for the other RUs during segment parsing.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs. During segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter $s_3$. During segment parsing, the quantity of bits output for the first frequency subblock each time is equal to $s_1+2s_2$, and a quantity of bits output for the second frequency subblock each time is equal to $4s_3$.

It may be understood that, for specific descriptions of the PPDU, the $i^{th}$ RU, the parameter $s_i$, the frequency subblock, the segment parsing, and the like, refer to the foregoing method Embodiment 2, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 2 (as shown in FIG. 12). Details are not described herein again.

For example, the processing unit 20 is configured to generate a PPDU, where an RU/MRU corresponding to the PPDU includes a plurality of RUs, and a frequency range corresponding to the RU/MRU is greater than 80 MHz; and the transceiver unit 10 is configured to send or output the PPDU.

The plurality of RUs correspond to a plurality of modulation and coding schemes MCSs, modulation schemes in the plurality of MCSs are different, and the plurality of MCSs include binary phase shift keying BPSK modulation and/or dual carrier modulation DCM; and during segment parsing, for an $i^{th}$ RU in the plurality of RUs, a quantity of bits output each time is determined based on a parameter $s_i$, and the parameter $s_i$ satisfies:

$$s_i = 2N_{BPSCS,u,i}/(1+D).$$

$N_{BPSCS,u,i}$ represents a quantity of coded bits per data subcarrier for each spatial stream of an $i^{th}$ RU for a user u, a value of $N_{BPSCS,u,i}$ is determined based on an MCS corresponding to the $i^{th}$ RU, and D is 1 when the MCS corresponding to the $i^{th}$ RU includes DCM, or D is 0 when the MCS corresponding to the $i^{th}$ RU does not include DCM.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs. During segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter $s_3$. During segment parsing, the quantity of bits output for the first frequency subblock each time is equal to $s_1+2s_2$, and a quantity of bits output for the second frequency subblock each time is equal to $4s_3$.

It may be understood that, for specific descriptions of the PPDU, the $i^{th}$ RU, the parameter $s_i$, the frequency subblock, the segment parsing, and the like, refer to the foregoing method Embodiment 2, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 2 (as shown in FIG. 12). Details are not described herein again.

For example, the processing unit 20 is configured to generate a PPDU, where an RU/MRU corresponding to the PPDU includes a plurality of RUs, and a frequency range corresponding to the RU/MRU is greater than 80 MHz; and the transceiver unit 10 is configured to send or output the PPDU.

The plurality of RUs correspond to a plurality of modulation and coding schemes MCSs, and modulation schemes in the plurality of MCSs are different; and during segment parsing, for an $i^{th}$ RU in the plurality of RUs, a quantity of bits output each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

For example, an MCS corresponding to each of the plurality of RUs includes neither BPSK modulation nor DCM.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs. During segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter $s_3$. During segment parsing, the quantity of bits output for the first frequency subblock each time is equal to $s_1+2s_2$, and a quantity of bits output for the second frequency subblock each time is equal to $4s_3$.

It may be understood that, for specific descriptions of the PPDU, the $i^{th}$ RU, the parameter $s_i$, the frequency subblock, the segment parsing, and the like, refer to the foregoing method Embodiment 1, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 1 (as shown in FIG. 9). Details are not described herein again.

FIG. 19 is reused. In some other embodiments of this application, the communication apparatus may be configured to perform the steps, the functions, or the like performed by the communication apparatus at the receive end in the foregoing method embodiments. For example, the communication apparatus may be an AP or a STA, or a chip or a functional module configured in the AP or the STA. This is not limited in embodiments of this application.

For example, the transceiver unit 10 is configured to receive or input a PPDU, where a resource unit RU/multiple resource unit MRU corresponding to the PPDU includes a plurality of RUs, and a frequency range corresponding to the RU/MRU is greater than 80 MHz; and the processing unit 20 is configured to process the PPDU.

The plurality of RUs correspond to a plurality of modulation and coding schemes MCSs, modulation schemes in the plurality of MCSs are different, and the plurality of MCSs include binary phase shift keying BPSK modulation; and during segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = N_{BPSCS,u,i}.$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment parsing, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter $s_3$. During segment combination, the quantity of bits obtained from the bits corresponding to the first frequency subblock each time is equal to $s_1+2s_2$, and a quantity of bits obtained from bits corresponding to the second frequency subblock each time is equal to $4s_3$.

For example, the plurality of RUs include a first RU, and an MCS corresponding to the first RU includes BPSK modulation and DCM. During segment combination, a bit is obtained once every two rounds from bits corresponding to the first RU.

It may be understood that, for specific descriptions of the PPDU, the $i^{th}$ RU, the parameter $s_i$, the frequency subblock, the segment combination, and the like, refer to the foregoing method Embodiment 2, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 2 (as shown in FIG. 16). Details are not described herein again.

For example, the transceiver unit 10 is configured to receive or input a PPDU, where a resource unit RU/multiple resource unit MRU corresponding to the PPDU includes a plurality of RUs, and a frequency range corresponding to the RU/MRU is greater than 80 MHz; and the processing unit 20 is configured to process the PPDU.

The plurality of RUs correspond to a plurality of MCSs, and modulation schemes in the plurality of MCSs are different.

During segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

When the MCS corresponding to the $i^{th}$ RU includes BPSK modulation or dual carrier modulation DCM, a bit is obtained once every two rounds from the bits corresponding to the $i^{th}$ RU.

Alternatively, when the MCS corresponding to the $i^{th}$ RU includes BPSK modulation and DCM, a bit is obtained once every four rounds from the bits corresponding to the $i^{th}$ RU.

For example, an MCS corresponding to each of other RUs than the $i^{th}$ RU in the plurality of RUs includes neither BPSK modulation nor DCM, and a bit is obtained once every round from bits corresponding to the other RUs during segment parsing.

For example, an MCS corresponding to each of other RUs than the $i^{th}$ RU in the plurality of RUs includes neither BPSK modulation nor DCM, and a bit is obtained once every round from bits corresponding to the other RUs during segment parsing.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter $s_3$. During segment combination, the quantity of bits obtained from the bits corresponding to the first frequency subblock each time is equal to $s_1+2s_2$, and a quantity of bits obtained from bits corresponding to the second frequency subblock each time is equal to $4s_3$.

It may be understood that, for specific descriptions of the PPDU, the $i^{th}$ RU, the parameter $s_i$, the frequency subblock, the segment combination, and the like, refer to the foregoing method Embodiment 2, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 2 (as shown in FIG. 16). Details are not described herein again.

For example, the transceiver unit 10 is configured to receive or input a PPDU, where a resource unit RU/multiple resource unit MRU corresponding to the PPDU includes a plurality of RUs, and a frequency range corresponding to the RU/MRU is greater than 80 MHz; and the processing unit 20 is configured to process the PPDU.

The plurality of RUs correspond to a plurality of MCSs, modulation schemes in the plurality of MCSs are different, and the plurality of MCSs include BPSK modulation and/or DCM; and during segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = 2N_{BPSCS,u,i}\big/(1+D)\,.$$

$N_{BPSCS,u,i}$ represents a quantity of coded bits per data subcarrier for each spatial stream of an $i^{th}$ RU for a user u, a value of $N_{BPSCS,u,i}$ is determined based on an MCS corresponding to the $i^{th}$ RU, and D is 1 when the MCS corresponding to the $i^{th}$ RU includes DCM, or D is 0 when the MCS corresponding to the $i^{th}$ RU does not include DCM.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter $s_3$. During segment combination, the quantity of bits obtained from the bits corresponding to the first frequency subblock each time is equal to $s_1+2s_2$, and a quantity of bits obtained from bits corresponding to the second frequency subblock each time is equal to $4s_3$.

It may be understood that, for specific descriptions of the PPDU, the $i^{th}$ RU, the parameter $s_i$, the frequency subblock, the segment combination, and the like, refer to the foregoing method Embodiment 2, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 2 (as shown in FIG. 16). Details are not described herein again.

For example, the transceiver unit 10 is configured to receive or input a PPDU, where a resource unit RU/multiple resource unit MRU corresponding to the PPDU includes a plurality of RUs, and a frequency range corresponding to the RU/MRU is greater than 80 MHz; and the processing unit 20 is configured to process the PPDU.

The plurality of RUs correspond to a plurality of MCSs, and modulation schemes in the plurality of MCSs are different; and during segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = \max(1, \frac{N_{BPSCS,u,i}}{2}).$$

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

For example, an MCS corresponding to each of the plurality of RUs includes neither BPSK modulation nor DCM.

For example, the RU/MRU corresponds to a plurality of frequency subblocks, and a first frequency subblock in the plurality of frequency subblocks includes the $i^{th}$ RU and an $(i+1)^{th}$ RU in the plurality of RUs; and during segment parsing, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

For example, a modulation scheme corresponding to the $i^{th}$ RU is different from a modulation scheme corresponding to the $(i+1)^{th}$ RU.

For example, the RU/MRU is a 996+484+242-tone MRU. In the plurality of RUs included in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies. The first frequency subblock in the plurality of frequency subblocks corresponding to the 996+484+242-tone MRU includes the $1^{st}$ RU and the $2^{nd}$ RU, and a second frequency subblock in the plurality of frequency subblocks corresponding to the 996+484+242-tone MRU includes the $3^{rd}$ RU. The $1^{st}$ RU corresponds to a parameter $s_1$, the $2^{nd}$ RU corresponds to a parameter $s_2$, and the $3^{rd}$ RU corresponds to a parameter $s_3$. During segment parsing, the quantity of bits obtained from the bits corresponding to the first frequency subblock each time is equal to $s_1+2s_2$, and a quantity of bits obtained from bits corresponding to the second frequency subblock each time is equal to $4s_3$.

It may be understood that, for specific descriptions of the PPDU, the $i^{th}$ RU, the parameter $s_i$, the frequency subblock, the segment combination, and the like, refer to the foregoing method Embodiment 1, and details are not described herein again.

It may be understood that specific descriptions of the transceiver unit and the processing unit shown in this embodiment of this application are merely an example. For specific functions or steps performed by the transceiver unit and the processing unit, refer to the foregoing method Embodiment 1 (as shown in FIG. 10). Details are not described herein again.

The foregoing describes the communication apparatus in embodiments of this application, and the following describes a possible product form of the communication apparatus. It should be understood that any form of product that has a function of the communication apparatus described in FIG. 19 falls within the protection scope of embodiments of this application. It should be further understood that the following description is merely an example, and a product form of the communication apparatus in embodiments of this application is not limited thereto.

In a possible implementation, in the communication apparatus shown in FIG. 19, the processing unit 20 may be one or more processors, and the transceiver unit 10 may be a transceiver. Alternatively, the transceiver unit 10 may be a sending unit and a receiving unit, the sending unit may be a transmitter, and the receiving unit may be a receiver. The sending unit and the receiving unit are integrated into one device, for example, a transceiver. In embodiments of this application, the processor and the transceiver may be coupled, or the like. A connection manner between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information, and inputs the information into the processor. Further, after the transceiver receives the foregoing information, other processing may need to be performed on the foregoing information before the information is input into the processor.

Refer to FIG. 20. FIG. 20 is a diagram of another structure of a communication apparatus according to an embodiment of this application. The communication apparatus may be an AP or a STA, or a chip in the AP or the STA. FIG. 20 shows only main components of the communication apparatus. In addition to a processor 1001, the communication apparatus may further include a transceiver 1002, a memory 1003, and an input/output apparatus (not shown in the figure).

The processor 1001 is mainly configured to process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal, and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user.

After the communication apparatus is powered on, the processor 1001 may read the software program in the memory 1003, explain and execute instructions of the software program, and process data of the software program. When data needs to be sent in a wireless manner, after performing baseband processing on the to-be-sent data, the processor 1001 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, methods, or functions performed by the communication apparatus in the foregoing method Embodiment 1, the processor 1001 may be configured to perform step S101 in FIG. 9, and/or configured to perform another process of the technology described in this specification; and the transceiver 1002 may be configured to perform step S102 in FIG. 9, and/or configured to perform another process of the technology described in this specification.

For example, when the communication apparatus is configured to perform the steps, methods, or functions performed by the communication apparatus in the foregoing method Embodiment 1, the processor 1001 may be configured to perform step S202 in FIG. 10, and/or configured to perform another process of the technology described in this specification; and the transceiver 1002 may be configured to perform step S201 in FIG. 10, and/or configured to perform another process of the technology described in this specification.

For example, when the communication apparatus is configured to perform the steps, methods, or functions performed by the communication apparatus in the foregoing method Embodiment 2, the processor 1001 may be configured to perform step S301 in FIG. 12, and/or configured to perform another process of the technology described in this specification; and the transceiver 1002 may be configured to perform step S302 in FIG. 12, and/or configured to perform another process of the technology described in this specification.

For example, when the communication apparatus is configured to perform the steps, methods, or functions performed by the communication apparatus in the foregoing method Embodiment 2, the processor 1001 may be configured to perform step S402 in FIG. 16, and/or configured to perform another process of the technology described in this specification; and the transceiver 1002 may be configured to perform step S401 in FIG. 16, and/or configured to perform another process of the technology described in this specification.

For example, when the communication apparatus is configured to perform the steps, methods, or functions performed by the communication apparatus in the foregoing method Embodiment 3, the processor 1001 may be configured to perform step S501 in FIG. 17, and/or configured to perform another process of the technology described in this specification; and the transceiver 1002 may be configured to perform step S502 in FIG. 17, and/or configured to perform another process of the technology described in this specification.

For example, when the communication apparatus is configured to perform the steps, methods, or functions performed by the communication apparatus in the foregoing method Embodiment 3, the processor 1001 may be configured to perform step S602 in FIG. 18, and/or configured to perform another process of the technology described in this specification; and the transceiver 1002 may be configured to perform step S601 in FIG. 18, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further include more components than those in FIG. 20, and the like. This is not limited in this embodiment of this application. The foregoing method performed by the processor and the transceiver is merely an example. For specific steps performed by the processor and the transceiver, refer to descriptions in the foregoing method embodiments.

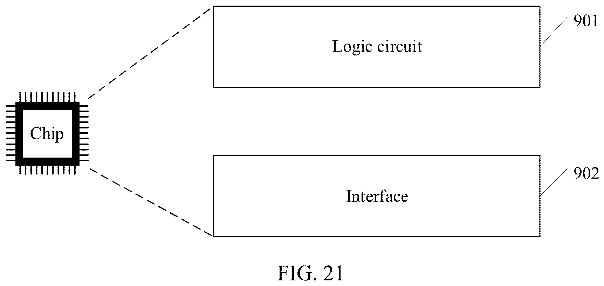

In another possible implementation, in the communication apparatus shown in FIG. 19, the processing unit 20 may be one or more logic circuits, and the transceiver unit 10 may be an input/output interface, which may alternatively be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. Refer to FIG. 21. FIG. 21 is a diagram of another structure of a communication apparatus according to an embodiment of this application. As shown in FIG. 21, the communication apparatus shown in FIG. 21 includes a logic circuit 901 and an interface 902. That is, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 21 shows an example in which the communication apparatus is a chip. The chip includes the logic circuit 901 and the interface 902.

In this embodiment of this application, the logic circuit may further be coupled to the interface. A specific connection manner of the logic circuit and the interface is not limited in this embodiment of this application.

For example, when the communication apparatus is configured to perform the method, the function, or the step performed by the communication apparatus at the transmit end in the foregoing embodiments, the logic circuit 901 is configured to generate a PPDU; and the interface 902 is configured to output the PPDU.

For example, when the communication apparatus is configured to perform the method, the function, or the step performed by the communication apparatus at the receive end in the foregoing embodiments, the interface 902 is configured to input a PPDU; and the logic circuit 901 is configured to process the PPDU.

It may be understood that for specific descriptions of a process of generating a PPDU, a process of processing a PPDU, and the like, refer to the foregoing method embodiments, and details are not described herein again.

It may be understood that the communication apparatus shown in embodiments of this application may implement the method provided in embodiments of this application in a form of hardware or in a form of software. This is not limited in embodiments of this application.

For a specific implementation of the embodiment shown in FIG. 21, refer to the foregoing embodiments. Details are not described herein again.

An embodiment of this application further provides a wireless communication system. The wireless communication system includes a communication apparatus. The communication apparatus may be configured to perform the method in any one of the foregoing embodiments.

In addition, this application further provides a computer program, and the computer program is used to implement operations and/or processing performed by the communication apparatus in the method provided in this application.

This application further provides a readable storage medium. The readable storage medium stores program code. When the program code is run on a communication apparatus, the communication apparatus is enabled to perform operations and/or processing performed by the communication apparatus in the method provided in this application.

This application further provides a computer program product. The computer program product includes computer code or a computer program. When the computer code or the computer program is run on a computer, operations and/or processing performed by the communication apparatus in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be connections in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the technical effects of the solutions provided in embodiments in this application.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A PPDU-based communication method, comprising:

   generating a physical layer protocol data unit PPDU, wherein a resource unit RU/multiple resource unit MRU corresponding to the PPDU comprises a plurality of RUs, and a frequency range corresponding to the RU/MRU is greater than 80 MHz, wherein
   the plurality of RUs correspond to a plurality of modulation and coding schemes MCSs, modulation schemes in the plurality of MCSs are different, and the plurality of MCSs comprise binary phase shift keying BPSK modulation; and during segment parsing, for an $i^{th}$ RU in the plurality of RUs, a quantity of bits output each time is determined based on a parameter $s_i$, and the parameter $s_i$ satisfies:

   $$s_i = N_{BPSCS,u,i},$$

   wherein
   $N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU; and
   sending the PPDU.

2. The method according to claim 1, wherein the RU/MRU corresponds to a plurality of frequency subblocks, and a first frequency subblock in the plurality of frequency subblocks comprises the $i^{th}$ RU and an $(i+1)^{th}$ RU in the plurality of RUs; and during segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

3. The method according to claim 2, wherein a modulation scheme corresponding to the $i^{th}$ RU is different from a modulation scheme corresponding to the $(i+1)^{th}$ RU.

4. The method according to claim 2 or 3, wherein the RU/MRU is a 996+484+242-tone MRU; in the plurality of RUs comprised in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies; the first frequency subblock in the plurality of frequency subblocks corresponding to the 996+484+242-tone MRU comprises the $1^{st}$ RU and the $2^{nd}$ RU; a second frequency subblock in the plurality of frequency subblocks corresponding to the 996+484+242-tone MRU comprises the $3^{rd}$ RU; and the $1^{st}$ RU corresponds to a parameter $s_1$, the $2^{nd}$ RU corresponds to a parameter $s_2$, and the $3^{rd}$ RU corresponds to a parameter $s_3$; and
   during segment parsing, the quantity of bits output for the first frequency subblock each time is equal to $s_1+2s_2$, and a quantity of bits output for the second frequency subblock each time is equal to $4s_3$.

5. The method according to any one of claims 1 to 4, wherein the plurality of RUs comprise a first RU, and an MCS corresponding to the first RU comprises BPSK modulation and dual carrier modulation DCM; and
   during segment parsing, a bit is output once every two rounds for the first RU.

6. A PPDU-based communication method, comprising:

   receiving a physical layer protocol data unit PPDU, wherein a resource unit RU/multiple resource unit MRU corresponding to the PPDU comprises a plurality of RUs, and a frequency range corresponding to the RU/MRU is greater than 80 MHz; and
   processing the PPDU, wherein
   the plurality of RUs correspond to a plurality of modulation and coding schemes MCSs, modulation schemes in the plurality of MCSs are different, and the plurality of MCSs comprise binary phase shift keying BPSK modulation; and during segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = N_{BPSCS,u,i} \, ,$$

   wherein
   $N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU.

7. The method according to claim 6, wherein the RU/MRU corresponds to a plurality of frequency subblocks, and a first frequency subblock in the plurality of frequency subblocks comprises the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

8. The method according to claim 7, wherein a modulation scheme corresponding to the $i^{th}$ RU is different from a modulation scheme corresponding to the $(i+1)^{th}$ RU.

9. The method according to claim 7 or 8, wherein the RU/MRU is a 996+484+242-tone MRU; in the plurality of RUs comprised in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies; the first frequency subblock in the plurality of frequency subblocks corresponding to the 996+484+242-tone MRU comprises the $1^{st}$ RU and the $2^{nd}$ RU; a second frequency subblock in the plurality of frequency subblocks corresponding to the 996+484+242-tone MRU comprises the $3^{rd}$ RU; and the $1^{st}$ RU corresponds to a parameter $s_1$, the $2^{nd}$ RU corresponds to a parameter $s_2$, and the $3^{rd}$ RU corresponds to a parameter $s_3$; and
   during segment combination, the quantity of bits obtained from the bits corresponding to the first frequency subblock each time is equal to $s_1+2s_2$, and a quantity of bits obtained from bits corresponding to the second frequency subblock each time is equal to $4s_3$.

10. The method according to any one of claims 6 to 9, wherein the plurality of RUs comprise a first RU, and an MCS corresponding to the first RU comprises BPSK modulation and dual carrier modulation DCM; and

during segment combination, a bit is obtained once every two rounds from bits corresponding to the first RU.

11. A PPDU-based communication method, comprising:

generating a physical layer protocol data unit PPDU, wherein a resource unit RU/multiple resource unit MRU corresponding to the PPDU comprises a plurality of RUs, and a frequency range corresponding to the RU/MRU is greater than 80 MHz, wherein
the plurality of RUs correspond to a plurality of modulation and coding schemes MCSs, and modulation schemes in the plurality of MCSs are different;
during segment parsing, for an $i^{th}$ RU in the plurality of RUs, a quantity of bits output each time is determined based on a parameter $s_i$, and the parameter $s_i$ satisfies:

$$s_i = \max(1, \frac{N_{BPSCS,u,i}}{2}),$$

wherein
$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU; and
when the MCS corresponding to the $i^{th}$ RU comprises binary phase shift keying BPSK modulation or dual carrier modulation DCM, a bit is output once every two rounds for the $i^{th}$ RU; or
when the MCS corresponding to the $i^{th}$ RU comprises BPSK modulation and DCM, a bit is output once every four rounds for the $i^{th}$ RU; and
sending the PPDU.

12. The method according to claim 11, wherein an MCS corresponding to each of other RUs than the $i^{th}$ RU in the plurality of RUs comprises neither BPSK modulation nor DCM, and a bit is output once every round for the other RUs during segment parsing.

13. The method according to claim 11 or 12, wherein the RU/MRU corresponds to a plurality of frequency subblocks, and a first frequency subblock in the plurality of frequency subblocks comprises the $i^{th}$ RU and an $(i+1)^{th}$ RU in the plurality of RUs; and during segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

14. The method according to claim 13, wherein a modulation scheme corresponding to the $i^{th}$ RU is different from a modulation scheme corresponding to the $(i+1)^{th}$ RU.

15. The method according to any one of claims 11 to 14, wherein the RU/MRU is a 996+484+242-tone MRU; in the plurality of RUs comprised in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies; the first frequency subblock in the plurality of frequency subblocks corresponding to the 996+484+242-tone MRU comprises the $1^{st}$ RU and the $2^{nd}$ RU; a second frequency subblock in the plurality of frequency subblocks corresponding to the 996+484+242-tone MRU comprises the $3^{rd}$ RU; and the $1^{st}$ RU corresponds to a parameter $s_1$, the $2^{nd}$ RU corresponds to a parameter $s_2$, and the $3^{rd}$ RU corresponds to a parameter $s_3$; and
during segment parsing, the quantity of bits output for the first frequency subblock each time is equal to $s_1+2s_2$, and a quantity of bits output for the second frequency subblock each time is equal to $4s_3$.

16. A PPDU-based communication method, comprising:

receiving a physical layer protocol data unit PPDU, wherein a resource unit RU/multiple resource unit MRU corresponding to the PPDU comprises a plurality of RUs, and a frequency range corresponding to the RU/MRU is greater than 80 MHz; and
processing the PPDU, wherein
the plurality of RUs correspond to a plurality of modulation and coding schemes MCSs, and modulation schemes in the plurality of MCSs are different;
during segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = \max\left(1, \frac{N_{BPSCS,u,i}}{2}\right),$$

wherein

$N_{BPSCS,u,i}$ represents a quantity of coded bits per data subcarrier for each spatial stream of an $i^{th}$ RU for a user u, and a value of $N_{BPSCS,u,i}$ is determined based on an MCS corresponding to the $i^{th}$ RU; and

when the MCS corresponding to the $i^{th}$ RU comprises binary phase shift keying BPSK modulation or dual carrier modulation DCM, a bit is obtained once every two rounds from the bits corresponding to the $i^{th}$ RU; or

when the MCS corresponding to the $i^{th}$ RU comprises BPSK modulation and DCM, a bit is obtained once every four rounds from the bits corresponding to the $i^{th}$ RU.

17. The method according to claim 16, wherein an MCS corresponding to each of other RUs than the $i^{th}$ RU in the plurality of RUs comprises neither BPSK modulation nor DCM, and a bit is obtained once every round from bits corresponding to the other RUs during segment parsing.

18. The method according to claim 16 or 17, wherein the RU/MRU corresponds to a plurality of frequency subblocks, and a first frequency subblock in the plurality of frequency subblocks comprises the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

19. The method according to claim 18, wherein a modulation scheme corresponding to the $i^{th}$ RU is different from a modulation scheme corresponding to the $(i+1)^{th}$ RU.

20. The method according to any one of claims 16 to 19, wherein the RU/MRU is a 996+484+242-tone MRU; in the plurality of RUs comprised in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies; the first frequency subblock in the plurality of frequency subblocks corresponding to the 996+484+242-tone MRU comprises the $1^{st}$ RU and the $2^{nd}$ RU; a second frequency subblock in the plurality of frequency subblocks corresponding to the 996+484+242-tone MRU comprises the $3^{rd}$ RU; and the $1^{st}$ RU corresponds to a parameter $s_1$, the $2^{nd}$ RU corresponds to a parameter $s_2$, and the $3^{rd}$ RU corresponds to a parameter $s_3$; and

during segment combination, the quantity of bits obtained from the bits corresponding to the first frequency subblock each time is equal to $s_1+2s_2$, and a quantity of bits obtained from bits corresponding to the second frequency subblock each time is equal to $4s_3$.

21. A PPDU-based communication method, comprising:

generating a physical layer protocol data unit PPDU, wherein a resource unit RU/multiple resource unit MRU corresponding to the PPDU comprises a plurality of RUs, and a frequency range corresponding to the RU/MRU is greater than 80 MHz, wherein

the plurality of RUs correspond to a plurality of modulation and coding schemes MCSs, modulation schemes in the plurality of MCSs are different, and the plurality of MCSs comprise binary phase shift keying BPSK modulation and/or dual carrier modulation DCM; and during segment parsing, for an $i^{th}$ RU in the plurality of RUs, a quantity of bits output each time is determined based on a parameter $s_i$, and the parameter $s_i$ satisfies:

$$s_i = 2N_{BPSCS,u,i} / (1+D),$$

wherein

$N_{BPSCS,u,i}$ represents a quantity of coded bits per data subcarrier for each spatial stream of an $i^{th}$ RU for a user u, a value of $N_{BPSCS,u,i}$ is determined based on an MCS corresponding to the $i^{th}$ RU, and D is 1 when the MCS corresponding to the $i^{th}$ RU comprises DCM, or D is 0 when the MCS corresponding to the $i^{th}$ RU does not comprise DCM; and

sending the PPDU.

22. The method according to claim 21, wherein the RU/MRU corresponds to a plurality of frequency subblocks, and a first frequency subblock in the plurality of frequency subblocks comprises the $i^{th}$ RU and an $(i+1)^{th}$ RU in the plurality of RUs; and during segment parsing, a quantity of bits output for the first frequency subblock each time is determined based on the parameter $s_i$ corresponding to the $i^{th}$ RU and a parameter $s_{(i+1)}$ corresponding to the $(i+1)^{th}$ RU.

23. The method according to claim 22, wherein a modulation scheme corresponding to the $i^{th}$ RU is different from a modulation scheme corresponding to the $(i+1)^{th}$ RU.

24. The method according to any one of claims 21 to 23, wherein the RU/MRU is a 996+484+242-tone MRU; in the plurality of RUs comprised in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies; the first frequency subblock in the plurality of frequency subblocks corresponding to the 996+484+242-tone MRU comprises the $1^{st}$ RU and the $2^{nd}$ RU; a second frequency subblock in the plurality of frequency subblocks corresponding to the 996+484+242-tone MRU comprises the $3^{rd}$ RU; and the $1^{st}$ RU corresponds to a parameter $s_1$, the $2^{nd}$ RU corresponds to a parameter $s_2$, and the $3^{rd}$ RU corresponds to a parameter $s_3$; and
during segment parsing, the quantity of bits output for the first frequency subblock each time is equal to $s_1+2s_2$, and a quantity of bits output for the second frequency subblock each time is equal to $4s_3$.

25. A PPDU-based communication method, comprising:

receiving a physical layer protocol data unit PPDU, wherein a resource unit RU/multiple resource unit MRU corresponding to the PPDU comprises a plurality of RUs, and a frequency range corresponding to the RU/MRU is greater than 80 MHz; and
processing the PPDU, wherein
the plurality of RUs correspond to a plurality of modulation and coding schemes MCSs, modulation schemes in the plurality of MCSs are different, and the plurality of MCSs comprise binary phase shift keying BPSK modulation and/or dual carrier modulation DCM; and during segment combination, for an $i^{th}$ RU in the plurality of RUs, a quantity of bits obtained from bits corresponding to the $i^{th}$ RU each time is determined based on a parameter $s_i$, and the parameter $s_i$ satisfies:

$$s_i = 2N_{BPSCS,u,i}/(1+D),$$

wherein
$N_{BPSCS,u,i}$ represents a quantity of coded bits per data subcarrier for each spatial stream of an $i^{th}$ RU for a user u, a value of $N_{BPSCS,u,i}$ is determined based on an MCS corresponding to the $i^{th}$ RU, and D is 1 when the MCS corresponding to the $i^{th}$ RU comprises DCM, or D is 0 when the MCS corresponding to the $i^{th}$ RU does not comprise DCM.

26. The method according to claim 25, wherein the RU/MRU corresponds to a plurality of frequency subblocks, and a first frequency subblock in the plurality of frequency subblocks comprises the $i^{th}$ RU and an $(i+1)^{th}$ RU in the plurality of RUs; and during segment combination, a quantity of bits obtained from bits corresponding to the first frequency subblock each time is determined based on the parameter $s_i$ corresponding to the $i^{th}$ RU and a parameter $s_{(i+1)}$ corresponding to the $(i+1)^{th}$ RU.

27. The method according to claim 26, wherein a modulation scheme corresponding to the $i^{th}$ RU is different from a modulation scheme corresponding to the $(i+1)^{th}$ RU.

28. The method according to any one of claims 25 to 27, wherein the RU/MRU is a 996+484+242-tone MRU; in the plurality of RUs comprised in the 996+484+242-tone MRU, a $1^{st}$ RU is a 242-tone RU, a $2^{nd}$ RU is a 484-tone RU, and a $3^{rd}$ RU is a 996-tone RU in ascending order of frequencies; the first frequency subblock in the plurality of frequency subblocks corresponding to the 996+484+242-tone MRU comprises the $1^{st}$ RU and the $2^{nd}$ RU; a second frequency subblock in the plurality of frequency subblocks corresponding to the 996+484+242-tone MRU comprises the $3^{rd}$ RU; and the $1^{st}$ RU corresponds to a parameter $s_1$, the $2^{nd}$ RU corresponds to a parameter $s_2$, and the $3^{rd}$ RU corresponds to a parameter $s_3$; and
during segment combination, the quantity of bits obtained from the bits corresponding to the first frequency subblock each time is equal to $s_1+2s_2$, and a quantity of bits obtained from bits corresponding to the second frequency subblock each time is equal to $4s_3$.

29. A PPDU-based communication method, comprising:

generating a physical layer protocol data unit PPDU, wherein the PPDU corresponds to a plurality of spatial streams, and modulation schemes corresponding to at least two of the plurality of spatial streams are different, wherein

a modulation and coding scheme MCS corresponding to at least one of the plurality of spatial streams comprises binary phase shift keying BPSK modulation; and

during stream parsing, for an $i^{th}$ spatial stream in the plurality of spatial streams, a quantity of bits output each time is equal to a parameter $s_i$, and the parameter $s_i$ satisfies:

$$s_i = N_{BPSCS,u,i} \, ,$$

wherein

$N_{BPSCS,u,i}$ represents a quantity of coded bits per data subcarrier for an $i^{th}$ spatial stream of a user u, and a value of $N_{BPSCS,u,i}$ is determined based on an MCS corresponding to the $i^{th}$ spatial stream; and

sending the PPDU.

30. The method according to claim 29, wherein a process of the stream parsing comprises: dividing a string of data bit streams output by an encoder into a plurality of spatial streams.

31. The method according to claim 29 or 30, wherein the plurality of spatial streams comprise a first spatial stream, and an MCS corresponding to the first spatial stream comprises BPSK modulation and dual carrier modulation DCM; and during stream parsing, a bit is output once every two rounds for the first spatial stream.

32. A PPDU-based communication method, comprising:

receiving a physical layer protocol data unit PPDU, wherein the PPDU corresponds to a plurality of spatial streams, and modulation schemes corresponding to at least two of the plurality of spatial streams are different; and

processing the PPDU, wherein

modulation and coding schemes MCSs corresponding to the plurality of spatial streams comprise binary phase shift keying BPSK modulation; and

during stream combination, for an $i^{th}$ spatial stream in the plurality of spatial streams, a quantity of bits obtained from the $i^{th}$ spatial stream each time is equal to a parameter $s_i$, and the parameter $s_i$ satisfies:

$$s_i = N_{BPSCS,u,i} \, ,$$

wherein

$N_{BPSCS,u,i}$ represents a quantity of coded bits per data subcarrier for an $i^{th}$ spatial stream of a user u, and a value of $N_{BPSCS,u,i}$ is determined based on an MCS corresponding to the $i^{th}$ spatial stream.

33. The method according to claim 32, wherein a process of the stream combination comprises: combining the plurality of spatial streams into a string of data bit streams.

34. The method according to claim 32 or 33, wherein the plurality of spatial streams comprise a first spatial stream, and an MCS corresponding to the first spatial stream comprises BPSK modulation and dual carrier modulation DCM; and during stream combination, a bit is obtained once every two rounds from the first spatial stream.

35. A PPDU-based communication method, comprising:

generating a physical layer protocol data unit PPDU, wherein the PPDU corresponds to a plurality of spatial streams, and modulation schemes comprised in at least two modulation and coding schemes MCSs in a plurality of MCSs corresponding to the plurality of spatial streams are different, wherein

during stream parsing, for an $i^{th}$ spatial stream in the plurality of spatial streams, a quantity of bits output each time is equal to a parameter $s_i$, and the parameter $s_i$ satisfies:

$$s_i = \max(1, \frac{N_{BPSCS,u,i}}{2}) \, ,$$

wherein

$N_{BPSCS,u,i}$ represents a quantity of coded bits per data subcarrier for an $i^{th}$ spatial stream of a user u, and a value of $N_{BPSCS,u,i}$ is determined based on an MCS corresponding to the $i^{th}$ spatial stream; and

when the MCS corresponding to the $i^{th}$ spatial stream comprises binary phase shift keying BPSK modulation or dual carrier modulation DCM, a bit is output once every two rounds for the $i^{th}$ spatial stream; or

when the MCS corresponding to the $i^{th}$ spatial stream comprises BPSK modulation and DCM, a bit is output once every four rounds for the $i^{th}$ spatial stream; and

sending the PPDU.

36. The method according to claim 35, wherein an MCS corresponding to each of spatial streams other than the $i^{th}$ spatial stream in the plurality of spatial streams comprises neither BPSK modulation nor DCM, and a bit is output once every round for the other spatial streams during stream parsing.

37. A PPDU-based communication method, comprising:

receiving a physical layer protocol data unit PPDU, wherein the PPDU corresponds to a plurality of spatial streams, and modulation schemes comprised in at least two modulation and coding schemes MCSs in a plurality of MCSs corresponding to the plurality of spatial streams are different; and

processing the PPDU, wherein

during stream combination, for an $i^{th}$ spatial stream in the plurality of spatial streams, a quantity of bits obtained from the $i^{th}$ spatial stream each time is equal to a parameter $s_i$, and the parameter $s_i$ satisfies:

$$s_i = \max(1, \frac{N_{BPSCS,u,i}}{2}),$$

wherein

$N_{BPSCS,u,i}$ represents a quantity of coded bits per data subcarrier for an $i^{th}$ spatial stream of a user u, and a value of $N_{BPSCS,u,i}$ is determined based on an MCS corresponding to the $i^{th}$ spatial stream; and

when the MCS corresponding to the $i^{th}$ spatial stream comprises binary phase shift keying BPSK modulation or dual carrier modulation DCM, a bit is obtained once every two rounds from the $i^{th}$ spatial stream; or

when the MCS corresponding to the $i^{th}$ spatial stream comprises BPSK modulation and DCM, a bit is obtained once every four rounds from the $i^{th}$ spatial stream.

38. The method according to claim 37, wherein an MCS corresponding to each of spatial streams other than the $i^{th}$ spatial stream in the plurality of spatial streams comprises neither BPSK modulation nor DCM, and a bit is obtained once every round from the other spatial streams during stream combination.

39. A PPDU-based communication method, comprising:

generating a physical layer protocol data unit PPDU, wherein the PPDU corresponds to a plurality of spatial streams, and modulation schemes comprised in at least two modulation and coding schemes MCSs in a plurality of MCSs corresponding to the plurality of spatial streams are different, wherein

MCSs corresponding to the plurality of spatial streams comprise binary phase shift keying BPSK modulation and/or dual carrier modulation DCM; and

during stream parsing, for an $i^{th}$ spatial stream in the plurality of spatial streams, a quantity of bits output each time is equal to a parameter $s_i$, and the parameter $s_i$ satisfies:

$$s_i = 2N_{BPSCS,u,i}/(1+D),$$

wherein

$N_{BPSCS,u,i}$ represents a quantity of coded bits per data subcarrier for an $i^{th}$ spatial stream of a user u, a value of $N_{BPSCS,u,i}$ is determined based on an MCS corresponding to the $i^{th}$ spatial stream, and D is 1 when the MCS corresponding to the $i^{th}$ spatial stream comprises DCM, or D is 0 when the MCS corresponding to the $i^{th}$ spatial stream does not comprise DCM; and

sending the PPDU.

40. A PPDU-based communication method, comprising:

receiving a physical layer protocol data unit PPDU, wherein the PPDU corresponds to a plurality of spatial streams, and modulation schemes comprised in at least two modulation and coding schemes MCSs in a plurality of MCSs corresponding to the plurality of spatial streams are different; and

processing the PPDU, wherein

MCSs corresponding to the plurality of spatial streams comprise binary phase shift keying BPSK modulation and/or dual carrier modulation DCM; and

during stream combination, for an $i^{th}$ spatial stream in the plurality of spatial streams, a quantity of bits obtained from the $i^{th}$ spatial stream each time is equal to a parameter $s_i$, and the parameter $s_i$ satisfies:

$$s_i = 2N_{BPSCS,u,i}/(1+D),$$

wherein

$N_{BPSCS,u,i}$ represents a quantity of coded bits per data subcarrier for an $i^{th}$ spatial stream of a user u, a value of $N_{BPSCS,u,i}$ is determined based on an MCS corresponding to the $i^{th}$ spatial stream, and D is 1 when the MCS corresponding to the $i^{th}$ spatial stream comprises DCM, or D is 0 when the MCS corresponding to the $i^{th}$ spatial stream does not comprise DCM.

41. A communication apparatus, comprising a unit or module configured to perform the method according to any one of claims 1 to 40.

42. A communication apparatus, comprising:

one or more processors, wherein the one or more processors are coupled to one or more memories; and

the one or more memories are configured to store a computer program, and the one or more processors are configured to execute the computer program stored in the one or more memories, to enable the communication apparatus to perform the method according to any one of claims 1 to 40.

43. A communication apparatus, comprising a logic circuit and an interface, wherein the logic circuit is coupled to the interface; and

the interface is configured to input and/or output code instructions, and the logic circuit is configured to execute the code instructions, to enable the method according to any one of claims 1 to 40 to be performed.

44. A wireless communication system, comprising a communication apparatus configured to perform the method according to any one of claims 1 to 5, 11 to 15, 21 to 24, 29 to 31, 35 and 36, and 39, and a communication apparatus configured to perform the method according to any one of claims 6 to 10, 16 to 20, 25 to 28, 32 to 34, 37 and 38, and 40.

45. A readable storage medium, wherein the readable storage medium is configured to store a computer program, and when the computer program is executed by a processor, a communication apparatus comprising the processor is enabled to perform the method according to any one of claims 1 to 40.

FIG. 1

FIG. 2a

FIG. 2b

Guard subcarrier

Null subcarrier

7 DC

26-tone RU

26 26 26 26 13 13 26 26 26 26

52-tone RU

52 52 52 52

106-tone RU

106 106

242-tone RU

242+3 DC

Tone: carrier

FIG. 3

FIG. 4

EP 4 734 603 A1

FIG. 5

FIG. 6

EP 4 734 603 A1

RU size≤996
RU size≤996

0 1 2 3 4 5 6 7 8 9 10 11 12 13 14 15 16 17 18 19 20 ... → Input Input | Segment parser (bypassed/ bypassed) | Output Output → 0 1 2 3 4 5 6 7 8 9 10 11 12 13 14 15 16 17 18 19 20 ...

FIG. 7a

EP 4 734 603 A1

RU size>996
2*996 for example
16QAM (s=2)

(0 1) (4 5) (8 9) (12 13) (16 17) (20 21) ...

0 1 2 3 4 5 6 7 8 9 10 11 12 13 14 15 16 17 18 19 20 ... → Segment parser

Input
Input

Output
Output

(2 3) (6 7) (10 11) (14 15) (18 19) ...

FIG. 7b

0 1 2 3 4 5 6 7 8 9 10 11 12 13 14 15 16 17 18 19 20 ...

Input
Input

RU size>996
484+996 for example
16QAM (s=2)

Segment parser

Output
Output

(0 1) (6 7) ...

(2 3 4 5) (8 9 10 11) ...

FIG. 8

A communication apparatus generates a PPDU, where an RU/MRU corresponding to the PPDU includes a plurality of RUs, the plurality of RUs correspond to different modulation schemes, and a frequency range corresponding to the RU/MRU is greater than 80 MHz

S101

The communication apparatus sends the PPDU

S102

FIG. 9

A communication apparatus receives a PPDU, where an RU/MRU corresponding to the PPDU includes a plurality of RUs, the plurality of RUs correspond to different modulation schemes, and a frequency range corresponding to the RU/MRU is greater than 80 MHz

S201

The communication apparatus processes the PPDU

S202

FIG. 10

EP 4 734 603 A1

2*996-tone RU, one
996-tone RU uses
16QAM (s=2), and
another 996-tone RU
uses QPSK (s=1)

(0) (3) (6) (9) (12) (15) (18) ...

0 1 2 3 4 5 6 7 8 9 10 11 12 13 14 15 16 17 18 19 20 ...

Output
Output

Combine

Input
Input

(1 2) (4 5) (7 8) (10 11) (13 14) (16 17) (19 20) ...

FIG. 11

A communication apparatus generates a PPDU, where an RU/MRU corresponding to the PPDU includes a plurality of RUs, the plurality of RUs correspond to different modulation schemes, MCSs corresponding to the plurality of RUs include BPSK modulation and/or DCM, and a frequency range corresponding to the RU/MRU is greater than 80 MHz

/ S301

The communication apparatus sends the PPDU

/ S302

FIG. 12

484 (BPSK)+996 (BPSK)

0 1 2 3 4 5 6 7 8 9 10 11 12 13 14 15 16 17 18 19 20 ...

Input
Input

Segment parser

Output
Output

(0) (3) ...

(1 2) (4 5) ...

FIG. 13a

484 (BPSK)+996 (QPSK)

0 1 2 3 4 5 6 7 8 9 10 11 12 13 14 15 16 17 18 19 20 ...

Input
Input

Segment parser

Output
Output

(0) (3) ...

(1 2) (4 5) ...

FIG. 13b

484 (BPSK)+996 (BPSK)

0 1 2 3 4 5 6 7 8 9 10 11 12 13 14 15 16 17 18 19 20 ...

Input
Input

Segment parser

Output
Output

(0) (5) ...

(1 2 3 4) (6 7 8 9) ...

FIG. 14

484
(BPSK)+996
(BPSK)

**(0) (5) ...**

**0 1 2 3 4 5 6 7 8 9 10 11 12 13 14 15 16 17 18 19 20 ...** → Segment parser

Input

Output
Output

Input

**(1 2) (3 4) (6 7) (8 9) ...**

FIG. 15

A communication apparatus receives a PPDU, where an RU/MRU corresponding to the PPDU includes a plurality of RUs, the plurality of RUs correspond to different modulation schemes, MCSs corresponding to the plurality of RUs include BPSK modulation and/or DCM, and a frequency range corresponding to the RU/MRU is greater than 80 MHz

S401

The communication apparatus processes the PPDU

S402

FIG. 16

A communication apparatus generates a PPDU, where the PPDU corresponds to a plurality of spatial streams, and the plurality of spatial streams correspond to different modulation schemes

S501

The communication apparatus sends the PPDU

S502

FIG. 17

A communication apparatus receives a PPDU, where the PPDU corresponds to a plurality of spatial streams, and the plurality of spatial streams correspond to different modulation schemes
/ S601

↓

The communication apparatus processes the PPDU
/ S602

FIG. 18

Transceiver unit / 10

|

Processing unit / 20

Communication apparatus

FIG. 19

Communication apparatus

Processor 1001

Instruction

Memory 1003

Instruction

Transceiver 1002

Control circuit

Antenna

FIG. 20

Chip

Logic circuit — 901

Interface — 902

FIG. 21

## INTERNATIONAL SEARCH REPORT

| International application No. |
| --- |
| **PCT/CN2024/106031** |

| A. | CLASSIFICATION OF SUBJECT MATTER |
| --- | --- |

H04W 28/06(2009.01)i

According to International Patent Classification (IPC) or to both national classification and IPC

| B. | FIELDS SEARCHED |
| --- | --- |

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 物理层协议数据单元, 资源单元, 频域子块, 频率子块, 调制与编码策略, 空间流, 子载波, 比特数, 二进制相移键控, 双载波调制, PPDU, RU, MRU, frequency domain, sub-block, MCS, spatial stream, subcarrier, number, bit, BPSK, DCM

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114365435 A (LG ELECTRONICS, INC.) 15 April 2022 (2022-04-15) description, paragraphs [0348]-[0637], and figures 1-31 | 1-45 |
| X | CN 115152167 A (LG ELECTRONICS, INC.) 04 October 2022 (2022-10-04) description, paragraphs [0330]-[0592], and figures 1-27 | 1-45 |
| A | CN 113517974 A (HUAWEI TECHNOLOGIES CO., LTD.) 19 October 2021 (2021-10-19) entire document | 1-45 |
| A | EP 3869724 A1 (INTEL CORP.) 25 August 2021 (2021-08-25) entire document | 1-45 |
| A | WO 2023130277 A1 (GUANGDONG OPPO MOBILE TELECOMMUNICATIONS CORP., LTD.) 13 July 2023 (2023-07-13) entire document | 1-45 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 October 2024** | **16 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/106031**

| Patent document cited in search report | | | Publication date (day/month/year) | Patent family member(s) | | | Publication date (day/month/year) |
|---|---|---|---|---|---|---|---|
| CN | 114365435 | A | 15 April 2022 | KR | 20220024788 | A | 03 March 2022 |
| | | | | US | 2023246738 | A1 | 03 August 2023 |
| | | | | EP | 4016904 | A1 | 22 June 2022 |
| | | | | US | 2022278771 | A1 | 01 September 2022 |
| | | | | EP | 4398531 | A2 | 10 July 2024 |
| | | | | WO | 2021029551 | A1 | 18 February 2021 |
| | | | | JP | 2022544933 | A | 24 October 2022 |
| | | | | US | 2024313888 | A1 | 19 September 2024 |
| CN | 115152167 | A | 04 October 2022 | US | 2023327805 | A1 | 12 October 2023 |
| | | | | US | 2023388051 | A1 | 30 November 2023 |
| | | | | CA | 3169041 | A1 | 05 August 2021 |
| | | | | AU | 2021214471 | A1 | 22 September 2022 |
| | | | | US | 2023129436 | A1 | 27 April 2023 |
| | | | | WO | 2021153940 | A1 | 05 August 2021 |
| | | | | KR | 20220113462 | A | 12 August 2022 |
| | | | | EP | 4089938 | A1 | 16 November 2022 |
| | | | | JP | 2023511700 | A | 22 March 2023 |
| | | | | BR | 112022014765 | A2 | 11 October 2022 |
| | | | | CN | 118509119 | A | 16 August 2024 |
| CN | 113517974 | A | 19 October 2021 | WO | 2021204209 | A1 | 14 October 2021 |
| | | | | EP | 4117220 | A1 | 11 January 2023 |
| | | | | CN | 116488784 | A | 25 July 2023 |
| EP | 3869724 | A1 | 25 August 2021 | None | | | |
| WO | 2023130277 | A1 | 13 July 2023 | None | | | |

Form PCT/ISA/210 (patent family annex) (July 2022)

**REFERENCES CITED IN THE DESCRIPTION**

**Patent documents cited in the description**

- CN 202310891346